(19) Europäisches Patentamt
European Patent Office
Office européen des brevets

(11) **EP 3 994 288 B1**

(12) **EUROPÄISCHE PATENTSCHRIFT**

(45) Veröffentlichungstag und Bekanntmachung des Hinweises auf die Patenterteilung:
**04.09.2024 Patentblatt 2024/36**

(21) Anmeldenummer: **20739847.0**

(22) Anmeldetag: **01.07.2020**

(51) Internationale Patentklassifikation (IPC):
**C22C 19/05** *(2006.01)* **C22C 1/04** *(2023.01)*
**C22F 1/10** *(2006.01)*

(52) Gemeinsame Patentklassifikation (CPC):
(C-Sets verfügbar)
**C22C 19/05; B22F 1/05; B22F 1/065; B22F 3/15; B22F 9/082; B33Y 70/00; C22C 1/0433; C22C 19/056; C22C 19/057; C22F 1/10;** B22F 5/04; B22F 10/14; B22F 10/25; B22F 10/28; B22F 2009/0824; (Forts.)

(86) Internationale Anmeldenummer:
**PCT/DE2020/100577**

(87) Internationale Veröffentlichungsnummer:
**WO 2021/004581 (14.01.2021 Gazette 2021/02)**

(54) **VERFAHREN ZUR HERSTELLUNG EINES PULVERS AUS EINER NICKEL-KOBALTLEGIERUNG**

METHOD FOR PRODUCING A NICKEL-COBALT ALLOY POWDER

PROCÉDÉ DE FABRICATION D'UNE POUDRE À BASE D'UN ALLIAGE NICKEL-COBALT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.07.2019 DE 102019118224**
**26.06.2020 DE 102020116868**

(43) Veröffentlichungstag der Anmeldung:
**11.05.2022 Patentblatt 2022/19**

(73) Patentinhaber: **VDM Metals International GmbH**
**58791 Werdohl (DE)**

(72) Erfinder:
• **GEHRMANN, Bodo**
**58840 Plettenberg (DE)**
• **HENTRICH, Tatiana**
**58791 Werdohl (DE)**
• **SCHMIDT, Christina**
**44879 Bochum (DE)**
• **BRUNNERT, Katrin**
**58642 Iserlohn (DE)**

(56) Entgegenhaltungen:
**EP-A1- 2 314 725 DE-A1- 102015 016 729**

(52) Gemeinsame Patentklassifikation (CPC): (Forts.)
B22F 2009/0844; B22F 2998/10; B22F 2999/00;
Y02P 10/25

C-Sets
B22F 2998/10, B22F 9/082, B22F 3/15;
B22F 2998/10, B22F 9/082, B22F 10/14,
B22F 10/25, B22F 10/28;
B22F 2999/00, B22F 1/065, B22F 9/082,
C22C 1/0433

**Beschreibung**

Die Erfindung betrifft ein Verfahren zur Herstellung eines Pulvers aus einer Nickel-Kobaltlegierung und deren Modifizierung für gesteigerte Hochtemperatureigenschaften wie Festigkeit, Oxidationsbeständigkeit bei höheren Anwendungstemperaturen bei gleichzeitiger guter Prozessierbarkeit.

Nickel- und Nickel-Kobaltlegierungen alloy 718, Waspaloy, Udimet 720, alloy 939, alloy 738LC werden auf Grund ihrer herausragenden mechanischen Festigkeit (dank Mischkristallverfestigung und Ausscheidungshärtung) in Kombination mit Oxidations- und Korrosionsbeständigkeit durch Cr-Oxidschicht bei höheren Temperaturen bis zu ca. 900°C (werkstoffabhängig) weitläufig eingesetzt. Diese Legierungen wurden für die Verarbeitung mittels Gießen und Schmieden oder nur Gießen und den dort vorliegenden Erstarrungsbedingungen entwickelt und stetig optimiert.

Der weit überwiegende Ausscheidungshärtungseffekt in Nickel- und Nickel-Kobaltlegierungen basiert auf der y'-Phase (Gamma'-Phase) mit Nennstöchiometrie $Ni_3Al$ und der Gitterstruktur $L1_2$, die durch geringe Fehlpassung keine Vorzugsorte braucht und homogen in den Körnern ausscheidet. Durch vielfältige Substitutionsmöglichkeiten können Ni- und Al- Atome in den Werkstoffen mit entsprechenden Legierungsgehalten durch Co, Ti, Ta und Nb ersetzt werden. Mit der Erhöhung der Gehalte von Al, Ti, Ta, Nb etc. steigt die Solvustemperatur und der Volumenanteil der y'-Phase, außerdem erhöht sich normalerweise die Ausscheidungskinetik, sodass in den hoch y'(Gamma')-haltigen Legierungen wie bei alloy 939 oder 738LC auch bei schneller Abkühlung die Ausscheidung der y'-Phase unvermeidlich ist.

Bei generativen Fertigungsverfahren spielen nicht nur die chemische Zusammensetzung der Legierung sondern auch die Ausscheidungskinetik der y' Phase eine große Rolle, da während der Verarbeitung die Gefahr der Rissbildung auf Grund von Seigerungseffekten und durch zusätzliche Spannungen durch Ausscheidung der y'-Phase besteht. Dies erschwert generell das Schweißen von y'-haltigen Nickel- und Nickel-Kobaltlegierungen.

Die stark seigernden Elemente wie B, Zr, Si und Mn reduzieren die Schweißbarkeit von Nickel- und Nickel-Kobaltlegierungen. B und Zr, werden für die Verbesserung der Hochtemperatur-Eigenschaften verwendet. Si und Mn werden für das Desoxidieren der Schmelze benutzt. Außerdem wird das Verarbeitungsvermögen bei generativen Fertigungsverfahren durch die minor-Elemente wie S, O, N, P und Pb verschlechtert.

Die DE 10 2015 016 729 A1 offenbart ein Verfahren zur Herstellung von metallischen Halbzeugen aus einer Legierung mit mehr als 50 % Nickel, beinhaltend folgende Verfahrensschritte:

- eine Elektrode wird durch VIM erzeugt,
- die Elektrode wird in einem Ofen zur Reduzierung von Spannungen und Überalterung einer Wärmebehandlung im Temperaturbereich zwischen 400 und 1250°C für einen Zeitraum von 10 bis 336 Stunden unterzogen,
- die Elektrode wird an Luft oder im Ofen abmessungsabhängig, insbesondere durchmesserabhängig, auf eine Temperatur zwischen Raumtemperatur und kleiner 1250°C, insbesondere kleiner 900°C, abgekühlt,
- die abgekühlte Elektrode wird anschließend durch VAR mit einer Umschmelzrate von 3,0 bis 10 kg/Minute zu einem VAR-Block umgeschmolzen,
- der VAR-Block wird in einem Ofen im Temperaturbereich zwischen 400 und 1250°C für einen Zeitraum von 10 bis 336 Stunden wärmebehandelt,
- der VAR-Block wird an Luft oder im Ofen abmessungsabhängig, insbesondere durchmesserabhängig, auf eine Temperatur zwischen Raumtemperatur und kleiner 1250°C, insbesondere kleiner 900°C, abgekühlt,
- der VAR-Block wird erneut mit einer Umschmelzrate von 3,0 bis 10 kg/Minute umgeschmolzen,
- der umgeschmolzene VAR-Block wird einer Wärmebehandlung im Temperaturbereich zwischen 400 und 1250°C für einen Zeitraum von 10 bis 336 Stunden unterzogen,
- der VAR-Block wird anschließend durch Warm- und/oder Kaltformgebung an die gewünschte Produktform und Abmessung gebracht.

Die EP 2949768 A1 offenbart die angepasste Zusammensetzung der Legierung Alloy 738LC mit einem y' Volumenanteil zwischen 60 und 70% für die Herstellung von beinah rissfreien Bauteilen durch Reduzierung von stark seigernden Elementen. Dafür werden die folgenden Formeln benutzt: C/B=10-32, C/Hf> 2, C/Zr>8, C/Si>1.

Die CA 2704874 A1 offenbart eine Nickel-Basis Legierung und hieraus geformte Komponenten mit dem Beispiel "Komponente pulvermetallurgisch hergestellt für die Anwendung in der Gasturbine", die durch verbesserte Hochtemperatur-Lebensdauer inkl. Kriech- und Kriechrisswachstumsverhalten gekennzeichnet ist, bestehend aus (in Gew.%) Co 16,0-30,0%, Cr 11,5-15,0%, Ta 4,0-6,0%, Al 2,0-4,0%, Ti 1,5-6,0%, W bis zu 5,0%, Mo 1,0-7,0%, Nb bis zu 3,5%, Hf bis zu 1,0%, C 0,02-0,20%, B 0,01-0,05%, Zr 0,02-0,10% Ni Rest, dabei Ti:Al Verhältnis zwischen 0,5 und 2,0.

Die CA 1253363 offenbart eine Nickel-Basis Legierung mit dem $\gamma'$ Volumenanteil zwischen 42% und 48%, bestehend aus (in Gew.%) Co 10,0-14,0%, Cr 14,0-18,0%, Ta bis zu 3,0%, Al 2,0-3,0%, Ti 2,0-3,0%, W 3,0-5,0%, Mo 3,0-5,0%, Nb 2,0-3,0%, Hf bis zu 50 ppm, C bis zu 0,1%, B 0,01-0,05%, Zr 0,02-0,08%, S bis zu 50 ppm, Mg bis zu 50 ppm, Ni Rest.

Die US 2008/0166258 A1 offenbart eine Nickel-Basis Legierung für die Herstellung von hitzebeständigen Federn aus Draht, bestehend aus (in Gew.%) Co 5,0-18,0%, Cr 13,0-25,0%, Al 0,1-3,0%, Ti 0,5 -4,0%, W 0,15-2,5%, Mo 1,5-7,0%, Nb 0,3-6,0%, Cu 0,03-2,0%, Fe bis zu 5,0%, C bis zu 0,1%, P bis zu 0,01%, B 0,001-0,02%, Zr 0,01-0,3%, S bis zu 0,01%, N bis zu 0,1%, Mn bis zu 1,5%, Si bis zu 1,0%, Mg bis zu 0,05%, Ca bis zu 0,05%, O bis zu 0,1%, H bis zu 0,05% Ni Rest.

Die CA 2874304 C offenbart eine Nickel-Basis Legierung mit verbesserter Zeitstandfestigkeit und Beständigkeit gegen Wiedererwärmungsrisse, bestehend aus (in Gew.%) Co 5,0-25,0%, Cr 15,0-28,0%, Ta bis zu 8,0%, Al 0,2-2,0%, Ti 0,2-3,0%, W bis zu 15,0%, Mo 3,0-15,0%, Nb bis zu 3,0%, Fe bis zu 15,0%, Re bis zu 8,0%, C 0,001-0,15%, Hf bis zu 1,0%, B 0,0005-0,01%, Zr bis zu 2,0%, Y bis zu 0,5%, La bis zu 0,5%, Ce bis zu 0,5%, Nd bis zu 0,5%, S bis zu 0,01%, N bis zu 0,03%, Mn 0,01-3,0%, Si 0,01-2,0%, Mg bis zu 0,05%, Ca bis zu 0,05%, Ni Rest.

Die GB 813948 A offenbart eine Nickel-Basis Sinter-Legierung, bestehend aus (in Gew.%) Co bis zu 55,0%, Cr 4,0-30,0%, Al 0,3-8,0%, Ti 0,5-8,0%, W bis zu 5,0%, Mo bis zu 20,0%, Nb bis zu 5,0%, Fe bis zu 40,0%, C 0,01-0,5%, B 0,01-0,8%, Zr bis zu 0,5%, Ni Rest.

Die DE 2108978 A und DE 2108973 A offenbaren ein Verfahren zur Herstellung von Superlegierungen indem metallische Schmelze durch Argon-Strahl zerstäubt wird, die gebildeten Tröpfchen werden durch am Boden befindenden großen Wasservorrat rasch abgeschreckt. Nach dem Zerstäubungsvorgang wird das Pulver mehrfach mit Aceton gewaschen, dann getrocknet und auf einem 80-Maschen-Sieb fraktioniert, danach bei hohen Temperaturen hammergeschmiedet.

Die WO 2014/124626 A1 offenbart eine NiCo-Legierung für den Einsatz in Flugzeugtriebwerken. Die Legierung weist folgende Zusammensetzung auf (in Gew.%): Ni 30,0 - 65,0%, Fe bis zu 10,0%, Co 12,0-35,0%, Cr 13,0-23,0%, Mo 1,0-6,0%, W bis zu 4,0%, Nb + Ta 4,0-6,0%, Al bis zu 3,0%, Mn bis zu 1,0%, Ti 2,0%, Si bis zu 1,0%, C bis zu 0,1%, P bis zu 0,03%, Mg bis zu 0,01%, bis zu 0,02%, Zr bis zu 0,1%. Diese auch als alloy 780 bezeichnete Legierung weist eine hervorragende Hochtemperatur-Festigkeit bis zu 750°C, Oxidationsbeständigkeit sowie Umformbarkeit und Schweißbarkeit auf. Gute Umformbarkeit sowie Schweißbarkeit von VDM Alloy 780 basiert unter anderem auf relativ großer Fehlpassung (0.48% im Vergleich zu - von 0.04% bis zu +0.34% Udimet 720 und andere hoch γ' haltige Legierungen) (R. A. Ricks, A. J. Porter, R. C. Ecob, Acta Metall., 31, 43-53 (1983).

Durch die EP 2314725 A1 ist ein Verfahren zur Herstellung eines VAR-Barrens bekannt geworden, wobei das Verfahren folgendes umfasst:

- Gießen einer Legierung, die eine Nickelbasissuperlegierung ist, in eine Gussform
- Glühen und Überhärten der Legierung durch Erwärmen der Legierung auf wenigstens 649°C für wenigstens 10 Stunden
- Elektroschlackeumschmelzen der Legierung mit einer Schmelzrate von mindestens 3,63 kg/min
- Heißverlagern der Legierung in einen Heizofen
- Halten der Legierung in dem Heizofen bei einer ersten Temperatur von 316 - 982°C für wenigstens 10 Stunden
- Erhöhen der Ofentemperatur von der ersten Temperatur auf eine zweite Temperatur von wenigstens 1163°C auf eine Weise, die thermischen Beanspruchungen in der Legierung zu unterdrücken
- Halten der zweiten Temperatur für wenigstens 10 Stunden
- Vakuumlichtbogenumschmelzen einer VAR-Elektrode der Legierung mit einer Schmelzrate von 3,63 bis 5 kg/min, um den VAR-Barren bereitzustellen

Der Erfindung liegt die Aufgabe zugrunde, ein Pulver für die generative Fertigung von Komponenten auf Basis von VDM Alloy 780 sowie deren Modifizierung für gesteigerte Hochtemperatureigenschaften wie Festigkeit, Oxidationsbeständigkeit bei höheren Anwendungstemperaturen bei gleichzeitiger guter Prozessierbarkeit für generative Fertigungsverfahren (Herstellung von rissfreien Bauteilen) und deren hochqualitative und ökonomische Herstellung bereitzustellen. Wichtig sind dabei nicht nur die besonderen Anforderungen an Verteilung der Partikelgröße, Partikelform und Rieselfähigkeit des Pulvers zu erfüllen, sondern auch die optimalen Kombinationen von Legierungselementen so einzustellen, dass die Legierungsmodifikationen maßgeschneidert an die Anforderungen des Endbauteils _ oder an die Prozessierbarkeit angepasst sind.

Diese Aufgabe wird gelöst durch ein Verfahren zur Herstellung eines Pulvers aus einer Nickel-Kobalt-Legierung, wobei die Gehalte (in Gew.-%) wie folgt definiert sind:

| | |
|---|---|
| C | > 0 - max. 0,1 % |
| S | max. 0,015 % |
| Cr | 13 - 23% |
| Ni | Rest (> 30 %) |
| Mn | max. 1,0 % |
| Si | max. 1,0 % |

(fortgesetzt)

| | |
|---|---|
| Mo | 1 - 6 % |
| Ti | > 0 - 3,0 % |
| Nb+Ta | 3 - 8 % |
| Cu | max. 0,5 % |
| Fe | > 0 - max. 10 % |
| Al | > 0 - < 4,0 % |
| V | bis 4 % |
| Zr | > 0 - max. 0,1 % |
| Co | > 12 - < 35 % |
| W | bis 4 % |
| Hf | bis 3,0 % |
| O | max. 0,1% |
| N | > 0 - max. 0,1 % |
| Mg | > 0 - max. 0,01 % |
| B | > 0 - max. 0,02 % |
| P | > 0 - max. 0,03 % |
| Ar | 0 - max. 0,08 % |
| Se | max. 0,0005 % |
| Bi | max. 0,00005 % |
| Pb | max. 0,002 % |

indem

- eine Legierung in einem VIM-Ofen erschmolzen wird,
- die flüssige Schmelze für 5 min bis 2 Stunden, insbesondere 20 min bis 2 h, zur Homogenisierung gehalten wird,
- eine geschlossene Verdüsungsanlage mit einem zugeführten Gas auf einen Taupunkt von -10°C bis -120°C eingestellt wird,
- die Schmelze durch eine Düse in einen Gasstrom mit einer Gasflussrate von 2 m$^3$/min bis 150 m$^3$/min geblasen wird
- die erstarrten Pulverpartikel in einem gasdicht verschlossenen Behälter gesammelt werden, wobei
- die Partikel eine Partikelgröße von 5 $\mu$m bis 250 $\mu$m haben,
- die Partikel des Pulvers sphärisch sind,
- das Pulver Gaseinschlüsse von 0,0 bis 4 % Porenfläche (Poren > 1$\mu$m) im Verhältnis zur Gesamtfläche ausgewerteter Objekte aufweist,
- das Pulver eine Schüttdichte von 2 bis zur Dichte der Legierung von ca. 8 g/cm$^3$ hat,
- das Pulver unter einer Schutzgasatmosphäre mit Argon luftdicht verpackt wird.

Vorteilhaft können folgende Elemente wie folgt eingestellt werden (Angaben in Gew.-%):

| | |
|---|---|
| C | max. 0,05 % |
| S | max. 0,010 % |
| Cr | 16 - 22% |
| Mn | max. 0,6 % |
| Si | max. 0,4 % |
| Mo | 2 - 6 % |
| Fe | >0 - 5 % |
| Ti | 0,0005 - 2,0 %, insbesondere bis < 1 % |
| Al | 1,6 - 3,5 % |
| Co | 15 - 27 % |
| Ni | Rest (> 30) |

Im Folgenden wird ein Beispiel eines Pulvers aus einer Nickel-Kobaltlegierung auf Basis von Alloy 780 vorgestellt (Angaben in Gew.-%):

| | |
|---|---|
| Ni | 30 - 65 % |
| Fe | > 0 - max. 5 % |
| Co | > 15 - < 27 % |
| Cr | 16 - 22 % |
| Mo | 2 - 6 % |
| W | bis 4 % |
| Hf | bis 2,5 % |
| Nb + Ta | 5 - 7,5% |
| Al | 1,6 - 3,5 % |
| Mn | max. 0,6 % |
| Ti | 0,0005 - 2,0 %, insbesondere < 1,0 % |
| Si | 0,0005 - 0,4 % |
| C | > 0 - max. 0,05 % |
| P | > 0 - max. 0,025 % |
| N | > 0 - max. 0,1 % |
| Mg | > 0 - max. 0,008 % |
| B | > 0 - max. 0,02 % |
| Ar | max. 0,05 % |
| Zr | > 0 - max. 0,1 % |

Folgende Beziehungen müssen erfüllt sein:

$$Mo + W \geq 2,5$$

$$0,0005 < B + Zr + P < 0,15$$

$$S + Se + Bi + Pb < 0,1$$

$$900°C < y'\text{-Solvus} < 1130°C$$

$$20\% < y'\text{-Volumenanteil} < 45\% \text{ im ausscheidungsgeglühten Zustand}$$

In der Tabelle 1. sind die konventionellen Benchmark-Legierungen als Stand der Technik genannt, die durch erfindungsgemäße Anpassung und Modifizierung der chemischen Zusammensetzung von VDM Alloy 780 in der Anwendung in generativen Fertigungsverfahren durch bessere Hochtemperatureigenschaften und/oder Prozessierbarkeit substituiert werden können. Dabei wird besonders auf den y'-Volumengehalt geachtet, da er für die Hochtemperaturfestigkeit eine wichtige Rolle spielt. Außerdem ist eine weitere Unterteilung im Hochtemperatur-Bereich notwendig (Gruppen Nr. 2 und 3 sowie 4 und 5). Hierbei ist eine Auslegung des Gefüges je nach Bauteileinsatz entweder im Bereich der Zeitstandfestigkeit oder der Lastwechselfestigkeit von Nutzen. Dies wird durch die Stabilität der Delta-Phase erreicht. Delta-Phase scheidet sich an den Korngrenzen aus, pinnt sie und verlangsamt deutlich die Rissausbreitung.

Tabelle 1. Legierungsgruppierung

| Benchmark Legierung | Alloy 718 Waspaloy Udimet 720 | VDM Alloy 780 | Alloy 939 | | Alloy 738LC | |
|---|---|---|---|---|---|---|
| Anforderungen an Gefüge | 25%<y'-Vol. (%)<30%, Delta-Vol.< 6% | 25%<y'-Vol.(%)<30%, Delta-Vol.< 6% Keine eta-Phase | 30%<y'-Vol.(%)≤35%, keine eta-Phase | | 35%<y'-Vol.(%)≤45%, keine eta-Phase | |
| | | | Mit Delta-Ph. | Ohne Delta-Ph. | Mit Delta-Ph. | Ohne Delta-Ph. |
| Gruppen-Nr. | 0 | 1 | 2 | 3 | 4 | 5 |

Der Sauerstoffgehalt muss kleiner gleich 0,100 % sein, um die Herstellbarkeit und Verwendbarkeit der Legierung zu gewährleisten. Ein zu niedriger Sauerstoff-Gehalt erhöht die Kosten. Der Sauerstoff-Gehalt ist deshalb ≥ 0,00001 %. Folgende Einschränkungen des Sauerstoffgehalts sind denkbar:

- 0,00001 - 0,1
- 0,00002 - 0,1
- 0,00005 - 0,1
- 0,00008 - 0,1
- 0,0001 - 0,1
- 0,0002 - 0,1
- 0,0005 - 0,1
- 0,0008 - 0,1
- 0,001 - 0,1
- 0,002 - 0,1
- 0,005 - 0,1
- 0,008 - 0,1
- 0,010 - 0,1
- 0,00001 - 0,10
- 0,00001 - 0,08
- 0,00001 - 0,05
- 0,00001 - 0,03
- 0,00001 - 0,02

Der Stickstoff muss kleiner gleich 0,100 % sein, um die Herstellbarkeit und Verwendbarkeit der Legierung zu gewährleisten. Zu hoher Stickstoffgehalt führt zur Bildung von Nitriden, die Eigenschaften der Legierung negativ beeinflussen. Ein zu niedriger Stickstoff-Gehalt erhöht die Kosten. Der Stickstoff-Gehalt ist deshalb ≥ 0,00001 %. Folgende Einschränkungen des Stickstoffgehalts sind denkbar:

- 0,00001 - 0,1
- 0,00002 - 0,1
- 0,00005 - 0,1
- 0,00008 - 0,1
- 0,0001 - 0,1
- 0,0002 - 0,1
- 0,0005 - 0,1
- 0,0008 - 0,1
- 0,001 - 0,1
- 0,002 - 0,1
- 0,005 - 0,1
- 0,008 - 0,1
- 0,010 - 0,1
- 0,00001 - 0,10
- 0,00001 - 0,08
- 0,00001 - 0,05
- 0,00001 - 0,03

- 0,00001 - 0,02

Sowohl im Pulver als auch in gefertigten Komponenten (3D-gedruckte Proben) sind die Partikelgrößen sowohl von Nitriden als auch von Karbiden und /oder Karbonitriden sehr klein (etwa < 8μm). In einigen Fällen können die oben genannten Partikel nicht vorhanden sein oder erst nach Wärmebehandlung sichtbar werden. Kleine Partikelgrößen von N-haltige Ausscheidungen haben positiven Effekt auf Hochtemperatur Eigenschaften, da N-haltigen Ausscheidungen in konventionell hergestellten Legierungen als Rissinitiierungsstellen wirken.

Der Argongehalt muss kleiner gleich 0,08 % sein, um die Herstellbarkeit und Verwendbarkeit der Legierung zu gewährleisten. Argon kann nicht in der y-Matrix aufgelöst werden, deswegen kann es die mechanischen Eigenschaften des Bauteils negativ beeinflussen, da Argoneinschlüsse als Rissinitiierungsstelle wirken können. Ein zu niedriger Argon-Gehalt erhöht die Kosten. Der Argon-Gehalt ist deshalb ≥ 0,0000001 % (≥ 1 ppb). Folgende Einschränkungen des Argongehalts sind denkbar, wobei die Argongehalte aus der Pulverherstellung als auch aus der Bauteilherstellung inbegriffen sind:

- 0,0000001 - 0,05
- 0,0000002 - 0,05
- 0,0000001 - 0,005
- 0,0000001 - 0,002
- 0,0000001 - 0,001

Das bedarfsweise Zulegieren von Hf bis max. 3,0 % kann die Verfestigung der y'-Phase positiv beeinflussen. Außerdem kann das Zulegieren von Hf für die Vermeidung der Rissbildung beim Erstarrungsprozess eingesetzt werden.

Bei hohen Anforderungen an mechanische Eigenschaften bei höheren Temperaturen kann bedarfsweise der V-Gehalt erhöht werden. Dabei tendiert V sich an den Korngrenzen zu konzentrieren und die mechanischen Eigenschaften bei höheren Temperaturen positiv zu beeinflussen.

Im Folgenden wird das erfindungsgemäße Verfahren zur Herstellung eines vorab beschriebenen Pulvers aus einer Nickel-Kobalt-Legierung vorgestellt, indem

- eine Legierung in einem VIM-Ofen erschmolzen wird,
- die flüssige Schmelze für 5 min bis 2 Stunden, insbesondere 20 min bis 2 h, zur Homogenisierung gehalten wird,
- eine geschlossene Verdüsungsanlage mit einem zugeführten Gas auf einen Taupunkt von -10°C bis -120°C eingestellt wird,
- die Schmelze durch eine Düse in einen Gasstrom mit einer Gasflussrate von 2 m$^3$/min bis 150 m$^3$/min geblasen wird
- die erstarrten Pulverpartikel in einem gasdicht verschlossenen Behälter gesammelt werden, wobei
- die Partikel eine Partikelgröße von 5 μm bis 250 μm haben,
- die Partikel des Pulvers sphärisch sind,
- das Pulver Gaseinschlüsse von 0,0 bis 4 % Porenfläche (Poren > 1μm) im Verhältnis zur Gesamtfläche ausgewerteter Objekte aufweist,
- das Pulver eine Schüttdichte von 2 bis zur Dichte der Legierung von ca. 8 g/cm$^3$ hat,
- das Pulver unter einer Schutzgasatmosphäre mit Argon luftdicht verpackt wird.

Vorteilhafte Weiterbildungen des erfindungsgemäßen Verfahrens sind den verfahrensgemäßen Unteransprüchen zu entnehmen.

Folgende Ausgangsfertigungsschritte sind denkbar:

- ein Vorlegierungsblock mit definierter chemischer Analyse wird durch Erschmelzen im VIM-Ofen, VIM/ESU, VIM/ESU/VAR, VIM/VAR, VOD oder VLF mit bei Bedarf folgender Umschmelzung im ESU und/oder VAR je nach Reinheitsanforderungen an das Material erzeugt,
- der Vorlegierungs-Block wird durch Sägen in kleine Stücke getrennt,
- die Stücke der Vorlegierung werden in einem VIM-Ofen erschmolzen,
 oder
- Legierungselemente einer definierten Einwaage werden entsprechend der chemischen Analyse in einem VIM-Ofen erschmolzen,
 oder
- die Kombination zwischen Vorlegierungsmaterial, prozessbedingten Schrotten (inkl. Schrotte von Kunden wie recycelte Pulver sowie Stützstrukturen oder fehlerhafte Bauteile) sowie neue Legierungselemente im Verhältnis von 0 bis 100%. Das genaue Verhältnis wird unter Berücksichtigung von qualitativen, ökonomischen und ökologischen Aspekten in jedem Fall betrachtet. Von Vorteil kann sein, wenn der Vorlegierungsblock vor der Zerteilung einer Bearbeitung der Oberfläche (z.B. durch Bürsten, Schleifen, Beizen, Trennen, Schälen etc.) unterzogen wird. Hier können Fehler entfernt werden, welche durch das weitere Umschmelzen nicht beseitigt werden und für spätere Anwendungen von Schaden sein können. Außerdem führt die Verwendung von möglichen Vorlegierungen zum Einhalten von höchsten Qualitätsansprüchen an die chemische Reinheit des Pulvers, die nur durch vorherige Umschmelzprozesse gewährleistet werden können,

- die flüssige Schmelze wird für 5 min bis 2 Stunden, insbesondere 20 min bis 2 Stunden, zur Homogenisierung gehalten,
- eine geschlossene Verdüsungsanlage wird mit Argongas auf einen Taupunkt von -10°C bis -120°C eingestellt, bevorzugt im Bereich von -30°C bis -100°C,
- die Schmelze wird durch eine Düse in einen Argongasstrom mit einer Gasflussrate von 2 m$^3$/min bis 150 m$^3$/min geblasen,
- die erstarrten Pulverpartikel werden in einem gasdicht verschlossenen Behälter gesammelt,
- die Partikel haben eine Partikelgröße von 5 $\mu$m bis 250 $\mu$m, wobei bevorzugte Bereiche zwischen 5 und 150 $\mu$m, bzw. 10 und 150 $\mu$m liegen,
- die Partikel des Pulvers sind sphärisch,
- das Pulver weist Gaseinschlüsse von 0,0 bis 4 % Porenfläche (Poren > 1 $\mu$m) im Verhältnis zur Gesamtfläche ausgewerteter Objekte auf, wobei bevorzugte Bereiche bei 0,0 bis 2 % liegen. Die Menge der Gaseinschlüsse des Pulvers ermöglicht eine geringe Restporosität der hergestellten Teile,
- das Pulver hat eine Schüttdichte von 2 bis zur Dichte der Legierung von ca. 8 g/cm$^3$, wobei bevorzugte Bereiche bei Werten von 4 bis 5 g/cm$^3$ liegen,
- das Pulver wird unter der Schutzgasatmosphäre mit Argon luftdicht verpackt.

Das Pulver wird bevorzugt in einer Vakuuminertgasverdüsungsanlage (VIGA) produziert. In dieser Anlage wird die Legierung in einem Vakuuminduktionsschmelzofen (VIM) erschmolzen, in einen Gießtrichter geleitet, der zu einer Gasdüse führt, in der das erschmolzene Metall unter hohem Druck von 5 bis 100 bar mit Inertgas zu Metallpartikeln verdüst wird. Die Schmelze wird im Schmelztiegel bei 5 bis 400 °C über dem Schmelzpunkt erhitzt. Die Metallflussrate bei der Verdüsung beträgt 0,5 bis 80 kg Imin und die Gasflussrate 2 bis 150 m$^3$ / min. Durch die schnelle Abkühlung erstarren die Metallpartikel in Kugelform (sphärische Teilchen). Das bei der Verdüsung verwendete Inertgas kann bedarfsweise 0,01 bis 100 % Stickstoff enthalten. In einem Zyklon wird dann die Gasphase vom Pulver getrennt und anschließend das Pulver verpackt.

Alternativ kann das Pulver statt über VIGA über das sogenannte EIGA Verfahren hergestellt werden. Dabei wird ein vorgefertigter Legierungsblock in Form einer rotierenden Elektrode von einer Induktionsspule berührungslos abgeschmolzen. Die Schmelze tropft von der Elektrode direkt in den Gasstrom einer Gasdüse.

Der Legierungsblock für EIGA kann wiederum durch die Schmelzverfahren VIM, ESU, VAR, VOD bzw. VLF und deren Kombinationen hergestellt werden und optional Warmformprozesse wie Schmieden und Walzen durchlaufen. Von Vorteil ist eine Säuberung der Oberfläche des Blockes durch eine Behandlung wie Schleifen oder / und Schälen vor dem Einsatz im EIGA Verfahren.

Das Inertgas bei der Pulverherstellung kann wahlweise Argon bzw. ein Gemisch aus Argon mit 0,01 bis 100 % Stickstoff sein. Mögliche Einschränkungen des Stickstoffgehaltes können sein:

0,01 bis 80 %
0,01 bis 50 %
0,01 bis 30 %
0,01 bis 20 %
0,01 bis 10 %
0,01 bis 10 %
0,1 bis 5 %
0,5 bis 10 %
1 bis 5 %
2 bis 3 %

Alternativ kann wahlweise als Inertgas Helium eingesetzt werden.

Das Inertgas kann bevorzugt eine Reinheit von mindestens 99,996 Vol. % haben. Insbesondere soll der Stickstoffgehalt von 0,0 bis 10 ppmv, der Sauerstoffgehalt von 0,0 bis 4 ppmv und einen H2O Gehalt von ≤ 5 ppmv haben.

Insbesondere kann das Inertgas bevorzugt eine Reinheit von mindestens 99,999 Vol. % haben. Insbesondere soll der Stickstoffgehalt von 0,0 bis 5 ppmv der Sauerstoffgehalt von 0,0 bis 2 ppmv und einen H2O Gehalt von ≤ 3 ppmv haben. Der Taupunkt in der Anlage liegt im Bereich von -10 bis -120°C. Er liegt bevorzugt im Bereich von -30 bis -100°C.

Der Druck bei der Pulververdüsung kann bevorzugt 10 bis 80 bar betragen.

Die mittels additiver Fertigung hergestellten Bauteile und Komponenten bzw. Schichten auf Bauteilen und Komponenten werden aus Schichtdicken von 5 bis 500 $\mu$m aufgebaut und haben direkt nach der Herstellung ein texturiertes Gefüge mit in Baurichtung gestreckten Körnern einer mittleren Korngröße von 0,5 $\mu$m bis 2000 $\mu$m. Der bevorzugte Bereich liegt zwischen 5 $\mu$m und 500 $\mu$m. Außerdem kann oben beschriebenes Pulver bedarfsweise für die Herstellung der Bauteile mittels heißisostatischen Pressens (HIP) oder herkömmlichen Sinter- und Strangpressprozessen verwendet werden. Außerdem ist die Verfahrenskombination aus additiver Fertigung und nachfolgender HIP Behandlung möglich. Dabei sind die unten beschriebenen für die generative Fertigung Nachbearbeitungsschritte für HIP Bauteile möglich anzuwenden.

Die mittels additiver Fertigung hergestellten Bauteile und Komponenten bzw. Schichten auf Bauteilen und Komponenten können wahlweise einer Homogenisierungs-, Spannungsarm-, Lösungs- und/oder Ausscheidungshärtungsglühung unterzogen werden. Die Wärmebehandlungen können ggfls. unter Schutzgas, wie z. B. Argon oder Wasserstoff, gefolgt von einer Abkühlung im Ofen ggfls. unter Schutzgas, an Luft, in der bewegten Glühatmosphäre oder im Wasserbad unterzogen werden.

Die Bauteile werden bedarfsweise bei Temperaturen zwischen 300°C und 600°C für 0,5 h bis 10 h spannungsarmgeglüht und zwischen 1000°C und 1250°C für 1 h bis 300 h unter Luft oder Schutzgas für die Homogenisierung oder für den Spannungsabbau geglüht. Danach werden die Bauteile bedarfsweise bei Temperaturen zwischen 850°C und 1.250°C für 0,5 h bis 30 h unter Luft oder Schutzgas lösungs- oder spannungsarmgeglüht. Die Ausscheidungsglühung kann bedarfsweise ein- oder zweistufig sein und bei Temperaturen zwischen 600°C und 850°C für 1 h bis 30 h unter Luft oder Schutzgas erfolgen.

Danach kann wahlweise die Oberfläche durch Beizen, Strahlen, Schleifen, Drehen, Schälen, Fräsen gereinigt oder bearbeitet werden. Eine solche Bearbeitung kann wahlweise teilweise oder ganz auch schon vor der Glühung stattfinden.

Die mittels additiver Fertigung hergestellten Bauteile und Komponenten bzw. Schichten auf Bauteilen und Komponenten haben nach einer Glühung eine mittlere Korngröße von 2 $\mu$m bis 2000 $\mu$m. Der bevorzugte Bereich liegt zwischen 20 $\mu$m und 500 $\mu$m.

Das nach diesem Verfahren gefertigte Pulver als auch die aus diesem Pulver gefertigten Komponenten (3D-gedruckte Proben) sind frei von Nitriden als auch von Karbiden und / oder Karbonitrieren. Sollten Nitride als auch Karbide doch vorhanden sein, so haben diese eine Partikelgrößen im Durchmesser von < 100nm insbesondere <50nm.

Nach einer Wärmebehandlung von aus diesem Pulver gefertigten Komponenten (3D-gedruckte Proben) zur Homogenisierung, Diffusionsglühung über 900°C speziell über 1000°C idealerweise über 1100°C für mehr als 1 Stunde können in den gefertigten Komponenten (3D-gedruckte Proben) Nitride als auch von Karbide und /oder Karbonitride auftreten. Diese haben eine Partikelgrößen im Durchmesser von < 8$\mu$m, beziehungsweise <5$\mu$m, idealerweise < 1$\mu$m, insbesondere <500nm.

Die mittels additiver Fertigung aus dem erfindungsgemäß erzeugten Pulver hergestellten Bauteile und Komponenten bzw. Schichten auf Bauteilen und Komponenten sollen bevorzugt in Bereichen eingesetzt werden, in denen auch der Werkstoff als Knet- oder Gusslegierung mit verwandter Analyse eingesetzt wird. Der Begriff "additive/generative Fertigung" kann je nach Anwendungsebene in Rapid Prototyping, Rapid Tooling, Rapid Manufacturing oder dergleichen unterteilt werden.

Im Allgemeinen unterschieden werden hier:

3D-Druck mit Pulvern,
Selektives Lasersintern und
Selektives Laserschmelzen
Elektronen-Strahlschmelzen
Laserauftragsschweißen
Selektives Elektronenstrahlschweißen oder dergleichen.

Die hier verwendeten Abkürzungen werden wie folgt definiert:

VIM Vacuum Induction Melting
VIGA Vacuuminertgasverdüsungsanlage (Vacuum Induction Melting and Inert Gas Atomization)
VAR Vacuum Arc Remelting
VOD Vaccum Oxygen Decaburization
VLF Vaccum Ladle Furnace
EIGA Electrode Induction Melting Gas Atomization

Der Spreizungsbereich für die Partikelgröße des Pulvers liegt zwischen 5 und 250 $\mu$m, wobei bevorzugte

Bereiche zwischen 5 und 150 $\mu$m, bzw. 10 und 150 $\mu$m liegen.

Das Pulver hat Gaseinschlüsse von 0,0 bis 4 % Porenfläche (Poren > 1 $\mu$m) im Verhältnis zur Gesamtfläche ausgewerteter Objekte, wobei bevorzugte Bereiche liegen bei

0,0 bis 2%
0,0 bis 0,5 %
0,0 bis 0,2%
0,0 bis 0,1%
0,0 bis 0,05%

Das Pulver hat eine Schüttdichte von 2 bis zur Dichte der Legierung von ca. 8 g/cm$^3$, wobei bevorzugte Bereiche bei folgenden Werten liegen können:

4-5 g/cm$^3$
2-8 g/cm$^3$
2-7 g/cm$^3$
3-6 g/cm$^3$

Die Menge der Gaseinschlüsse des Pulvers ermöglicht eine geringe Restporosität der hergestellten Teile.

Gegenüber dem Stand der Technik wird auf das Zentrifugenverfahren verzichtet, hierdurch wird die Betriebszeit der Anlage optimiert. Die anschließenden Veredelungsprozesse optimieren die Qualität des Pulvers für die Additive Fertigung. Außerdem ist die Optimierung der Zusammensetzung der Legierung VDM Alloy 780 für die Anwendung bei generativen Fertigungsverfahren sowie die Optimierung der Zusammensetzung für die Anwendung bei höheren Temperaturen bei gleichbleibender Verarbeitbarkeit durchgeführt.

In Tabelle 2 sind chemische Zusammensetzungen des mit dem erfindungsgemäßen Verfahren hergestellten Pulvers angegeben (Angaben in Gew.-%).

Erzielt werden Pulver mit einer Partikelgröße von 5$\mu$m bis 250 $\mu$m.

Eine zu kleine Partikelgröße unterhalb von 5 $\mu$m verschlechtert das Fließverhalten und ist deshalb zu vermeiden, eine zu große Partikelgröße oberhalb von 250 $\mu$m verschlechtert das Verhalten bei der additiven Fertigung.

Eine zu geringe Schüttdichte von 2 g/cm$^2$ verschlechtert das Verhalten bei der additiven Fertigung. Die größtmögliche Schüttdichte von ca. 8 g/cm$^3$ ist durch die Dichte der Legierung gegeben.

Die nach diesem Verfahren gefertigten Pulver können in der additiven Fertigung zum Bau von Komponenten verwendet werden, welche die Eigenschaften der zugrundeliegenden Legierungen (VDM Alloy 780 und deren Hochtemperatur-Modifikation) aufweisen. Standard VDM Alloy 780 kann im Prozessparameterfenster bei SLM Verfahren von alloy 718 rissfrei gefertigt werden. Dabei wird die relative Dichte von 99,98 % erreicht.

Bei den generativen Fertigungsverfahren können die Prozessparameter mit Hilfe von mehreren Parametern beschrieben werden. Für die SLM und teilweise EBM Verfahren wird oft die Volumenenergiedichte charakteristisch betrachtet. Prinzipiell wird die Volumenenergiedichte über die Formel berechnet [L. A. Al-Juboori, T. Niendorf, F. Brenne; On the Tensile Properties of Inconel 718 Fabricated by EBM for As-Built and Heat-Treated Components; Metallurgical and Materials Transactions B, Volume 49B, 2018]:

$$E = \frac{P}{v*d*h},$$

in J/mm$^3$

mit Laserleistung (P), Scangeschwindigkeit (v), Schichtdicke (d) und Bahnabstand (h)

Für Alloy 718 wird meist eine Energiedichte zwischen 40 und 120 J/mm$^3$ verwendet. Ein typischer Wert liegt bei ca. 90 J/mm$^3$ für beide Verfahren.

Bei der Parameterfindung für die Alloy 780 Pulver-Zusammensetzungen P10047, P10048, P10056, P10085 sowie P10086 wurden die Energiedichten im Bereich von Alloy 718 zwischen 40 und 120 J/mm$^3$ verwendet, mit der relativen Dichten über 99%. Zum Beispiel kann die Energiedichte bei ca. 80 J/mm$^3$ die relative Dichte 99,98 % erreicht werden. Bei den Hochtemperaturvarianten von Pulverlegierung 780 (Zusammensetzungen 1 bis 57, sowie N1 bis N5) können Energiedichten von 40 bis zu 600 J/mm$^3$ variiert werden, damit die hohe relative Dichte des Materials gewährleistet werden kann. Allerdings können sich die Prozessparameter je nach Verfahren stark unterscheiden.

Mit Material aus Charge P10056 wurden nach dem SLM Verfahren Proben hergestellt. Außer vereinzelten prozessbedingten Poren ist es möglich rissfreie Gefüge zu erzielen".

In Abhängigkeit von unterschiedlichen Wärmebehandlungen wurde ein gleichmäßiges Gefüge mit Korngrößen von z.B. etwa 75$\mu$m (etwa ASTM 4.5) erreicht. Auch kleinere Korngrößen oder größere Korngrößen können durch definierte Wärmebehandlungsparameter eingestellt werden.a)b)

Tabelle 2: Chemische Zusammensetzungen von per Verdüsung erzeugten Pulverchargen.

| Charge | P10047 | P10048 | P10056 | P10085 | P10086 |
|---|---|---|---|---|---|
| C | 0,022 | 0,0214 | 0,024 | 0,022 | 0,022 |
| S | 0,0005 | 0,0003 | 0,0005 | 0,0005 | 0,0005 |
| N | 0,007 | 0,0068 | 0,007 | 0,006 | 0,005 |
| Cr | 17,86 | 17,76 | 17,81 | 17,64 | 17,64 |
| Ni | 45,2 | 45,08 | 45,18 | 46,1 | 46,15 |
| Mn | 0,02 | 0,02 | 0,02 | 0,01 | 0,01 |
| Si | 0,07 | 0,06 | 0,06 | 0,06 | 0,06 |
| Mo | 3,05 | 3,15 | 2,91 | 2,95 | 2,98 |
| Ti | 0,3 | 0,3 | 0,3 | 0,31 | 0,31 |
| Nb | 5,24 | 5,45 | 5,53 | 5,39 | 5,42 |
| Cu | 0,01 | 0,01 | 0,01 | 0,01 | 0,01 |
| Fe | 0,88 | 0,75 | 0,72 | 0,64 | 0,63 |
| P | 0,013 | 0,013 | 0,013 | 0,014 | 0,011 |
| Al | 2,12 | 2,12 | 2,08 | 2,18 | 2,13 |
| Mg | 0,0002 | 0,00003 | 0,0003 | 0,001 | 0,001 |
| Ca | 0,0005 | 0,0001 | 0,0003 | 0,000 | 0,0002 |
| V | 0,01 | 0,01 | 0,01 | 0,01 | 0,01 |
| Zr | 0,01 | 0,002 | 0,01 | 0,01 | 0,01 |
| W | 0,02 | 0,02 | 0,02 | 0,02 | 0,02 |
| Co | 25,15 | 25,21 | 25,28 | 24,61 | 24,57 |
| B | 0,004 | 0,0035 | 0,004 | 0,004 | 0,004 |
| Ta | 0,005 | 0,01 | 0,005 | 0,005 | 0,005 |
| Se | 0,0003 | | 0,0003 | 0,0003 | 0,0003 |
| Te | 0,00005 | | 0,00005 | 0,00005 | 0,00005 |
| Bi | 0,00003 | | 0,00003 | 0,00003 | 0,00003 |
| O | 0,002 | 0,001 | | | |
| Sb | 0,0005 | | 0,0005 | 0,0005 | 0,0005 |
| Ag | 0,0001 | | 0,0001 | 0,0001 | 0,0001 |

Eine typische chemische Zusammensetzung einer beispielhaften großtechnisch erzeugten Charge (Chargen-Nr. 420420) der Legierung Alloy 780 für warmgeschmiedete Knüppel ist z.B. in der Tabelle 3 (und in weiteren Tabellen) gelistet. Die chemische Zusammensetzung dieser großtechnisch erzeugten Charge 420420 ist in den Gehalten insbesondere der Elemente Co, Al, Ti und Nb so gewählt, dass die gamma'-solvus-Temperatur so hoch ist (experimentell bestimmt etwa bei 990°C), dass die Gefügestabilität bis zu entsprechend hohen Temperaturen gegeben ist. Darüber hinaus ist der gamma'-Volumenanteil gegenüber der Standardlegierung Alloy 718 deutlich größer. Daraus resultiert eine mögliche deutlich höhere Anwendungstemperatur bei hohen Festigkeitswerten. Auf der anderen Seite ist aufgrund der wohl definierten chemischen Zusammensetzung die gamma'-solvus-Temperatur nicht zu hoch. Damit ist die Legierung noch gut ausgehend von einem Umschmelzblock an Knüppel warmumformbar, d.h. gut schmiedbar. Mit etwa 2,1% Al und 0,3% Ti liegt die chemische Zusammensetzung dieser großtechnisch für Schmiedeprodukte erzeugten Charge 420420 (Referenzwerkstoff für die weiteren Betrachtungen) im Analysenbereich eines Werkstoffs, der sich gut schweißen lässt (siehe Diagramm 1). Dies wurde experimentell mittels Elektronenstrahl- und Plasma-Schweißversuchen nachgewiesen. Dies stimmt auch sehr gut mit der Beobachtung überein, dass mit über Pulververdüsung mittels einer VIGA-Anlage hergestelltem Pulver, welches eine vergleichbare chemische Zusammensetzung aufweist, beim 3D-Drucken von Prüfkörpern keinerlei Risse aufgetreten sind. Hieraus ergibt sich nun Potential die für Schmiedeprodukte verwendete chemische Zusammensetzung im Fall von Pulverprodukten für additive Fertigungsverfahren, wie das selektive Laserschmelzen, innerhalb der in der Patentschrift beschriebenen Grenzanalysen so anzupassen, dass die Legierungen mit angepassten chemischen Zusammensetzungen mit dem selektiven Laserschmelzen rissfrei druckbar sind, aber z.B. die gamma'-solvus-Temperatur und auch der gamma'-Volumenanteil erhöht werden kann. Hieraus resultieren dann Werkstoffe mit chemischen Zusammensetzungen die im Fall von 3D gedruckten Komponenten mit noch höheren Festigkeitswerten bei höheren Temperaturen angewendet werden können.

Außerdem wird hierbei ein VDM Alloy 780 Legierungskonzept zu Nutze gemacht mit gleichzeitiger erfindungsgemäßer Optimierung für die generativen Herstellverfahren:

(a) hoher Cr-Gehalt gewährleistet die verbesserte Oxidationsbeständigkeit des Materials bei hohen Temperaturen;

(b) hoher Co-Gehalt erhöht die Stapelfehlenergie, substituiert sich in y'-Phase auf Ni Plätzen, erhöht die Gitterkonstante der y'-Phase;

(c) niedriger Ti-Gehalt verlangsamt die Substitution des Al in y'-Phase und damit die Ausscheidungskinetik, damit wird auch die Schweißbarkeit verbessert (siehe Diagramm 1). Außerdem wird die HochtemperaturOxidationsbeständigkeit verbessert. Reduzierung des Ti-Gehaltes wirkt positiv auf die Destabilisierung der eta-Phase und N-haltigen inkohärenten Ausscheidungen und verbessert damit die Hochtemperatur-Eigenschaften.

(d) angepasste Nb- und Ta-Gehalte sowie Hf-Zugaben verlangsamen die Vergröberung der y'-Phase bei höheren Temperaturen, erhöhen die Fehlpassung und verfestigen die y'-Phase;

(e) Reduzierung von minor Elementen verbessert die Prozessierbarkeit der Legierung und erlaubt auch bei hohen y'-Phase Volumenanteilen rissfreie Bauteile herzustellen;

Diagramm 1:    Analysenbereich der Legierungen und deren Schweißbarkeit (nach M. M. Attallah et al. "Additive manufacturing of Ni-based superalloys: The outstanding issues", *MRS Bull.*, vol. 41, no. 10, pp. 758–764, 201

Diagramm 2: durch gamma´-Phase bedingte Heißrissempfindlichkeit (nach Cam & Sekhar).

Mit Hilfe von thermodynamischen Simulationen (JMatPro und ThermoCalc) mit der Datenbank TTNi8 wurde eine umfangreiche Versuchsmatrix mit Variation der chemischen Zusammensetzungen berechnet und somit die gamma'-solvus-Temperaturen und die gamma'-Volumenanteile dieser Legierungen ermittelt (siehe nachfolgende Tabellen, Diagramme der nächsten Seiten).

Hierbei wurden folgende Elemente und Elementgehalte variiert:

Cr: 16 / 18 / 20 %
Ni: von 43 % bis 55,5 % (Restelement)
Mo: 3 / 3,5 /4 /6 %
Ti: 0,1 / 0,3 / 0,6 / 0,9 / 1,2 / 1,6 / 2,1 % (bis 3%)
Nb: 3,5 / 4,0 / 5,0 / 5,4 %
Ta: 0,5 / 1 / 2 %
Al: 1,6/ 1,9/2,2/2,472,5/2,6/2,8/3,1 / 3,5/4.0 %
Co: 15 / 17,5 / 20 / 22,5 / 24,5 / 27,5 %
W: 0,5 / 1 / 2 %
Hf: 0,5 / 1 / 2 %

Die Tabellen 3a bis 3d enthalten ausgewählte Legierungsanalysen mit Variation der Al-Gehalte und berechnete Phaseneigenschaften bei einem konstanten Co-Gehalt von 24,5 % (Tab. 3a und 3b-1) und 20 % (Tab. 3c und 3d-1).

Tabelle 3a: Auswahl an Legierungsanalysen mit Variation der Al-Gehalte mit konstantem Co-Gehalt von 24,5 %
(Analysen-Nr 17, 18, 19, 25, 26; Referenz-Nr 420420 und 1 sowie Analysen N1 und N2)

| Variante | 420420 | 1 | 17 | 18 | 19 | 25 | 26 | N1 | N2 |
|---|---|---|---|---|---|---|---|---|---|
| C | 0.021 | 0.021 | 0.021 | 0.021 | 0.021 | 0.021 | 0.021 | 0.021 | 0.021 |
| S | 0.0005 | 0.0005 | 0.0005 | 0.0005 | 0.0005 | 0.0005 | 0.0005 | 0.0005 | 0.0005 |
| N | 0.008 | 0.008 | 0.008 | 0.008 | 0.008 | 0.008 | 0.008 | 0.008 | 0.008 |
| Cr | 17.75 | 18 | 18 | 18 | 18 | 18 | 18 | 18 | 18 |
| Ni | 45.96 | 46.018 | 45.718 | 45.418 | 45.118 | 46.318 | 46.618 | 44.718 | 44.218 |
| Mn | 0.018 | 0.018 | 0.018 | 0.018 | 0.018 | 0.018 | 0.018 | 0.018 | 0.018 |
| Si | 0.065 | 0.065 | 0.065 | 0.065 | 0.065 | 0.065 | 0.065 | 0.065 | 0.065 |
| Mo | 2.94 | 3 | 3 | 3 | 3 | 3 | 3 | 3 | 3 |
| Ti | 0.31 | 0.3 | 0.3 | 0.3 | 0.3 | 0.3 | 0.3 | 0.3 | 0.3 |
| Nb | 5.41 | 5.4 | 5.4 | 5.4 | 5.4 | 5.4 | 5.4 | 5.4 | 5.4 |
| Ta | 0.01 | 0.01 | 0.01 | 0.01 | 0.01 | 0.01 | 0.01 | 0.01 | 0.01 |
| Cu | 0.01 | 0.01 | 0.01 | 0.01 | 0.01 | 0.01 | 0.01 | 0.01 | 0.01 |
| Fe | 0.67 | 0.43 | 0.43 | 0.43 | 0.43 | 0.43 | 0.43 | 0.43 | 0.43 |
| P | 0.011 | 0.011 | 0.011 | 0.011 | 0.011 | 0.011 | 0.011 | 0.011 | 0.011 |
| Al | 2.16 | 2.2 | 2.5 | 2.8 | 3.1 | 1.9 | 1.6 | 3.5 | 4.0 |
| Mg | 0.0008 | 0.0008 | 0.0008 | 0.0008 | 0.0008 | 0.0008 | 0.0008 | 0.0008 | 0.0008 |
| Ca | 0.0004 | 0.004 | 0.004 | 0.004 | 0.004 | 0.004 | 0.004 | 0.004 | 0.004 |
| V | 0.002 | 0.002 | 0.002 | 0.002 | 0.002 | 0.002 | 0.002 | 0.002 | 0.002 |
| Zr | 0.002 | 0.002 | 0.002 | 0.002 | 0.002 | 0.002 | 0.002 | 0.002 | 0.002 |
| W | 0.02 | 0.02 | 0.02 | 0.02 | 0.02 | 0.02 | 0.02 | 0.02 | 0.02 |
| Co | 24.63 | 24.5 | 24.5 | 24.5 | 24.5 | 24.5 | 24.5 | 24.5 | 24.5 |
| Hf | 0 | 0 | 0 | 0 | 0 | 0 | 0 | 0 | 0 |
| B | 0.004 | 0.004 | 0.004 | 0.004 | 0.004 | 0.004 | 0.004 | 0.004 | 0.004 |
| O | 0.002 | 0.002 | 0.002 | 0.002 | 0.002 | 0.002 | 0.002 | 0.002 | 0.002 |

Tabelle 3b-1: Berechnete Phaseneigenschaften der Legierungsanalysen aus Tab. 3a.

| Variante | 420420 | 1 | 17 | 18 | 19 | 25 | 26 | N1 | N2 |
|---|---|---|---|---|---|---|---|---|---|
| y'sol. T-r (°C) | 990 | 1016 | 1035 | 1053 | 1067 | 980 | 950 | 1083 | 1104 |
| y' Vol. (%) bei 600°C | 26 | 29 | 33,5 | 38 | 41 | 24,3 | 19,7 | 44,8 | 49,6 |
| eta sol. T-r (°C) | 1020 | 996 | 1008 | 0 | 0 | 998 | 966 | 0 | 0 |
| eta max Vol. (%) | 2,5 | 2,8 | 0,9 | 0 | 0 | 1,9 | 1,4 | 0 | 0 |
| eta sol. T-r (°C) | | 970 | 969 | 0 | 0 | 957 | 936 | 0 | 0 |
| Delta sol. T-r (°C) | 1060 | 1014 | 978 | 908 | 0 | 1022 | 1031 | 0 | 0 |
| Delta Vol.(%) bei 600°C | 2 | 4,5 | 2,4 | 0,7 | 0 | 6,7 | 8,2 | 0 | 0 |
| sigma sol. T-r (°C) | - | 774 | 811 | 850 | 881 | 734 | 699 | 919 | 961 |
| sigma Vol.(%) bei 600°C | - | 8,6 | 11,8 | 14 | 16 | 5,9 | 3,3 | 19,2 | 22,6 |

Neben den Anteilen [Gew.-%] und der Partikelgrößen [nm] der gamma'-Phase wurden mit dem Programm JMatPro (Version 11.1) die Werte der Streckgrenzen Rp0.2 [MPa] in Abhängigkeit der Prüftemperatur [°C] berechnet. Für diese Berechnungen wurde die Temperatur 1100°C mit einer Abkühlrate von 10K/s als Parameter für die Lösungsglühung verwendet. Für Legierungsanalysen, bei denen die gamma'-solvus-Temperatur oberhalb von 1100°C liegt, wurde die Lösungsglühtemperatur auf 1150°C gesetzt. Bei der der Lösungsglühung nachfolgenden Ausscheidungswärmebehandlung sind in den nachfolgenden Tabellen bei den meisten Legierungsvarianten die Ergebnisse für Rp0.2 für die Glühparameter 700°C / 8h, 850°C / 8h und 850°C / 24h gelistet. Bei ausgewählten Legierungsvarianten sind ausführlicher die Ergebnisse für Rp0.2 für die Ausscheidungstemperaturen 650°C, 700°C, 750°C, 800°C, 850°C und 900°C für die Glühdauer 8h gelistet; für die Ausscheidungstemperaturen, bei denen Rp0.2 einen Höchstwert für die jeweilige Legierung zeigt, auch sind zusätzlich die Ergebnisse für die Ausscheidungsglühdauern 16h und 24h ergänzt. Die Anteile und die Partikelgrößen der gamma'-Phase sind neben der chemischen Zusammensetzung auch von den Ausscheidungsglühparametern abhängig. Hieraus resultiert der Einfluss auf die Werte der Streckgrenze Rp0.2. Zusätzlich sind die Werte der Streckgrenze Rp0.2 auch von der Korngröße des Gefüges abhängig (in den Tabellen ist die Korngröße in ASTM-Größen angegeben). Eine Korngröße ASTM 4.5 entspricht dabei etwa einer gröberen Korngröße für eine Lösungsglühtemperatur bei 1100°C. Dagegen entspricht ASTM 12 einer feineren Korngröße, die bei einer niedrigeren Lösungsglühtemperatur (z.B. um 1000°C) eingestellt werden kann.

In den Tabellen 3b-2 bis 3b-7 sind die berechneten Anteile und Partikelgrößen der gamma'-Phase und die berechneten Werte der Streckgrenze Rp0.2 in Abhängigkeit der zuvor beschriebenen Glühparameter und Korngrößen für die Legierungen der Tab. 3a gelistet.

| Variante | 1 | 17 | 18 | 19 | 25 | 26 | N1 | N2 |
|---|---|---|---|---|---|---|---|---|
| Gamma' [%] | 31 | 34 | 36.6 | 39 | 29 | 26 | 43 | 47 |
| Gamma' [nm] | 24 | 25 | 25 | 26 | 23 | 21 | 27 | 27 |
| Rp0.2 [MPa] | | | | | | | | |
| 650°C | 871 | 905 | 920 | 951 | 834 | 781 | 983 | 993 |
| 700°C | 875 | 910 | 926 | 957 | 824 | 784 | 989 | 1001 |
| 750°C | 848 | 882 | 898 | 927 | 812 | 759 | 957 | 965 |
| 800°C | 690 | 745 | 791 | 842 | 633 | 570 | 920 | 927 |
| 850°C | 474 | 515 | 547 | 583 | 431 | 382 | 627 | 802 |
| 900°C | 328 | 361 | 387 | 415 | 292 | 229 | 448 | 478 |

Tabelle 3b-2: Berechnete Anteile und Partikelgrößen der Ausscheidungsphase gamma' und Werte der mechanischen Streckgrenze Rp0.2 in Abhängigkeit der Prüftemperaturen von 650°C bis 900°C nach einer Ausscheidungswärmebehandlung von 700°C / 8h für eine Korngröße ASTM 4.5 der Legierungsanalysen aus Tab. 3a.

| Variante | 1 | 17 | 18 | 19 | 25 | 26 | N1 | N2 |
|---|---|---|---|---|---|---|---|---|
| Gamma' [%] | 31 | 34 | 36.6 | 39 | 29 | 26 | 43 | 47 |
| Gamma' [nm] | 24 | 25 | 25 | 26 | 23 | 21 | 27 | 27 |
| RpO.2 [MPa] | | | | | | | | |
| 650°C | 919 | 954 | 969 | 999 | 883 | 830 | 1031 | 1041 |
| 700°C | 923 | 958 | 974 | 1005 | 887 | 833 | 1037 | 1048 |
| 750°C | 896 | 930 | 945 | 974 | 860 | 807 | 1005 | 1013 |
| 800°C | 690 | 745 | 791 | 842 | 633 | 570 | 967 | 974 |
| 850°C | 474 | 515 | 547 | 583 | 431 | 382 | 627 | 802 |
| 900°C | 328 | 361 | 387 | 415 | 292 | 229 | 448 | 478 |

Tabelle 3b-3:  Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 700°C / 8h für eine Korngröße ASTM 12 der Legierungsanalysen aus Tab. 3a.

Aus den Werten der Tab. 3b-2 ist zu erkennen, dass mit steigenden Al-Gehalten der Anteil an gamma'-Phase anwächst; die Partikelgröße steigt dabei geringfügig. Auch die Streckgrenze Rp0.2 wächst mit steigendem Al-Gehalt der Legierung, d.h. mit steigendem Anteil an gamma'-Phase, an. Darüber hinaus ist aus dem Verlauf der Werte Rp0.2 in Abhängigkeit der Prüftemperatur zu erkennen, dass bei den Legierungen N1 und N2, d.h. mit den höheren Al-Gehalten von 3,5% und 4,0%, der bei höheren Prüftemperaturen auftretende steilere Abfall von Rp0.2 in Richtung einer höheren Prüftemperatur um 800°C verschoben ist. Bei den Legierungen mit einem niedrigeren Al-Gehalt ist der steilere Abfall von Rp0.2 bereits bei einer niedrigeren Prüftemperatur um 750°C zu erkennen. Im Vergleich hierzu ist aus den Daten der Tab. 3b-3 zu erkennen, dass im Fall der feineren Korngröße ASTM 12 im Vergleich zu der gröberen Korngröße ASTM 4.5 die Werte der Streckgrenze Rp0.2 deutlich größer sind. In den Tabellen 3b-2 und 3b-3 sind die Ergebnisdaten für die Ausscheidungswärmebehandlung 700°C / 8h gelistet.

| Variante | 1 | 17 | 18 | 19 | 25 | 26 | N1 | N2 |
|---|---|---|---|---|---|---|---|---|
| Gamma' [%] | 25 | 28.1 | 31.1 | 34.5 | 21.2 | 17.1 | 38 | 42.2 |
| Gamma' [nm] | 45 | 44 | 45 | 44 | 45 | 45 | 45 | 45 |
| Rp0.2 [MPa] | | | | | | | | |
| 650°C | 896 | 966 | 1016 | 1082 | 824 | 742 | 1135 | 1154 |
| 700°C | 886 | 954 | 1004 | 1070 | 815 | 734 | 1123 | 1161 |
| 750°C | 852 | 936 | 991 | 1056 | 764 | 670 | 1108 | 1164 |
| 800°C | 643 | 706 | 762 | 826 | 577 | 506 | 896 | 1153 |
| 850°C | 502 | 552 | 595 | 646 | 450 | 393 | 701 | 901 |
| 900°C | 348 | 392 | 429 | 468 | 303 | 236 | 511 | 565 |

Tabelle 3b-4:    Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 8h für eine Korngröße ASTM 4.5 der Legierungsanalysen aus Tab. 3a.

| Variante | 1 | 17 | 18 | 19 | 25 | 26 | N1 | N2 |
|---|---|---|---|---|---|---|---|---|
| Gamma' [%] | 25 | 28.1 | 31.1 | 34.5 | 21.2 | 17.1 | 38 | 42.2 |
| Gamma' [nm] | 45 | 44 | 45 | 44 | 45 | 45 | 45 | 45 |
| Rp0.2 [MPa] | | | | | | | | |
| 650°C | 944 | 1014 | 1064 | 1130 | 872 | 791 | 1183 | 1201 |
| 700°C | 933 | 1002 | 1052 | 1117 | 863 | 782 | 1170 | 1208 |
| 750°C | 852 | 936 | 1011 | 1095 | 764 | 670 | 1155 | 1211 |
| 800°C | 643 | 706 | 762 | 826 | 577 | 506 | 896 | 1178 |
| 850°C | 502 | 552 | 595 | 646 | 450 | 393 | 701 | 901 |
| 900°C | 348 | 392 | 429 | 468 | 303 | 236 | 511 | 565 |

Tabelle 3b-5:    Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 8h für eine Korngröße ASTM 12 der Legierungsanalysen aus Tab. 3a.

Nach der Ausscheidungswärmebehandlung 850°C / 8h sind die Anteile an gamma'-Phase zwar kleiner als nach der Ausscheidungswärmebehandlung 700°C / 8h, allerdings sind die Ausscheidungspartikel der gamma'-Phase größer (die zugehörigen Daten sind in den Tabellen 3b-4 und 3b-5 gelistet). Der positive Effekt der größeren Partikelgröße auf die Streckgrenze Rp0.2 überwiegt den negativen Effekt des kleineren Phasenanteils. Das Niveau der Werte der Streckgrenze Rp0.2 ist nach der Ausscheidungswärmebehandlung 850°C / 8h deutlich höher als nach - der Glühung 700°C / 8h.

Nach einer längeren Glühdauer von 24 h bei der Ausscheidungstemperatur 850°C ist das Niveau der Werte der Streckgrenze Rp0.2 deutlich niedriger als nach der Glühdauer 8 h bei derselben Ausscheidungsglühtemperatur 850°C. Anscheinend ist die größere Partikelgröße der gamma'-Phase hierfür verantwortlich. Diese Ergebnisdaten sind in den beiden Tabellen 3b-6 und 3b-7 für die Korngrößen ASTM 4.5 und ASTM 12 gelistet.

| Variante | 1 | 17 | 18 | 19 | 25 | 26 | N1 | N2 |
|---|---|---|---|---|---|---|---|---|
| Gamma' [%] | 25*(21) | 28.1 | 31.1 | 34.5 | 21.2 | 17.1 | 38 | 42.2 |
| Gamma' [nm] | 64 | 62 | 62 | 61 | 64 | 64 | 62 | 62 |
| RpO.2 [MPa] | | | | | | | | |
| 650°C | 807 | 872 | 923 | 982 | 743 | 672 | 1033 | 1093 |
| 700°C | 797 | 861 | 912 | 970 | 735 | 664 | 1021 | 1080 |
| 750°C | 787 | 850 | 900 | 957 | 725 | 646 | 1007 | 1066 |
| 800°C | 613 | 675 | 730 | 791 | 551 | 483 | 858 | 1049 |
| 850°C | 472 | 521 | 564 | 612 | 424 | 371 | 664 | 860 |
| 900°C | 324 | 365 | 401 | 437 | 282 | 221 | 478 | 529 |

Tabelle 3b-6:    Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 24h für eine Korngröße ASTM 4.5 der Legierungsanalysen aus Tab. 3a.

| Variante | 1 | 17 | 18 | 19 | 25 | 26 | N1 | N2 |
|---|---|---|---|---|---|---|---|---|
| Gamma´ [%] | 24.8 | 28.1 | 31.1 | 34.5 | 21.2 | 17.1 | 38 | 42.2 |
| Gamma´ [nm] | 64 | 62 | 62 | 61 | 64 | 64 | 62 | 62 |
| Rp0.2 [MPa] | | | | | | | | |
| 650°C | 855 | 920 | 971 | 1030 | 792 | 720 | 1080 | 1141 |
| 700°C | 845 | 909 | 960 | 1018 | 783 | 712 | 1068 | 1128 |
| 750°C | 822 | 897 | 947 | 1005 | 737 | 647 | 1054 | 1113 |
| 800°C | 613 | 675 | 730 | 791 | 551 | 483 | 858 | 1096 |
| 850°C | 473 | 52 | 564 | 612 | 424 | 371 | 664 | 860 |
| 900°C | 324 | 365 | 401 | 437 | 282 | 221 | 478 | 529 |

Tabelle 3b-7: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 24h für eine Korngröße ASTM 12 der Legierungsanalysen aus Tab. 3a.

Diagramm 2a: Berechnete Werte der mechanischen Streckgrenze Rp0.2 in Abhängigkeit der Prüftemperaturen von 650°C bis 900°C nach einer Ausscheidungswärmebehandlung von 850°C / 8h für eine Korngröße ASTM 4.5 der Legierungsanalysen aus Tab. 3a.

Dem Diagramm 2a ist zu entnehmen, dass die Streckgrenze Rp0.2 bei höheren Temperaturen mit steigendem Al-Gehalt wächst. Außerdem ist ein steilerer Abfall der Streckgrenze Rp0.2 bei höheren Al-Gehalten erst bei Temperaturen über 800 °C erkennbar.

Tabelle 3c-1: Auswahl an Legierungsanalysen mit Variation der Al-Gehalte mit konstantem Co-Gehalt von 20 % (Analysen-Nr. 8, 9, 10, 11, 36, 37; Referenz-Nr. 420420 und 1)

| Variante | 420420 | 1 | 8 | 9 | 10 | 11 | 36 | 37 |
|---|---|---|---|---|---|---|---|---|
| C | 0.021 | 0.021 | 0.021 | 0.021 | 0.021 | 0.021 | 0.021 | 0.021 |
| S | 0.0005 | 0.0005 | 0.0005 | 0.0005 | 0.0005 | 0.0005 | 0.0005 | 0.0005 |
| N | 0.008 | 0.008 | 0.008 | 0.008 | 0.008 | 0.008 | 0.008 | 0.008 |
| Cr | 17.75 | 18 | 18 | 18 | 18 | 18 | 18 | 18 |
| Ni | 45.96 | 46.018 | 50.518 | 50.118 | 50.818 | 51.118 | 49.218 | 48.718 |
| Mn | 0.018 | 0.018 | 0.018 | 0.018 | 0.018 | 0.018 | 0.018 | 0.018 |
| Si | 0.065 | 0.065 | 0.065 | 0.065 | 0.065 | 0.065 | 0.065 | 0.065 |
| Mo | 2.94 | 3 | 3 | 3 | 3 | 3 | 3 | 3 |
| Ti | 0.31 | 0.3 | 0.3 | 0.3 | 0.3 | 0.3 | 0.3 | 0.3 |
| Nb | 5.41 | 5.4 | 5.4 | 5.4 | 5.4 | 5.4 | 5.4 | 5.4 |
| Ta | 0.01 | 0.01 | 0.01 | 0.01 | 0.01 | 0.01 | 0.01 | 0.01 |
| Cu | 0.01 | 0.01 | 0.01 | 0.01 | 0.01 | 0.01 | 0.01 | 0.01 |
| Fe | 0.67 | 0.43 | 0.43 | 0.43 | 0.43 | 0.43 | 0.43 | 0.43 |
| P | 0.011 | 0.011 | 0.011 | 0.011 | 0.011 | 0.011 | 0.011 | 0.011 |
| Al | 2.16 | 2.2 | 2.2 | 2.6 | 1.9 | 1.6 | 3.5 | 4 |
| Mg | 0.0008 | 0.0008 | 0.0008 | 0.0008 | 0.0008 | 0.0008 | 0.0008 | 0.0008 |
| Ca | 0.0004 | 0.004 | 0.004 | 0.004 | 0.004 | 0.004 | 0.004 | 0.004 |
| V | 0.002 | 0.002 | 0.002 | 0.002 | 0.002 | 0.002 | 0.002 | 0.002 |
| Zr | 0.002 | 0.002 | 0.002 | 0.002 | 0.002 | 0.002 | 0.002 | 0.002 |
| W | 0.02 | 0.02 | 0.02 | 0.02 | 0.02 | 0.02 | 0.02 | 0.02 |
| Co | 24.63 | 24.5 | 20 | 20 | 20 | 20 | 20 | 20 |
| Hf | 0 | 0 | 0 | 0 | 0 | 0 | 0 | 0 |
| B | 0.004 | 0.004 | 0.004 | 0.004 | 0.004 | 0.004 | 0.004 | 0.004 |
| O | 0.002 | 0.002 | 0.002 | 0.002 | 0.002 | 0.002 | 0.002 | 0.002 |

Tabelle 3c-2: Auswahl an Legierungsanalysen HT1, HT2, HT1-a und HT2-a mit 20% Co bzw. 24.5% Co und Al-Gehalte von 3.0% bzw. 3.8% und Analysen der Referenz-Nr. 420420 und 1).

| Variante | 420420 | 1 | HT1 | HT2 | HT1-a | WT2-a |
|---|---|---|---|---|---|---|
| C | 0.021 | 0.021 | 0.021 | 0.021 | 0.021 | 0.021 |
| S | 0.0005 | 0.0005 | 0.0005 | 0.0005 | 0.0005 | 0.0005 |
| N | 0.008 | 0.008 | 0.008 | 0.008 | 0.008 | 0.008 |
| Cr | 17.75 | 18 | 18 | 18 | 18 | 18 |
| Ni | 45.96 | 46.018 | 49.718 | 48.918 | 45.218 | 44.418 |
| Mn | 0.018 | 0.018 | 0.018 | 0.018 | 0.018 | 0.018 |
| Si | 0.065 | 0.065 | 0.065 | 0.065 | 0.065 | 0.065 |

(fortgesetzt)

| Variante | 420420 | 1 | HT1 | HT2 | HT1-a | WT2-a |
|---|---|---|---|---|---|---|
| Mo | 2.94 | 3 | 3 | 3 | 3 | 3 |
| Ti | 0.31 | 0.3 | 0.3 | 0.3 | 0.3 | 0.3 |
| Nb | 5.41 | 5.4 | 5.4 | 5.4 | 5.4 | 5.4 |
| Ta | 0.01 | 0.01 | 0.01 | 0.01 | 0.01 | 0.01 |
| Cu | 0.01 | 0.01 | 0.01 | 0.01 | 0.01 | 0.01 |
| Fe | 0.67 | 0.43 | 0.43 | 0.43 | 0.43 | 0.43 |
| P | 0.011 | 0.011 | 0.011 | 0.011 | 0.011 | 0.011 |
| Al | 2.16 | 2.2 | 3 | 3.8 | 3 | 3.8 |
| Mg | 0.0008 | 0.0008 | 0.0008 | 0.0008 | 0.0008 | 0.0008 |
| Ca | 0.0004 | 0.004 | 0.004 | 0.004 | 0.004 | 0.004 |
| V | 0.002 | 0.002 | 0.002 | 0.002 | 0.002 | 0.002 |
| Zr | 0.002 | 0.002 | 0.002 | 0.002 | 0.002 | 0.002 |
| W | 0.02 | 0.02 | 0.02 | 0.02 | 0.02 | 0.02 |
| Co | 24.63 | 24.5 | 20 | 20 | 24.5 | 24.5 |
| Hf | 0 | 0 | 0 | 0 | 0 | 0 |
| B | 0.004 | 0.004 | 0.004 | 0.004 | 0.004 | 0.004 |
| O | 0.002 | 0.002 | 0.002 | 0.002 | 0.002 | 0.002 |

Tabelle 3d-1: Berechnete Phaseneigenschaften der Legierungsanalysen aus Tab. 3c-1.

| Variante | 420420 | 1 | 8 | 9 | 10 | 11 | 36 | 37 |
|---|---|---|---|---|---|---|---|---|
| y'sol. T-r (°C) | 990 | 1016 | 1013 | 1040 | 989 | 956 | 1086 | 1106 |
| y' Vol. (%) bei 600°C | 26 | 29 | 29 | 35 | 24 | 20 | 45,5 | 50 |
| eta sol. T-r (°C) | 1020 | 996 | 0 | 0 | 0 | 0 | 0 | 0 |
| eta max Vol. (%) | 2,5 | 2,8 | 0 | 0 | 0 | 0 | 0 | 0 |
| eta sol. T-r (°C) | | 970 | 0 | 0 | 0 | 0 | 0 | 0 |
| Delta sol. T-r (°C) | 1060 | 1014 | 1000 | 960 | 1013 | 1021 | 0 | 0 |
| Delta Vol.(%) bei 600°C | 2 | 4,5 | 4,8 | 2,4 | 6,5 | 8,3 | 0 | 0 |
| sigma sol. T-r (°C) | - | 774 | 747 | 799 | 708 | 642 | 905 | 954 |
| sigma Vol.(%) bei 600°C | - | 8,6 | 6,5 | 10 | 4,3 | 1 | 17 | 21 |

Tabelle 3d-2: Berechnete Phaseneigenschaften der Legierungsanalysen aus Tab. 3c-2.

| Variante | 420420 | 1 | HT1 | HT2 | HT1-a | HT2-a |
|---|---|---|---|---|---|---|
| y'sol. T-r (°C) | 990 | 1016 | 1061 | 1099 | 1063 | 1098 |
| y'Vol. (%) bei 600°C | 26 | 29 | 40 | 48 | 40 | 48 |
| eta sol. T-r (°C) | 1020 | 996 | 0 | 0 | 0 | 0 |
| eta max Vol. (%) | 2,5 | 2,8 | 0 | 0 | 0 | 0 |
| eta sol. T-r (°C) | | 970 | 0 | 0 | 0 | 0 |

(fortgesetzt)

| Variante | 420420 | 1 | HT1 | HT2 | HT1-a | HT2-a |
|---|---|---|---|---|---|---|
| Delta sol. T-r (°C) | 1060 | 1014 | 659 | 0 | 0 | 0 |
| Delta Vol.(%) bei 600°C | 2 | 4,5 | 0,7 | 0 | 0 | 0 |
| sigma sol. T-r (°C) | - | 774 | 852,6 | 933 | 873 | 946 |
| sigma Vol:(%) bei 600°C | - | 8,6 | 13,4 | 19 | 15,8 | 21 |

| Variante | 1 | 8 | 9 | 10 | 11 | 36 | 37 | HT1 | HT2 | HT1-a | HT2-a |
|---|---|---|---|---|---|---|---|---|---|---|---|
| Gamma' [%] | 31 | 28 | 34.9 | 23 | 19 | 38 | 42 | 38 | 46 | 39 | 45 |
| Gamma' [nm] | 24 | 24 | 25 | 23 | 21 | 27 | 27 | 26 | 27 | 27 | 27 |
| Rp0.2 [MPa] | | | | | | | | | | | |
| 650°C | 871 | 856 | 933 | 852 | 796 | 971 | 1027 | 973 | 1022 | 956 | 990 |
| 700°C | 875 | 847 | 938 | 856 | 799 | 962 | 1034 | 979 | 1029 | 970 | 997 |
| 750°C | 848 | 806 | 914 | 828 | 762 | 911 | 999 | 950 | 994 | 940 | 963 |
| 800°C | 690 | 608 | 701 | 580 | 518 | 806 | 914 | 765 | 885 | 833 | 925 |
| 850°C | 474 | 414 | 497 | 402 | 352 | 555 | 645 | 544 | 627 | 578 | 654 |
| 900°C | 328 | 278 | 356 | 275 | 228 | 386 | 470 | 394 | 457 | 412 | 467 |

Tabelle 3d-3:    Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 700°C / 8h für eine Korngröße ASTM 4.5 der Legierungsanalysen aus Tab. 3c-1 und 3c-2

Auch aus den Werten der Tab. 3d-3 ist zu erkennen, dass mit steigenden Al-Gehalten der Anteil an gamma'-Phase anwächst; die Partikelgröße steigt dabei geringfügig. Auch die Streckgrenze Rp0.2 wächst mit steigendem Al-Gehalt der Legierung, d.h. mit steigendem Anteil an gamma'-Phase, an. Darüber hinaus ist auch hier aus dem Verlauf der Werte Rp0.2 in Abhängigkeit der Prüftemperatur zu erkennen, dass bei den Legierungen 36, 37, HT1, HT2, HT1-a und HT2-a, d.h. mit den höheren Al-Gehalten von 3% bis 4%, der bei höheren Prüftemperaturen auftretende steilere Abfall von Rp0.2 in Richtung einer höheren Prüftemperatur um 800°C verschoben ist. Bei den Legierungen mit einem niedrigeren Al-Gehalt ist der steilere Abfall von Rp0.2 bereits bei einer niedrigeren Prüftemperatur um 750°C zu erkennen. In der Tab. 3d-3 sind die Ergebnisdaten für die Ausscheidungswärmebehandlung 700°C / 8h gelistet.

| Variante | 1 | 8 | 9 | 10 | 11 | 36 | 37 | HT1 | HT2 | HT1-a | HT2-a |
|---|---|---|---|---|---|---|---|---|---|---|---|
| Gamma' [%] | 25 | 22 | 29.3 | 17 | 12 | 33 | 42 | 33 | 41 | 33 | 40 |
| Gamma' [nm] | 45 | 45 | 45 | 45 | 45 | 45 | 45 | 44 | 45 | 45 | 46 |
| Rp0.2 [MPa] | | | | | | | | | | | |
| 650°C | 896 | 878 | 987 | 811 | 724 | 1130 | 1197 | 1072 | 1190 | 1048 | 1152 |
| 700°C | 886 | 863 | 975 | 801 | 716 | 1112 | 1204 | 1059 | 1178 | 1036 | 1149 |
| 750°C | 852 | 761 | 874 | 684 | 591 | 1079 | 1188 | 976 | 1160 | 1022 | 1134 |
| 800°C | 643 | 579 | 671 | 524 | 452 | 822 | 927 | 750 | 891 | 796 | 939 |
| 850°C | 502 | 453 | 532 | 414 | 357 | 642 | 740 | 596 | 710 | 622 | 735 |
| 900°C | 348 | 312 | 383 | 280 | 228 | 458 | 553 | 437 | 530 | 453 | 541 |

Tabelle 3d-4:     Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 8h für eine Korngröße ASTM 4.5 der Legierungsanalysen aus Tab. 3c-1 und 3c-2.

Nach der Ausscheidungswärmebehandlung 850°C / 8h sind die Anteile an gamma'-Phase wiederum kleiner als nach der Ausscheidungswärmebehandlung 700°C / 8h und die Ausscheidungspartikel der gamma'-Phase sind größer (die zugehörigen Daten sind in der Tab. 3d-4 gelistet). Der positive Effekt der größeren Partikelgröße auf die Streckgrenze Rp0.2 überwiegt den negativen Effekt des kleineren Phasenanteils. Das Niveau der Werte der Streckgrenze Rp0.2 ist nach der Ausscheidungswärmebehandlung 850°C / 8h deutlich höher als nach der Glühung 700°C / 8h.

Nach einer längeren Glühdauer von 24 h bei der Ausscheidungstemperatur 850°C ist das Niveau der Werte der Streckgrenze Rp0.2 deutlich niedriger als nach der Glühdauer 8 h bei derselben Ausscheidungsglühtemperatur 850°C. Anscheinend ist die größere Partikelgröße der gamma'-Phase hierfür verantwortlich. Diese Ergebnisdaten sind in der Tab. 3d-5 für die Korngrößen ASTM 4.5 gelistet.

| Variante | 1 | 8 | 9 | 10 | 11 | 36 | 37 | HT1 | HT2 | HT1-a | HT2-a |
|---|---|---|---|---|---|---|---|---|---|---|---|
| Gamma' [%] | 25 | 22 | 29.3 | 20 | 12 | 33 | 42 | 33 | 41 | 32 | 40 |
| Gamma' [nm] | 64 | 63 | 62 | 64 | 64 | 62 | 62 | 61 | 62 | 63 | 64 |
| Rp0.2 [MPa] | | | | | | | | | | | |
| 650°C | 807 | 794 | 921 | 731 | 656 | 1029 | 1108 | 971 | 1083 | 948 | 1055 |
| 700°C | 797 | 781 | 909 | 722 | 648 | 1011 | 1095 | 960 | 1070 | 937 | 1042 |
| 750°C | 787 | 734 | 897 | 658 | 568 | 990 | 1080 | 941 | 1055 | 924 | 1028 |
| 800°C | 613 | 553 | 711 | 498 | 430 | 786 | 884 | 715 | 850 | 761 | 899 |
| 850°C | 473 | 428 | 549 | 389 | 335 | 612 | 698 | 561 | 670 | 588 | 695 |
| 900°C | 324 | 291 | 357 | 259 | 212 | 442 | 516 | 407 | 494 | 423 | 506 |

Tabelle 3d-5: Berechnete Anteile und Partikelgrößen der Ausscheidungsphase gamma' und Werte der mechanischen Streckgrenze Rp0.2 in Abhängigkeit der Prüftemperaturen von 650°C bis 900°C nach einer Ausscheidungswärmebehandlung von 850°C / 24h für eine Korngröße ASTM 4.5 der Legierungsanalysen aus Tab. 3c-1 und 3c-2.

Die berechneten gamma'-solvus-Temperaturen der Legierungsanalysen aus Tabellen 3a bis 3d sind im Diagramm 3 in Abhängigkeit der Al-Gehalte aufgetragen.

Diagramm 3: Berechnete γ´-solvus-Temperaturen der Legierungs-analysen aus den Tabellen 3a bis 3d in Abhängigkeit von den Al-Gehalten

Hieraus ist zu erkennen, dass die γ'-solvus-Temperatur ausgehend von 1009°C im Fall der Referenzlegierung der Charge 420420 mit 2,16 % Al auf 1105°C erhöht werden kann, wenn der Al-Gehalt auf 4.0 % Al erhöht wird.

**AL-VARIATION**

Diagramm 4: Berechnete gamma´-Anteile bei 600°C (in Gew.-%) der Legierungsanalysen aus den Tabellen 3a bis 3d in Abhängigkeit von den Al-Gehalten.

Hieraus ist zu erkennen, dass der gamma'-Anteil bei 600°C ausgehend von 25,3 % im Fall der Referenzlegierung der Charge 420420 mit 2,16 % Al auf etwa 47.7 % erhöht werden kann, wenn der Al-Gehalt auf 4.0 % Al (siehe Diagramm 4) erhöht wird.

Aus den Tabellen 3a bis 3d ist erkennbar, dass mit Erhöhung des Al-Gehaltes die y'-Phase stabilisiert wird: sowohl die Solvus-Temperatur bis zu 1106°C als auch Volumenanteile können bis zu 50% erhöht werden. Es ist außerdem zu entnehmen, dass Al bei höheren Gehalten die Delta-Phase destabilisieren kann. Bei gleichzeitig hohen Co- und Nb-Gehalten in Kombination mit moderaten Al-Gehalten wird die Delta-Phase massiv stabilisiert. Als Beispiel kann Legierung 19 im Vergleich zu alloy 939 betrachtet werden. Alloy 939 weist die y'-solvus Temperatur bei 1110°C mit max. y'-Volumenanteil bei ca. 39,5% auf. Die sigma-Phase scheidet sich bei 870°C mit dem Volumenanteil von 15% bei 600°C aus. Die günstige Kombination der Legierungszusammensetzung von Legierung 19 erlaubt die y'-solvus Temperatur bis zu 1067°C bei leicht erhöhtem Volumenanteil mit 41% zu realisieren. Die Reduzierung der Solvus-Temperatur der y'-Phase verbessert die Prozessierbarkeit der Legierung enorm, außerdem wird die Rissneigung merkbar geringer bei mindestens gleichbleibenden mechanischen Eigenschaften. Aufgrund von niedrigem Ti-Gehalt zeigt außerdem Legierung 19 bessere Oxidationsbeständigkeit wie alloy 939.

In Legierung 19 erhöht sich die sigma-solvus Temperatur um_11°C mit 1% Erhöhung des Volumenanteils auf Basis von hohen Co- und Cr-Gehalten im Vergleich zu alloy 939. Generell weist die sigma-Phase auf Grund der Inkohärenz eine sehr langsame Ausscheidungskinetik auf, sodass in der Referenz-Legierung 420420 auch nach Hochtemperatur-Auslagerungsversuchen über 2000h bei 800°C diese Phase nicht vorhanden war. Legierung 1, die in vorliegender Arbeit eine nahezu identische Zusammensetzung aufweist, zeigt die sigma-Phase ihre solvus Temperatur bei 774°C mit dem Volumenanteil von 8,6% bei 600°C. Verschiebt sich der thermodynamische Stabilitätsbereich der sigma-Phase zu höheren Temperaturen, können ggfls. Gegenmaßnahmen wie angepasste Wärmebehandlungen notwendig sein.

In der Tab. 3d-6 sind drei ausgewählte chemische Zusammensetzungen gelistet, die als Laborschmelzen erzeugt wurden. Die mit LB 250756 gekennzeichnete Analyse enthält 2,1 % Al. Die beiden weiteren Analysen LB 250757 und LB 250760 enthalten etwa 3 % bzw. 3,8 % Al.

Tabelle 3d-6: Analysen der Legierungen LB 250756, LB 250757 und LB 250760

| Variante | LB 250756 | LB 250757 | LB. 250760 |
|---|---|---|---|
| C | 0.022 | 0.020 | 0.019 |
| S | 0.0016 | 0.0010 | 0.0014 |
| N | 0.003 | 0.003 | 0.003 |
| Cr | 18.15 | 18.08 | 17.90 |
| Ni | 45.86 | 45.12 | 44.54 |
| Mn | <0.01 | <0.01 | 0.018 |
| Si | 0.07 | 0.03 | 0.01 |
| Mo | 2.97 | 2.95 | 2.96 |
| Ti | 0.27 | 0.31 | 0.31 |
| Nb | 5.44 | 5.37 | 5.39 |
| Ta | | | |
| Cu | <0.01 | <0.01 | <0.01 |
| Fe | 0.09 | 0.11 | 0.10 |
| P | 0.01 | 0.013 | 0.013 |
| Al | 2.10 | 2.99 | 3.78 |
| Mg | 0.0005 | 0.0005 | 0.0005 |
| Ca | | | |
| V | <0.01 | <0.01 | <0.01 |
| Zr | <0.01 | <0.01 | <0.01 |
| W | <0.01 | 0.01 | 0.01 |
| Co | 24.95 | 24.94 | 24.91 |
| Hf | 0 | 0 | 0 |
| B | 0.005 | 0.004 | 0.004 |
| O | 0.002 | 0.002 | 0.002 |

In den Tabellen 3d-7 bis 3d-18 sind die für diese Analysen berechneten Werte des Anteils und der Partikelgröße der gamma'-Phase sowie der prüftemperaturabhängigen Streckgrenze Rp0.2 nach den Ausscheidungswärmebehandlungen 650°C/8h, 700°C/8, 750°C/8h, 800°C/8h, 850°C/8h und 900°C/8h für die Korngrößen ASTM 4.5 und ASTM 12 gelistet. Bei einigen Ausscheidungsglühtemperaturen sind die Ergebnisse für die beiden zusätzlichen Glühdauern 16h und 24h ergänzt.

| Variante | Aushärtetemperatur 650 °C/8h | | |
|---|---|---|---|
| | LB 250756 | LB 250757 | LB 250760 |
| Gamma' [%] | 27 | 39 | 46 |
| Gamma' [nm] | 24 | 26 | 27 |
| Rp0.2 [Mpa] | | | |
| 650°C | 880 | 975 | 1026 |
| 700°C | 861 | 951 | 995 |
| 750°C | 835 | 921 | 962 |
| 800°C | 680 | 839 | 924 |
| 850°C | 465 | 579 | 794 |
| 900°C | 319 | 410 | 469 |

Tabelle 3d-7: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 650°C / 8h für eine Korngröße ASTM 4.5 der Legierungsanalysen aus Tab. 3d-6.

| Variante | Aushärtetemperatur 700 °C/8h | | |
|---|---|---|---|
| | LB 250756 | LB 250757 | LB 250760 |
| Gamma' [%] | 31 | 38 | 45 |
| Gamma' [nm] | 23 | 26 | 27 |
| RpO.2 [Mpa] | | | |
| 650°C | 844 | 949 | 993 |
| 700°C | 848 | 955 | 1000 |
| 750°C | 823 | 925 | 967 |
| 800°C | 677 | 840 | 929 |
| 850°C | 462 | 580 | 795 |
| 900°C | 317 | 411 | 471 |

Tabelle 3d-8: Berechnete Anteile und Partikelgrößen der Ausscheidungsphase gamma' und Werte der mechanischen Streckgrenze Rp0.2 in Abhängigkeit der Prüftemperaturen von 650°C bis 900°C nach einer Ausscheidungswärmebehandlung von 700°C / 8h für eine Korngröße ASTM 4.5 der Legierungsanalysen aus Tab. 3d-6.

| Variante | Aushärtetemperatur 750 °C/8h | | |
|---|---|---|---|
| | LB 250756 | LB 250757 | LB 250760 |
| Gamma' [%] | 29 | 37 | 44 |
| Gamma' [nm] | 24 | 27 | 28 |
| Rp0.2 [Mpa] | | | |
| 650°C | 840 | 940 | 980 |
| 700°C | 844 | 945 | 987 |
| 750°C | 845 | 947 | 990 |
| 800°C | 684 | 847 | 950 |
| 850°C | 468 | 587 | 803 |
| 900°C | 321 | 417 | 477 |

Tabelle 3d-9: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 750°C / 8h für eine Korngröße ASTM 4.5 der Legierungsanalysen aus Tab. 3d-6.

| Aushärtetemperatur 800°C | | | | |
|---|---|---|---|---|
| | 8h | | | 16h | 24h |
| Variante | LB 250756 | LB 250757 | LB 250760 | LB 250756 | LB 250756 |
| Gamma' [%] | 27 | 36 | 42 | 23 | 23 |
| Gamma' [nm] | 30 | 31 | 32 | 35 | 39 |
| Rp0.2 [Mpa] | | | | | |
| 650°C | 898 | 974 | 1015 | 959 | 983 |
| 700°C | 902 | 979 | 1022 | 963 | 971 |
| 750°C | 902 | 980 | 1024 | 963 | 959 |
| 800°C | 715 | 872 | 1022 | 735 | 730 |
| 850°C | 495 | 609 | 829 | 513 | 505 |
| 900°C | 343 | 436 | 500 | 356 | 349 |

Tabelle 3d-10:   Berechnete Anteile und Partikelgrößen der Ausscheidungsphase gamma' und Werte der mechanischen Streckgrenze Rp0.2 in Abhängigkeit der Prüftemperaturen von 650°C bis 900°C nach einer Ausscheidungswärmebehandlung von 800°C / 8h bzw. 16h und 24h für eine Korngröße ASTM 4.5 der Legierungsanalysen aus Tab. 3d-6.

# EP 3 994 288 B1

| | Aushärtetemperatur | | | | | | |
|---|---|---|---|---|---|---|---|
| | 850 °C/8h | | | 16h | 24h | 16h | 24h |
| Variante | LB 250756 | LB 250757 | LB 250760 | LB 250757 | LB 250757 | LB 250760 | LB 250760 |
| Gamma' [%] | 24 | 33 | 32 | 33 | 31 | 40 | 40 |
| Gamma' [nm] | 45 | 45 | 46 | 55 | 62 | 56 | 64 |
| Rp0.2 [Mpa] | | | | | | | |
| 650°C | 875 | 1056 | 1167 | 995 | 959 | 1104 | 1060 |
| 700°C | 865 | 1044 | 1156 | 983 | 948 | 1091 | 1048 |
| 750°C | 835 | 1030 | 1141 | 970 | 935 | 1077 | 1033 |
| 800°C | 630 | 814 | 1123 | 793 | 780 | 1060 | 1017 |
| 850°C | 490 | 634 | 880 | 613 | 601 | 856 | 839 |
| 900°C | 336 | 456 | 544 | 438 | 427 | 522 | 508 |

Tabelle 3d-11: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 8h bzw. 16h und 24h für eine Korngröße ASTM 4.5 der Legierungsanalysen aus Tab. 3d-6.

| Variante | Aushärtetemperatur 900 °C/8h | | |
|---|---|---|---|
| | LB 250756 | LB 250757 | LB 250760 |
| Gamma' [%] | 19 | 28 | 37 |
| Gamma' [nm] | 73 | 72 | 74 |
| Rp0.2 [Mpa] | | | |
| 650°C | 677 | 854 | 959 |
| 700°C | 696 | 844 | 948 |
| 750°C | 660 | 832 | 935 |
| 800°C | 492 | 667 | 788 |
| 850°C | 378 | 514 | 610 |
| 900°C | 300 | 411 | 490 |

Tabelle 3d-12: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 900°C / 8h für eine Korngröße ASTM 4.5 der Legierungsanalysen aus Tab. 3d-6.

| Variante | Aushärtetemperatur 650 °C/8h | | |
|---|---|---|---|
| | LB 250756 | LB 250757 | LB 250760 |
| Gamma' [%] | 32 | 39 | 46 |
| Gamma' [nm] | 24 | 26 | 27 |
| Rp0.2 [Mpa] | | | |
| 650°C | 928 | 1023 | 1074 |
| 700°C | 909 | 999 | 1042 |
| 750°C | 883 | 969 | 1009 |
| 800°C | 680 | 839 | 971 |
| 850°C | 465 | 579 | 793 |
| 900°C | 319 | 410 | 469 |

Tabelle 3d-13: Berechnete Anteile und Partikelgrößen der Ausscheidungsphase gamma' und Werte der mechanischen Streckgrenze Rp0.2 in Abhängigkeit der Prüftemperaturen von 650°C bis 900°C nach einer Ausscheidungswärmebehandlung von 650°C / 8h für eine Korngröße ASTM 12 der Legierungsanalysen aus Tab. 3d-6.

| Variante | Aushärtetemperatur 700 °C/8h | | |
|---|---|---|---|
| | LB 250756 | LB 250757 | LB 250760 |
| Gamma' [%] | 31 | 38 | 45 |
| Gamma' [nm] | 23 | 26 | 27 |
| Rp0.2 [Mpa] | | | |
| 650°C | 893 | 997 | 1041 |
| 700°C | 897 | 1002 | 1048 |
| 750°C | 871 | 973 | 1015 |
| 800°C | 677 | 840 | 976 |
| 850°C | 462 | 580 | 795 |
| 900°C | 317 | 411 | 471 |

Tabelle 3d-14: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 700°C / 8h für eine Korngröße ASTM 12 der Legierungsanalysen aus Tab. 3d-6.

| Variante | Aushärtetemperatur 750 °C/8h | | |
| --- | --- | --- | --- |
| | LB 250756 | LB 250757 | LB 250760 |
| Gamma' [%] | 29 | 37 | 44 |
| Gamma' [nm] | 24 | 27 | 28 |
| RpO.2 [Mpa] | | | |
| 650°C | 888 | 988 | 1028 |
| 700°C | 892 | 993 | 1035 |
| 750°C | 892 | 995 | 1037 |
| 800°C | 684 | 847 | 997 |
| 850°C | 468 | 587 | 803 |
| 900°C | 322 | 417 | 477 |

Tabelle 3d-15:   Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 750°C / 8h für eine Korngröße ASTM 12 der Legierungsanalysen aus Tab. 3d-6.

| Aushärtetemperatur | 800°C 8h | | | 16h | 24h |
|---|---|---|---|---|---|
| Variante | LB 250756 | LB 250757 | LB 250760 | LB 250756 | LB 250756 |
| Gamma' [%] | 27 | 36 | 42 | 27 | 23 |
| Gamma' [nm] | 30 | 31 | 32 | 35 | 39 |
| Rp0.2 [Mpa] | | | | | |
| 650°C | 947 | 1021 | 1063 | 1007 | 1031 |
| 700°C | 950 | 1027 | 1069 | 1011 | 1020 |
| 750°C | 950 | 1028 | 1071 | 973 | 971 |
| 800°C | 715 | 872 | 1069 | 735 | 730 |
| 850°C | 495 | 609 | 828 | 513 | 505 |
| 900°C | 343 | 436 | 500 | 356 | 349 |

Tabelle 3d-16: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 800°C / 8h bzw. 16h und 24h für eine Korngröße ASTM 12 der Legierungsanalysen aus Tab. 3d-6.

| Aushärtetemperatur | 850°C/8h | | | 16h | 24h | 16h | 24h |
|---|---|---|---|---|---|---|---|
| Variante | LB 250756 | LB 250757 | LB 250760 | LB 250757 | LB 250757 | LB 250760 | LB 250760 |
| Gamma' [%] | 24 | 33 | 40 | 33 | 31 | 40 | 32 |
| Gamma' [nm] | 45 | 45 | 46 | 55 | 62 | 56 | 64 |
| Rp0.2 [Mpa] | | | | | | | |
| 650°C | 924 | 1104 | 1214 | 1043 | 1007 | 1152 | 1108 |
| 700°C | 913 | 1091 | 1203 | 1031 | 995 | 1139 | 1095 |
| 750°C | 835 | 1077 | 1188 | 1017 | 982 | 1124 | 1080 |
| 800°C | 630 | 814 | 1155 | 793 | 780 | 1107 | 1064 |
| 850°C | 490 | 634 | 880 | 613 | 601 | 856 | 839 |
| 900°C | 363 | 456 | 544 | 438 | 427 | 522 | 508 |

Tabelle 3d-17: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 8h bzw. 16h und 24h für eine Korngröße ASTM 12 der Legierungsanalysen aus Tab. 3d-6.

| Variante | Aushärtetemperatur 900 °C/8h | | |
|---|---|---|---|
| | LB 250756 | LB 250757 | LB 250760 |
| Gamma' [%] | 19 | 30 | 37 |
| Gamma' [nm] | 73 | 72 | 74 |
| Rp0.2 [Mpa] | | | |
| 650°C | 725 | 902 | 1007 |
| 700°C | 717 | 891 | 995 |
| 750°C | 661 | 880 | 982 |
| 800°C | 492 | 667 | 788 |
| 850°C | 378 | 514 | 610 |
| 900°C | 300 | 411 | 490 |

Tabelle 3d-18: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 900°C / 8h für eine Korngröße ASTM 12 der Legierungsanalysen aus Tab. 3d-6.

Aus den Tabellen ist zu entnehmen, dass die Streckgrenze Rp0.2 umso größer ist je höher der Al-Gehalt der Legierungsanalyse ist. Darüber hinaus verschiebt sich der stärkere Abfall der Streckgrenze Rp0.2 zu einer umso höheren Prüftemperatur je höher der Al-Gehalt ist. Diese Effekte stehen einerseits mit dem höheren Anteil der gamma'-Phase mit steigendem Al-Gehalt in Zusammenhang (bei optimierter Partikelgröße der gamma'-Phase) und andererseits mit der höheren Solvus-Temperatur der gamma'-Phase mit ansteigendem Al-Gehalt.

Bei der Legierung LB 250756, die 2,1 % Al enthält, liegt bei den betrachteten Ausscheidungstemperaturen das Maximum der Streckgrenze Rp0.2 bei der Ausscheidungsglühtemperatur 800°C (im Vergleich der Glühdauer 8h betrachtet).

Bei den beiden anderen Legierungen LB 250757 und LB 250760, die 3% bzw. 3,8% Al enthalten, liegt das Maximum der Streckgrenze Rp0.2 bei der Ausscheidungsglühtemperatur 850°C. Bei der hier zusätzlich betrachteten Ausscheidungsglühtemperatur 900°C sind die Werte der Streckgrenze Rp0.2 niedriger; d.h. hiermit ist die für höchste Werte der Streckgrenze Rp0.2 optimale Ausscheidungsglühtemperatur überschritten (für andere mechanische Eigenschaften könnte dennoch auch eine Ausscheidungsglühtemperatur oberhalb von 850°C günstig und sinnvoll sein).

Im Vergleich der betrachteten Korngrößen ist den Tabellen zu entnehmen, dass bei der kleineren Korngröße ASTM 12 deutlich größere Werte der Streckgrenze Rp0.2 vorliegen als bei der gröberen Korngröße ASTM 4.5.

Im Fall der Legierung LB 250756, die 2,1% Al enthält und bei der das Maximum der Streckgrenze Rp0.2 nach der betrachteten Ausscheidungsglühtemperatur 8h auftritt, ist zu erkennen, dass bei den längeren Glühdauern 16h und 24h die Werte der Streckgrenze Rp0.2 ansteigen (s. Tabellen 3d-10 und 3d-16). Dagegen fallen die Werte der Streckgrenzen Rp0.2 mit längerer Glühdauer 16h und 24h bei der betrachteten Ausscheidungsglühtemperatur 850°C im Fall der beiden Legierungen LB 250757 und LB 250760.

Es werden Legierungen mit einem maximalen Al-Gehalt von 4% betrachtet. Bei Legierungen mit einem Al-Gehalt von größer 4% steigt das Risiko so stark an, dass das Schweiß- und das Erstarrungsverhalten so negativ beeinflusst wird, dass sowohl die Prozesse der additiven Druckverfahren und auch der nachträglichen Wärmebehandlungen zu erheblichen Fehlstellen, d.h. Rissen, im Gefüge führen können.

Diagramm 4a: Berechnete Werte der mechanischen Streckgrenze Rp0.2 in Abhängigkeit der Aushärtetemperaturen von 650°C bis 900°C nach 8h bei einer Prüftemperatur von 750°C für eine Korngröße ASTM 4.5 der Legierungsanalysen aus Tab. 3d-6.

Das Diagramm 4a zeigt, dass sich das Maximum der zu erreichenden Streckgrenze Rp0.2 mit steigendem Al-Gehalt zu höheren Aushärtetemperaturen verschiebt. Während bei einem Al-Gehalt von 2,1 % (LB 250256) bei einer Aushärtetemperatur von 800 °C die höchste Streckgrenze Rp0.2 erreicht wird, sorgt bei einem Al-Gehalt von 3 % und 3,8 % eine Aushärtetemperatur von 850 °C für den höchsten Wert bei den hier betrachteten Temperaturen. Bei einer Temperatur von 900 °C sinken die Werte der Streckgrenze Rp0.2 bei allen drei Zusammensetzungen wieder. Es ist aber nicht auszuschließen, dass eine Temperatur zwischen 850 und 900 °C bei den höheren Al-Gehalten (3 % und 3,8 %) einen weiteren Anstieg der Streckgrenze Rp0.2 bewirkt.

In der Tab. 3d-19 sind chemische Zusammensetzungen der LB 250756 im Vergleich der P10231 gelistet, die sehr ähnliche Analysengehalte aufweisen.

Tabelle 3d-19: Analysen der Legierungen LB 250756 und P10231.

| Variante | LB 250756 | P10231 |
|---|---|---|
| C | 0.022 | 0.024 |
| S | 0.0016 | 0.0029 |
| N | 0.003 | 0.004 |
| Cr | 18.15 | 17.7 |
| Ni | 45.86 | 46.49 |
| Mn | <0.01 | <0.01 |
| Si | 0.07 | 0.01 |
| Mo | 2.97 | 2.96 |
| Ti | 0.27 | 0.29 |

(fortgesetzt)

| Variante | LB 250756 | P10231 |
|---|---|---|
| Nb | 5.44 | 5.42 |
| Ta | | 0.008 |
| Cu | <0.01 | <0.01 |
| Fe | 0.09 | 0.08 |
| P | 0.01 | 0.012 |
| Al | 2.10 | 2.14 |
| Mg | 0.0005 | <0.001 |
| Ca | | 0.0002 |
| V | <0.01 | <0.01 |
| Zr | <0.01 | <0.01 |
| W | <0.01 | <0.01 |
| Co | 24.95 | 24.79 |
| Hf | 0 | |
| B | 0.005 | 0.003 |
| O | 0.002 | 0.012 |

Wie bereits zuvor beschrieben wurden für die Analyse LB 250756 prüftemperaturabhängige Werte der Streckgrenze berechnet. Auszüge aus der Tab. 3d-6 bei Prüftemperaturen 650°C und 700°C für die Ausscheidungswärmebehandlungen 800°C/8h und 650°C/8h sind in Tab. 3d-20 gelistet. An gedruckten Proben (in den drei Raumorientierungen 45°, 90° und 180°C) aus P10231 wurden Warmzugversuche bei 650°C und 700°C durchgeführt und somit Werte der Streckgrenze Rp0.2 gemessen. Vor den Warmzugversuchen wurden die gedruckten Proben einer zweistufigen Ausscheidungswärmebehandlung 800°C/8h + 650°C/8h unterzogen. Auch bei der gewählten Lösungsglühung der Proben aus P10231 weist das Gefüge eine Korngröße von etwa ASTM 4.5 auf. Die gemessenen Rp0.2-Werte sind für P10231 in Tab. 3d-20 zum Vergleich gelistet.

Die berechneten Werte der Streckgrenzen Rp0.2 der LB 250756 liegen auf einem sehr ähnlichen Niveau wie die gemessenen Rp0.2-Werte der P10231.

| | 800°C 8h | 650°C 8h | | Druckorientierung | Rp0.2 [MPa] |
|---|---|---|---|---|---|
| Variante Rp0.2 [Mpa] | LB 250756 | LB 250756 | | P10231 | P10231 |
| 650°C | 898 | 880 | | 45°<br>90°<br>180° | 890<br>868<br>895 |
| 700°C | 902 | 861 | | 45°<br>90°<br>180° | 881<br>840<br>879 |

Tab. 3d-20: Berechnete Werte der Streckgrenze Rp0.2 für die Analyse LB 250756 der Tab. 3d-6 bei Prüftemperaturen 650°C und 700°C für die Ausscheidungswärmebehandlungen 800°C/8h und 650°C/8h (Auszüge aus Tabellen 3d-10 und 3d-7) im Vergleich zu gemessene Werte der Streckgrenze Rp0.2 an gedruckten Proben aus P10231 der Analyse aus Tab. 3d-19, bei denen eine zweistufige Ausscheidungs-wärmebehandlung 800°C/8h + 650°C/8h durchgeführt wurde. Auch bei der gewählten Lösungsglühung der Proben aus P10231 weist das Gefüge eine Korngröße von etwa ASTM 4.5 auf.

Die Tabellen 4a bis 11c-3 enthalten berechnete Eigenschaften der Phasen und mechanischer Streckgrenzen von weiteren ausgewählten Legierungen.

Tabelle 4a: Ausgewählte Legierungsanalysen mit Variation von Cr-, Ni- und Co-Gehalten.

| Variante | 420420 | 1 | 2 | 3 | 4 |
|---|---|---|---|---|---|
| C | 0.021 | 0.021 | 0.021 | 0.021 | 0.021 |
| S | 0.0005 | 0.0005 | 0.0005 | 0.0005 | 0.0005 |
| N | 0.008 | 0.008 | 0.008 | 0.008 | 0.008 |
| Cr | 17.75 | 18 | 16 | 20 | 20 |
| Ni | 45.96 | 46.018 | 48.018 | 44.018 | 46.018 |
| Mn | 0.018 | 0.018 | 0.018 | 0.018 | 0.018 |
| Si | 0.065 | 0.065 | 0.065 | 0.065 | 0.065 |
| Mo | 2.94 | 3 | 3 | 3 | 3 |
| Ti | 0.31 | 0.3 | 0.3 | 0.3 | 0.3 |
| Nb | 5.41 | 5.4 | 5.4 | 5.4 | 5.4 |
| Ta | 0.01 | 0.01 | 0.01 | 0.01 | 0.01 |
| Cu | 0.01 | 0.01 | 0.01 | 0.01 | 0.01 |
| Fe | 0.67 | 0.43 | 0.43 | 0.43 | 0.43 |
| P | 0.011 | 0.011 | 0.011 | 0.011 | 0.011 |

(fortgesetzt)

| Variante | 420420 | 1 | 2 | 3 | 4 |
|---|---|---|---|---|---|
| Al | 2.16 | 2.2 | 2.2 | 2.2 | 2.2 |
| Mg | 0.0008 | 0.0008 | 0.0008 | 0.0008 | 0.0008 |
| Ca | 0.0004 | 0.004 | 0.004 | 0.004 | 0.004 |
| V | 0.002 | 0.002 | 0.002 | 0.002 | 0.002 |
| Zr | 0.002 | 0.002 | 0.002 | 0.002 | 0.002 |
| W | 0.02 | 0.02 | 0.02 | 0.02 | 0.02 |
| Co | 24.63 | 24.5 | 24.5 | 24.5 | 22.5 |
| Hf | 0 | 0 | 0 | 0 | 0 |
| B | 0.004 | 0.004 | 0.004 | 0.004 | 0.004 |
| O | 0.002 | 0.002 | 0.002 | 0.002 | 0.002 |

Tabelle 4b: Berechnete Eigenschaften der Phasen und Legierungen aus Tab. 4a.

| Variante | 420420 | 1 | 2 | 3 | 4 |
|---|---|---|---|---|---|
| y'sol. T-r (°C) | 990 | 1016 | 1008 | 1010 | 1022 |
| y' Vol. (%) bei 600°C | 26 | 29 | 28 | 29 | 29 |
| eta sol. T-r (°C) | 1020 | 996 | 1005 | 1032 | 0 |
| eta max Vol. (%) | 2,5 | 2,8 | 0,8 | 3,4 | 0 |
| eta sol. T-r (°C) | | 970 | 985 | 958 | 0 |
| Delta sol. T-r (°C) | 1060 | 1014 | 988 | 1119 | 1022 |
| Delta Vol.(%) bei 600°C | 2 | 4,5 | 4,5 | 4,5 | 4,8 |
| sigma sol. T-r (°C) | - | 774 | 0 | 865 | 853 |
| sigma Vol.(%) bei 600°C | - | 8,6 | 0 | 16 | 15 |

Es ist aus den Tabellen zu erkennen, dass zwischen 16 und 20% Cr mit steigendem Cr-Gehalt sowohl die gamma'-solvus-Temperatur als auch der gamma'-Anteil bei 600°C leicht ansteigt. Dazu ist auch zu vermerken, dass die Reduzierung des Cr-Gehaltes die sigma-Phase destabilisiert (siehe Tab.4b Legierung 2)

Eine weitere für die Anwendung wichtige Auswirkung des Cr-Gehalts ist die Verbesserung der Hochtemperaturoxidationsbeständigkeit dieser Legierungen. In experimentell durchgeführten Oxidationsversuchen bei 800°C und 900°C zeigte die Legierungsanalyse der Referenzcharge 420420 mit 17,75 % Cr einen um etwa den Faktor 10 geringeren Massenzuwachs gegenüber der Legierung Alloy 720 LI, die etwa 16% Cr beinhaltet. Mit einem Cr-Gehalt von 20% könnte die Oxidationsbeständigkeit der neuen Legierungen auf Basis Alloy 780 noch weiter gesteigert werden.

In den Tabellen 4c-1 bis 4c-3 sind die berechneten Werte der Anteile und Partikelgrößen der gamma'-Phase sowie die prüftemperaturabhängigen Werte der Streckgrenze Rp0.2 der Legierungen aus Tab. 4a für die Ausscheidungswärmebehandlungen 700°C/8h, 850°C/8h und 850°C/24h für die Korngröße ASTM 4.5 gelistet.

| Variante | 1 | 2 | 3 | 4 |
|---|---|---|---|---|
| Gamma' [%] | 31 | 31 | 32 | 28 |
| Gamma' [nm] | 24 | 24 | 24 | 24 |
| Rp0.2 [MPa] | | | | |

| | 1 | 2 | 3 | 4 |
|---|---|---|---|---|
| 650°C | 871 | 870 | 870 | 880 |
| 700°C | 875 | 874 | 875 | 884 |
| 750°C | 848 | 847 | 847 | 857 |
| 800°C | 690 | 635 | 753 | 722 |
| 850°C | 474 | 439 | 511 | 496 |
| 900°C | 328 | 304 | 352 | 345 |

Tabelle 4c-1: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 700°C / 8h für eine Korngröße ASTM 4.5 der Legierungsanalysen aus Tab. 4a.

| Variante | 1 | 2 | 3 | 4 |
|---|---|---|---|---|
| Gamma' [%] | 25 | 23 | 26 | 26 |
| Gamma' [nm] | 45 | 46 | 44 | 44 |
| Rp0.2 [MPa] | | | | |
| 650°C | 896 | 861 | 920 | 920 |
| 700°C | 886 | 851 | 909 | 909 |
| 750°C | 852 | 763 | 897 | 897 |
| 800°C | 643 | 582 | 706 | 678 |
| 850°C | 502 | 458 | 544 | 527 |
| 900°C | 348 | 315 | 380 | 370 |

Tabelle 4c-2: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 8h für eine Korngröße ASTM 4.5 der Legierungsanalysen aus Tab. 4a.

| Variante | 1 | 2 | 3 | 4 |
|---|---|---|---|---|
| Gamma' [%] | 25 | 23 | 22 | 26 |
| Gamma' [nm] | 64 | 66 | 62 | 62 |
| Rp0.2 [MPa] | | | | |
| 650°C | 807 | 773 | 831 | 831 |
| 700°C | 797 | 763 | 822 | 821 |
| 750°C | 787 | 734 | 811 | 810 |
| 800°C | 613 | 553 | 676 | 649 |
| 850°C | 472 | 430 | 516 | 498 |
| 900°C | 324 | 292 | 355 | 345 |

Tabelle 4c-3: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 24h für eine Korngröße ASTM 4.5 der Legierungsanalysen aus Tab. 4a.

Aus den Tabellen 4c-1 bis 4c-3 kann entnommen werden, dass die beiden Legierungen 3 und 4, die mit 20% einen gegenüber den beiden Legierungen 1 und 2 höheren Cr-Gehalt enthalten, höhere Werte der Streckgrenzen Rp0.2 erreichen.

Tabelle 5a: Ausgewählte Legierungsanalysen mit Variation von Ni- und Co-Gehalten

| Variante | 420420 | 1 | 5 | 6 | 7 | 8 | 16 |
|---|---|---|---|---|---|---|---|
| C | 0.021 | 0.021 | 0.021 | 0.021 | 0.021 | 0.021 | 0.021 |
| S | 0.0005 | 0.0005 | 0.0005 | 0.0005 | 0.0005 | 0.0005 | 0.0005 |
| N | 0.008 | 0.008 | 0.008 | 0.008 | 0.008 | 0.008 | 0.008 |
| Cr | 17.75 | 18 | 18 | 18 | 18 | 18 | 18 |
| Ni | 45.96 | 46.018 | 48.018 | 55.518 | 53.018 | 50.518 | 43.018 |
| Mn | 0.018 | 0.018 | 0.018 | 0.018 | 0.018 | 0.018 | 0.018 |
| Si | 0.065 | 0.065 | 0.065 | 0.065 | 0.065 | 0.065 | 0.065 |
| Mo | 2.94 | 3 | 3 | 3 | 3 | 3 | 3 |
| Ti | 0.31 | 0.3 | 0.3 | 0.3 | 0.3 | 0.3 | 0.3 |
| Nb | 5.41 | 5.4 | 5.4 | 5.4 | 5.4 | 5.4 | 5.4 |
| Ta | 0.01 | 0.01 | 0.01 | 0.01 | 0.01 | 0.01 | 0.01 |
| Cu | 0.01 | 0.01 | 0.01 | 0.01 | 0.01 | 0.01 | 0.01 |
| Fe | 0.67 | 0.43 | 0.43 | 0.43 | 0.43 | 0.43 | 0.43 |
| P | 0.011 | 0.011 | 0.011 | 0.011 | 0.011 | 0.011 | 0.011 |
| Al | 2.16 | 2.2 | 2.2 | 2.2 | 2.2 | 2.2 | 2.2 |

(fortgesetzt)

| Variante | 420420 | 1 | 5 | 6 | 7 | 8 | 16 |
|---|---|---|---|---|---|---|---|
| Mg | 0.0008 | 0.0008 | 0.0008 | 0.0008 | 0.0008 | 0.0008 | 0.0008 |
| Ca | 0.0004 | 0.004 | 0.004 | 0.004 | 0.004 | 0.004 | 0.004 |
| V | 0.002 | 0.002 | 0.002 | 0.002 | 0.002 | 0.002 | 0.002 |
| Zr | 0.002 | 0.002 | 0.002 | 0.002 | 0.002 | 0.002 | 0.002 |
| W | 0.02 | 0.02 | 0.02 | 0.02 | 0.02 | 0.02 | 0.02 |
| Co | 24.63 | 24.5 | 22.5 | 15 | 17.5 | 20 | 27.5 |
| Hf | 0 | 0 | 0 | 0 | 0 | 0 | 0 |
| B | 0.004 | 0.004 | 0.004 | 0.004 | 0.004 | 0.004 | 0.004 |
| O | 0.002 | 0.002 | 0.002 | 0.002 | 0.002 | 0.002 | 0.002 |

Tabelle 5b: Berechnete Eigenschaften der Phasen und Legierungen aus Tab. 5a.

| Variante | 420420 | 1 | 5 | 6 | 7 | 8 | 16 |
|---|---|---|---|---|---|---|---|
| y'sol. T-r (°C) | 990 | 1016 | 1015 | 1005 | 1010 | 1013 | 944 |
| y' Vol. (%) bei 600°C | 26 | 29 | 29 | 29 | 29 | 29 | 29 |
| eta sol. T-r (°C) | 1020 | 996 | 0 | 0 | 0 | 0 | 1048 |
| eta max Vol. (%) | 2,5 | 2,8 | 0 | 0 | 0 | 0 | 14,5 |
| eta sol. T-r (°C) | | 970 | 0 | 0 | 0 | 0 | 770 |
| Delta sol. T-r (°C) | 1060 | 1014 | 1007 | 985 | 992 | 1000 | 932 |
| Delta Vol.(%) bei 600°C | 2 | 4,5 | 4,6 | 4,8 | 5 | 4,8 | 3,8 |
| sigma sol. T-r (°C) | - | 774 | 763 | 705 | 720 | 747 | 788 |
| sigma Vol.(%) bei 600°C | - | 8,6 | 7,7 | 4,8 | 6,2 | 6,5 | 10 |

Tabelle 5b: Berechnete Eigenschaften der Phasen und Legierungen aus Tab. 5a.

| Variante | 420420 | 1 | 5 | 6 | 7 | 8 | 16 |
|---|---|---|---|---|---|---|---|
| y'sol. T-r (°C) | 990 | 1016 | 1015 | 1005 | 1010 | 1013 | 944 |
| y' Vol. (%) bei 600°C | 26 | 29 | 29 | 29 | 29 | 29 | 29 |
| eta sol. T-r (°C) | 1020 | 996 | 0 | 0 | 0 | 0 | 1048 |
| eta max Vol. (%) | 2,5 | 2,8 | 0 | 0 | 0 | 0 | 14,5 |
| eta sol. T-r (°C) | | 970 | 0 | 0 | 0 | 0 | 770 |
| Delta sol. T-r (°C) | 1060 | 1014 | 1007 | 985 | 992 | 1000 | 932 |
| Delta Vol.(%) bei 600°C | 2 | 4,5 | 4,6 | 4,8 | 5 | 4,8 | 3,8 |
| sigma sol. T-r (°C) | - | 774 | 763 | 705 | 720 | 747 | 788 |
| sigma Vol.(%) bei 600°C | - | 8,6 | 7,7 | 4,8 | 6,2 | 6,5 | 10 |

Aus den Tabellen 5a und b ist zu erkennen, dass mit reduziertem Co-Gehalt die gamma'-solvus-Temperatur nur um wenige Grad Celsius fällt, - und Delta- sowie sigma-Phase destabilisiert werden. Damit ist eine aus kommerzieller Sicht aufgrund eines geringeren Metallwerts bei reduzierten Co-Gehalten kostengünstigere neue Legierung auf Basis von Alloy 780 möglich. Außerdem wird mit reduziertem Co-Gehalt die eta-Phase destabilisiert, was sich positiv auf mechanische Eigenschaften bei höheren Temperaturen auswirkt

In den Tabellen 5c-1 bis 5c-3 sind die berechneten Werte der Anteile und Partikelgrößen der gamma'-Phase sowie die prüftemperaturabhängigen Werte der Streckgrenze Rp0.2 der Legierungen aus Tab. 5a für die Ausscheidungswärmebehandlungen 700°C/8h, 850°C/8h und 850°C/24h für die Korngröße ASTM 4.5 gelistet.

| Variante | 1 | 5 | 6 | 7 | 8 | 16 |
|---|---|---|---|---|---|---|
| Gamma' [%] | 31 | 31 | 31 | 31 | 31 | 31 |
| Gamma' [nm] | 24 | 24 | 24 | 24 | 24 | 24 |
| Rp0.2 [MPa] | | | | | | |
| 650°C | 871 | 880 | 911 | 901 | 891 | 857 |
| 700°C | 875 | 884 | 915 | 905 | 895 | 861 |
| 750°C | 848 | 857 | 823 | 868 | 868 | 834 |
| 800°C | 690 | 666 | 581 | 607 | 635 | 732 |
| 850°C | 474 | 462 | 415 | 430 | 445 | 494 |
| 900°C | 328 | 322 | 294 | 303 | 313 | 336 |

Tabelle 5c-1:   Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 700°C / 8h für eine Korngröße ASTM 4.5 der Legierungsanalysen aus Tab. 5a.

| Variante | 1 | 5 | 6 | 7 | 8 | 16 |
|---|---|---|---|---|---|---|
| Gamma' [%] | 25 | 25 | 24 | 24 | 25 | 25 |
| Gamma' [nm] | 45 | 45 | 45 | 45 | 45 | 46 |
| Rp0.2 [MPa] | | | | | | |
| 650°C | 896 | 894 | 874 | 881 | 895 | 889 |
| 700°C | 886 | 884 | 864 | 870 | 885 | 879 |
| 750°C | 852 | 814 | 681 | 724 | 768 | 867 |
| 800°C | 643 | 619 | 531 | 560 | 590 | 678 |
| 850°C | 502 | 486 | 426 | 446 | 467 | 523 |
| 900°C | 348 | 340 | 298 | 312 | 326 | 357 |

Tabelle 5c-2: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 8h für eine Korngröße ASTM 4.5 der Legierungsanalysen aus Tab. 5a.

| Variante | 1 | 5 | 6 | 7 | 8 | 16 |
|---|---|---|---|---|---|---|
| Gamma' [%] | 25 | 25 | 24 | 24 | 25 | 25 |
| Gamma' [nm] | 64 | 64 | 63 | 63 | 64 | 65 |
| Rp0.2 [MPa] | | | | | | |
| 650°C | 807 | 805 | 789 | 796 | 805 | 803 |
| 700°C | 797 | 795 | 780 | 786 | 796 | 793 |
| 750°C | 787 | 784 | 653 | 696 | 738 | 783 |
| 800°C | 613 | 589 | 503 | 532 | 560 | 649 |
| 850°C | 472 | 457 | 399 | 419 | 438 | 495 |
| 900°C | 324 | 315 | 276 | 290 | 302 | 334 |

Tabelle 5c-3: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 24h für eine Korngröße ASTM 4.5 der Legierungsanalysen aus Tab. 5a.

Betrachtet man in den Tabellen 5c-1 bis 5c-3 zunächst die Prüftemperaturen 650°C und 700°C so sieht man, dass die Werte der Streckgrenzen Rp0.2 sich in Abhängigkeit des Co-Gehalts kaum innerhalb der Prüftemperatur ändern. Bei den höheren Prüftemperaturen oberhalb von 700°C ist dagegen zu erkennen, dass die Werte der Streckgrenzen Rp0.2 innerhalb von einer Prüftemperatur mit ansteigendem Co-Gehalt (bei diesen Legierungen mit einem Al-Gehalt von 2,2%) ansteigen.

Im Fall der Legierung 6 mit dem hier betrachteten niedrigsten Co-Gehalt von 15% sind höhere Werte der Streckgrenzen Rp0.2 bei der Ausscheidungswärmebehandlung 700°C/8h zu erreichen; dagegen liegen höhere Werte der Streckgrenzen Rp0.2 für die Legierung 16, die den innerhalb der hier betrachteten Legierungen höchsten Co-Gehalt von 27,5% enthält, bei der Ausscheidungswärmebehandlung 850°C/8h vor.

In den Tabellen 6a-1 und 6a-2 sind chemische Zusammensetzungen gelistet, bei denen der Ti-Gehalt bei zwei unterschiedlichen Al-Gehalten variiert.

Tabelle 6a-1: Ausgewählte Legierungsanalysen mit 20% bzw. 24,5% Co und Variation von Ni- und Ti-Gehalte

| Variante | 420420 | 1 | 20 | 22 | 23 | 24 | 11 | 12 | 13 | 14 | 15 |
|---|---|---|---|---|---|---|---|---|---|---|---|
| C | 0.021 | 0.021 | 0.021 | 0.021 | 0.021 | 0.021 | 0.021 | 0.021 | 0.021 | 0.021 | 0.021 |
| S | 0.0005 | 0.0005 | 0.0005 | 0.0005 | 0.0005 | 0.0005 | 0.0005 | 0.0005 | 0.0005 | 0.0005 | 0.0005 |
| N | 0.008 | 0.008 | 0.008 | 0.008 | 0.008 | 0.008 | 0.008 | 0.008 | 0.008 | 0.008 | 0.008 |
| Cr | 17.75 | 18 | 18 | 18 | 18 | 18 | 18 | 18 | 18 | 18 | 18 |
| Ni | 45.96 | 46.018 | 46.218 | 45.718 | 45.418 | 45.118 | 51.118 | 50.818 | 50.518 | 49.818 | 49.318 |
| Mn | 0.018 | 0.018 | 0.018 | 0.018 | 0.018 | 0.018 | 0.018 | 0.018 | 0.018 | 0.018 | 0.018 |
| Si | 0.065 | 0.065 | 0.065 | 0.065 | 0.065 | 0.065 | 0.065 | 0.065 | 0.065 | 0.065 | 0.065 |
| Mo | 2.94 | 3 | 3 | 3 | 3 | 3 | 3 | 3 | 3 | 3 | 3 |
| Ti | 0.31 | 0.3 | 0.1 | 0.6 | 0.9 | 1.2 | 0.3 | 0.6 | 0.9 | 1.6 | 2.1 |
| Nb | 5.41 | 5.4 | 5.4 | 5.4 | 5.4 | 5.4 | 5.4 | 5.4 | 5.4 | 5.4 | 5.4 |
| Ta | 0.01 | 0.01 | 0.01 | 0.01 | 0.01 | 0.01 | 0.01 | 0.01 | 0.01 | 0.01 | 0.01 |
| Cu | 0.01 | 0.01 | 0.01 | 0.01 | 0.01 | 0.01 | 0.01 | 0.01 | 0.01 | 0.01 | 0.01 |
| Fe | 0.67 | 0.43 | 0.43 | 0.43 | 0.43 | 0.43 | 0.43 | 0.43 | 0.43 | 0.43 | 0.43 |
| P | 0.011 | 0.011 | 0.011 | 0.011 | 0.011 | 0.011 | 0.011 | 0.011 | 0.011 | 0.011 | 0.011 |
| Al | 2.16 | 2.2 | 2.2 | 2.2 | 2.2 | 2.2 | 1.6 | 1.6 | 1.6 | 1.6 | 1.6 |
| Mg | 0.0008 | 0.0008 | 0.0008 | 0.0008 | 0.0008 | 0.0008 | 0.0008 | 0.0008 | 0.0008 | 0.0008 | 0.0008 |
| Ca | 0.0004 | 0.004 | 0.004 | 0.004 | 0.004 | 0.004 | 0.004 | 0.004 | 0.004 | 0.004 | 0.004 |
| V | 0.002 | 0.002 | 0.002 | 0.002 | 0.002 | 0.002 | 0.002 | 0.002 | 0.002 | 0.002 | 0.002 |
| Zr | 0.002 | 0.002 | 0.002 | 0.002 | 0.002 | 0.002 | 0.002 | 0.002 | 0.002 | 0.002 | 0.002 |
| W | 0.02 | 0.02 | 0.02 | 0.02 | 0.02 | 0.02 | 0.02 | 0.02 | 0.02 | 0.02 | 0.02 |
| Co | 24.63 | 24.5 | 24.5 | 24.5 | 24.5 | 24.5 | 20 | 20 | 20 | 20 | 20 |
| Hf | 0 | 0 | 0 | 0 | 0 | 0 | 0 | 0 | 0 | 0 | 0 |
| B | 0.004 | 0.004 | 0.004 | 0.004 | 0.004 | 0.004 | 0.004 | 0.004 | 0.004 | 0.004 | 0.004 |
| O | 0.002 | 0.002 | 0.002 | 0.002 | 0.002 | 0.002 | 0.002 | 0.002 | 0.002 | 0.002 | 0.002 |

Tabelle 6a-2: Ausgewählte Legierungsanalyse mit Variation von Ni- und Ti-Gehalte

| Variante | 420420 | 1 | N3 | N4 | N5 |
|---|---|---|---|---|---|
| C | 0.021 | 0.021 | 0.021 | 0.021 | 0.021 |
| S | 0.0005 | 0.0005 | 0.0005 | 0.0005 | 0.0005 |

(fortgesetzt)

| Variante | 420420 | 1 | N3 | N4 | N5 |
|---|---|---|---|---|---|
| N | 0.008 | 0.008 | 0.008 | 0.008 | 0.008 |
| Cr | 17.75 | 18 | 18 | 18 | 18 |
| Ni | 45.96 | 46.018 | 46.218 | 45.718 | 45.718 |
| Mn | 0.018 | 0.018 | 0.018 | 0.018 | 0.018 |
| Si | 0.065 | 0.065 | 0.065 | 0.065 | 0.065 |
| Mo | 2.94 | 3 | 3 | 3 | 3 |
| Ti | 0.31 | 0.3 | 1,0 | 2,0 | 3,0 |
| Nb | 5.41 | 5.4 | 5.4 | 5.4 | 5.4 |
| Ta | 0.01 | 0.01 | 0.01 | 0.01 | 0.01 |
| Cu | 0.01 | 0.01 | 0.01 | 0.01 | 0.01 |
| Fe | 0.67 | 0.43 | 0.43 | 0.43 | 0.43 |
| P | 0.011 | 0.011 | 0.011 | 0.011 | 0.011 |
| Al | 2.16 | 2.2 | 2.2 | 2.2 | 2.2 |
| Mg | 0.0008 | 0.0008 | 0.0008 | 0.0008 | 0.0008 |
| Ca | 0.0004 | 0.004 | 0.004 | 0.004 | 0.004 |
| V | 0.002 | 0.002 | 0.002 | 0.002 | 0.002 |
| Zr | 0.002 | 0.002 | 0.002 | 0.002 | 0.002 |
| W | 0.02 | 0.02 | 0.02 | 0.02 | 0.02 |
| Co | 24.63 | 24.5 | 24.5 | 24.5 | 24.5 |
| Hf | 0 | 0 | 0 | 0 | 0 |
| B | 0.004 | 0.004 | 0.004 | 0.004 | 0.004 |
| O | 0.002 | 0.002 | 0.002 | 0.002 | 0.002 |

Aus den Tabellen 6a-1 und 6b ist zu erkennen, dass sowohl die gamma'-solvus-Temperatur als auch der gamma'-Anteil bei 600°C mit steigenden Ti-Gehalten wie erwartet ansteigen. Größere Ti-Gehalte stabilisieren jedoch die eta- und sigma-_ Phase auf Kosten von Delta- und y'-Phase. Soll die eta-Phase destabilisiert werden oder möglichst der Anteil an eta-Phase gering gehalten werden, so sollte der Ti-Gehalt möglichst klein sein.

Tabelle 6b: Berechnete Eigenschaften der Phasen und Legierungen aus Tab. 6a-1.

| Variante | 420420 | 1 | 20 | 22 | 23 | 24 | 11 | 13 | 14 | 15 | N3 | N4 | N5 |
|---|---|---|---|---|---|---|---|---|---|---|---|---|---|
| y'sol. T-r (°C) | 990 | 1016 | 1000 | 995 | 986 | 979 | 956 | 978 | 948 | 931 | 985 | 964 | 961,7 |
| y' Vol. (%) bei 600°C | 26 | 29 | 28 | 30,4 | 32,5 | 35 | 20 | 24 | 28 | 32 | 33 | 39 | 33,5 |
| eta sol. T-r (°C) | 1020 | 996 | 0 | 1060 | 1090 | 1120 | 0 | 1032 | 1100 | 1140 | 1100 | 1175 | 1222 |
| eta max Vol. (%) | 2,5 | 2,8 | 0 | 9,8 | 15 | 19 | 0 | 5,5 | 18,5 | 25 | 16,5 | 27,7 | 35,6 |
| eta sol. T-r (°C) | | 970 | 0 | 844 | 770 | 715 | 0 | 910 | 740 | 637 | 752 | 602 | RT |
| Delta sol. T-r (°C) | 1060 | 1014 | 1011 | 956 | 889 | 801 | 1021 | 1015 | 951 | 885 | 856 | 663 | 0 |
| Delta Vol.(%) bei 600°C | 2 | 4,5 | 4,7 | 4,3 | 3,3 | 3,1 | 8,3 | 7,4 | 6,5 | 6 | 3,3 | 2,4 | 0 |
| sigma sol. T-r (°C) | - | 774 | 756 | 803 | 825 | 849 | 642 | 722 | 784 | 825 | 832 | 918 | 1000 |
| sigma Vol.(%) bei 600°C | - | 8,6 | 7,2 | 10 | 11,7 | 13,7 | 1 | 4,5 | 8,8 | 11,4 | 12,5 | 18 | 22 |

In den Tabellen 6c-1 bis 6c-3 sind die berechneten Werte der Anteile und Partikelgrößen der gamma'-Phase sowie die prüftemperaturabhängigen Werte der Streckgrenze Rp0.2 der Legierungen aus Tab. 6a-1 für die Ausscheidungswärmebehandlungen 700°C/8h, 850°C/8h und 850°C/24h für die Korngröße ASTM 4.5 gelistet.

| Variante | 1 | 20 | 22 | 23 | 24 | 11 | 12 | 13 | 14 | 15 |
|---|---|---|---|---|---|---|---|---|---|---|
| Gamma' [%] | 31 | 30 | 33 | 35 | 36 | 19 | 27 | 29 | 33 | 36 |
| Gamma' [nm] | 24 | 23 | 24 | 25 | 25 | 21 | 22 | 23 | 24 | 24 |
| Rp0.2 [MPa] | | | | | | | | | | |
| 650°C | 871 | 824 | 913 | 976 | 1021 | 796 | 864 | 914 | 1077 | 1156 |
| 700°C | 875 | 828 | 918 | 981 | 1027 | 799 | 868 | 918 | 1082 | 1162 |
| 750°C | 848 | 802 | 892 | 956 | 1002 | 762 | 829 | 898 | 1051 | 1137 |
| 800°C | 690 | 651 | 740 | 795 | 847 | 518 | 573 | 614 | 750 | 829 |
| 850°C | 474 | 443 | 504 | 560 | 597 | 352 | 390 | 450 | 551 | 613 |
| 900°C | 328 | 300 | 363 | 400 | 435 | 228 | 280 | 322 | 408 | 463 |

Tabelle 6c-1:    Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 700°C / 8h für eine Korngröße ASTM 4.5 der Legierungsanalysen aus Tab. 6a-1.

| Variante | 1 | 20 | 22 | 23 | 24 | 11 | 12 | 13 | 14 | 15 |
|---|---|---|---|---|---|---|---|---|---|---|
| Gamma' [%] | 25 | 23 | 28 | 30 | 32 | 16 | 16 | 22 | 28 | 32 |
| Gamma' [nm] | 45 | 46 | 44 | 44 | 42 | 45 | 45 | 44 | 42 | 41 |
| RpO.2 [MPa] | | | | | | | | | | |
| 650°C | 896 | 845 | 972 | 1024 | 1095 | 724 | 781 | 886 | 1059 | 1170 |
| 700°C | 886 | 836 | 961 | 1012 | 1083 | 716 | 772 | 875 | 1046 | 1156 |
| 750°C | 852 | 800 | 928 | 998 | 1068 | 591 | 645 | 740 | 905 | 1023 |
| 800°C | 643 | 603 | 702 | 753 | 813 | 452 | 495 | 569 | 698 | 789 |
| 850°C | 502 | 470 | 549 | 589 | 637 | 357 | 391 | 452 | 557 | 631 |
| 900°C | 348 | 319 | 388 | 424 | 467 | 228 | 276 | 318 | 411 | 475 |

Tabelle 6c-2: Berechnete Anteile und Partikelgrößen der Ausscheidungsphase gamma` und Werte der mechanischen Streckgrenze RpO.2 in Abhängigkeit der Prüftemperaturen von 650°C bis 900°C nach einer Ausscheidungswärmebehandlung von 850°C / 8h für eine Korngröße ASTM 4.5 der Legierungsanalysen aus Tab. 6a-1.

| Variante | 1 | 20 | 22 | 23 | 24 | 11 | 12 | 13 | 14 | 15 |
|---|---|---|---|---|---|---|---|---|---|---|
| Gamma' [%] | 25 | 23 | 28 | 26 | 25 | 12 | 19 | 22 | 24 | 22 |
| Gamma' [nm] | 64 | 65 | 62 | 61 | 60 | 64 | 63 | 61 | 58 | 57 |
| RpO.2 [MPa] | | | | | | | | | | |
| 650°C | 807 | 764 | 877 | 927 | 982 | 656 | 732 | 802 | 957 | 1054 |
| 700°C | 797 | 755 | 866 | 916 | 970 | 648 | 723 | 792 | 945 | 1041 |
| 750°C | 787 | 745 | 854 | 903 | 957 | 569 | 640 | 713 | 870 | 982 |
| 800°C | 613 | 577 | 670 | 720 | 774 | 430 | 486 | 542 | 664 | 749 |
| 850°C | 472 | 444 | 518 | 557 | 599 | 335 | 380 | 425 | 523 | 591 |
| 900°C | 324 | 297 | 361 | 396 | 433 | 212 | 258 | 296 | 381 | 440 |

Tabelle 6c-3: Berechnete Anteile und Partikelgrößen der Ausscheidungsphase gamma` und Werte der mechanischen Streckgrenze RpO.2 in Abhängigkeit der Prüftemperaturen von 650°C bis 900°C nach einer Ausscheidungswärmebehandlung von 850°C / 24h für eine Korngröße ASTM 4.5 der Legierungsanalysen aus Tab. 6a-1.

Aus den Daten der Tabellen 6c-1 bis 6c-3 ist zu erkennen, dass für die beiden Legierungsserien mit 24,5% und 20% Co jeweils die beiden Legierungen mit den höchsten Summengehalten der Elemente Al und Ti die höchsten Werte der Streckgrenze Rp0.2 erreichen. Dies sind für 24,5% Co die beiden betrachteten Legierungen 23 mit 2,2% Al und 0,9% Ti und 24 mit 2,2% Al und 1,2% Ti sowie in der Serie mit 20% Co die Legierungen 14 mit 1,6% Al und 1,6% Ti und 15 mit 1,6% Al und 2,1% Ti. Im Fall der beiden Legierungen 23 und 24 führt die Ausscheidungswärmebehandlung 850°C/8h zu etwas höheren Werten der Streckgrenzen Rp0.2 im Vergleich zur Wärmebehandlung 700°C/8. Bei den beiden Legierungen 14 und 15 liegt das Niveau der Werte der Streckgrenzen Rp0.2 bei diesen beiden Ausscheidungswärmebehandlungen auf einem vergleichbaren Niveau. Eine Ausscheidungsglühtemperatur zwischen 700°C und 850°C bei einer Glühdauer von 8h könnte das Niveau der Streckgrenzwerte noch anheben. Bei allen vier hier betrachteten Legierungen ist das Niveau der Streckgrenzwerte nach der Ausscheidungswärmebehandlung 850°C/24h niedriger im Vergleich zu den beiden anderen Wärmebehandlungen.

In den Tabellen 6c-4 bis 6c-7 sind die berechneten Werte der Anteile und Partikelgrößen der gamma'-Phase sowie die prüftemperaturabhängigen Werte der Streckgrenze Rp0.2 der Legierungen aus Tab. 6a-2 für die Ausscheidungswärmebehandlungen 650°C/8h, 700°C/8h, 850°C/8h und 850°C/24h für die Korngröße ASTM 4.5 gelistet.

| | 1 | N3 | N4 | N5 |
|---|---|---|---|---|
| Gamma' [%] | 32 | 36 | 42 | 46 |
| Gamma' [nm] | 24 | 25 | 24 | 24 |
| Rp0.2 | | | | |
| 650 | 891 | 1001 | 1137 | 1257 |
| 700 | 870 | 977 | 1109 | 1227 |
| 750 | 844 | 970 | 1080 | 1194 |
| 800 | 689 | 812 | 1044 | 1155 |
| 850 | 473 | 573 | 698 | 1012 |
| 900 | 327 | 413 | 508 | 712 |

Tabelle 6c-4: Berechnete Anteile und Partikelgrößen der Ausscheidungsphase gamma' und Werte der mechanischen Streckgrenze Rp0.2 in Abhängigkeit der Prüftemperaturen von 650°C bis 900°C nach einer Ausscheidungswärmebehandlung von 650°C / 8h für eine Korngröße ASTM 4.5 der Legierungsanalysen aus Tab. 6a-2.

| | 1 | N3 | N4 | N5 |
|---|---|---|---|---|
| Gamma' [%] | 31 | 35 | 41 | 46 |
| Gamma' [nm] | 24 | 25 | 24 | 23 |
| Rp0.2 [MPa] | | | | |
| 650 | 871 | 992 | 1108 | 1200 |
| 700 | 875 | 997 | 1114 | 1207 |
| 750 | 848 | 972 | 1085 | 1169 |
| 800 | 690 | 812 | 1049 | 1131 |
| 850 | 474 | 574 | 700 | 1004 |
| 900 | 328 | 413 | 509 | 704 |

Tabelle 6c-5: Berechnete Anteile und Partikelgrößen der Ausscheidungsphase gamma' und Werte der mechanischen Streckgrenze Rp0.2 in Abhängigkeit der Prüftemperaturen von 650°C bis 900°C nach einer Ausscheidungswärmebehandlung von 700°C / 8h für eine Korngröße ASTM 4.5 der Legierungsanalysen aus Tab. 6a-2.

| Variante | 1 | N3 | N4 | N5 |
|---|---|---|---|---|
| Gamma' [%] | 25 | 30 | 37 | 43 |
| Gamma' [nm] | 45 | 43 | 43 | 42 |
| Rp0.2 [MPa] | | | | |
| 650 | 896 | 933 | 1230 | 1386 |
| 700 | 886 | 938 | 1215 | 1369 |
| 750 | 852 | 939 | 1198 | 1350 |
| 800 | 643 | 747 | 970 | 1329 |
| 850 | 502 | 582 | 757 | 1088 |
| 900 | 348 | 424 | 557 | 786 |

Tabelle 6c-6: Berechnete Anteile und Partikelgrößen der Ausscheidungsphase gamma' und Werte der mechanischen Streckgrenze Rp0.2 in Abhängigkeit der Prüftemperaturen von 650°C bis 900°C nach einer

Ausscheidungswärmebehandlung von 850°C / 8h für eine Korngröße ASTM 4.5 der Legierungsanalysen aus Tab. 6a-2.

| | 1 | N3 | N4 | N5 |
|---|---|---|---|---|
| Gamma' [%] | 25 | 30 | 37 | 43 |
| Gamma' [nm] | 64 | 61 | 59 | 59 |
| Rp0.2 [MPa] | | | | |
| 650 | 807 | 941 | 1114 | 1246 |
| 700 | 797 | 930 | 1100 | 1230 |
| 750 | 787 | 917 | 1085 | 1213 |
| 800 | 613 | 735 | 928 | 1193 |
| 850 | 473 | 568 | 716 | 1035 |
| 900 | 324 | 408 | 521 | 738 |

Tabelle 6c-7: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 24h für eine Korngröße ASTM 4.5 der Legierungsanalysen aus Tab. 6a-2

Aus den Daten der Tabellen 6c-4 bis 6c-7 ist zu erkennen, dass für die Legierungsserie mit höheren Ti-Gehalten die Legierung mit dem höchsten Summengehalt der Elemente Al und Ti den höchsten Wert der Streckgrenze Rp0.2 erreicht. Bei einer Ausscheidungstemperatur von 850 °C erreichen die Legierungen N4 und N5 die höchsten Werte in der Streckgrenze Rp0.2. Allerdings ist eine Ausscheidungszeit von 8h günstiger als 24h. Das könnte in der mit um die 40 nm kleineren Partikelgröße im Gegensatz zu ca. 60 nm bei 24h begründet liegen. Bei einem Titangehalt von 1 % wird mit einer Ausscheidungswärmebehandlung von 700 °C/8h die höchste Streckgrenze Rp0.2 erzielt. Bei einem Ti-Gehalt von 3 % ist das Festigkeitsniveau bei 850 °C mit über 1000 MPa immer noch sehr hoch. Außerdem wird der steilere Abfall bei einem höheren Summengehalt der Elemente Al und Ti zu höheren Temperaturen über 800 °C und bei einem Ti-Gehalt von 3 % sogar auf über 850 °C verschoben.

Tabelle 7a: Ausgewählte Legierungsanalysen mit 24,5% Co und Variation von Ni-, Ti- und Al-Gehalten

| Variante | 420420 | 1 | 20 | 21 | 22 | 23 | 24 | 25 | 26 |
|---|---|---|---|---|---|---|---|---|---|
| C | 0.021 | 0.021 | 0.021 | 0.021 | 0.021 | 0.021 | 0.021 | 0.021 | 0.021 |
| S | 0.0005 | 0.0005 | 0.0005 | 0.0005 | 0.0005 | 0.0005 | 0.0005 | 0.0005 | 0.0005 |
| N | 0.008 | 0.008 | 0.008 | 0.008 | 0.008 | 0.008 | 0.008 | 0.008 | 0.008 |
| Cr | 17.75 | 18 | 18 | 18 | 18 | 18 | 18 | 18 | 18 |
| Ni | 45.96 | 46.018 | 46.218 | 46.018 | 45.718 | 45.418 | 45.118 | 46.318 | 46.618 |
| Mn | 0.018 | 0.018 | 0.018 | 0.018 | 0.018 | 0.018 | 0.018 | 0.018 | 0.018 |
| Si | 0.065 | 0.065 | 0.065 | 0.065 | 0.065 | 0.065 | 0.065 | 0.065 | 0.065 |
| Mo | 2.94 | 3 | 3 | 3 | 3 | 3 | 3 | 3 | 3 |
| Ti | 0.31 | 0.3 | 0.1 | 0.1 | 0.6 | 0.9 | 1.2 | 0.3 | 0.3 |
| Nb | 5.41 | 5.4 | 5.4 | 5.4 | 5.4 | 5.4 | 5.4 | 5.4 | 5.4 |
| Ta | 0.01 | 0.01 | 0.01 | 0.01 | 0.01 | 0.01 | 0.01 | 0.01 | 0.01 |

(fortgesetzt)

| Variante | 420420 | 1 | 20 | 21 | 22 | 23 | 24 | 25 | 26 |
|---|---|---|---|---|---|---|---|---|---|
| Cu | 0.01 | 0.01 | 0.01 | 0.01 | 0.01 | 0.01 | 0.01 | 0.01 | 0.01 |
| Fe | 0.67 | 0.43 | 0.43 | 0.43 | 0.43 | 0.43 | 0.43 | 0.43 | 0.43 |
| P | 0.011 | 0.011 | 0.011 | 0.011 | 0.011 | 0.011 | 0.011 | 0.011 | 0.011 |
| Al | 2.16 | 2.2 | 2.2 | 2.4 | 2.2 | 2.2 | 2.2 | 1.9 | 1.6 |
| Mg | 0.0008 | 0.0008 | 0.0008 | 0.0008 | 0.0008 | 0.0008 | 0.0008 | 0.0008 | 0.0008 |
| Ca | 0.0004 | 0.004 | 0.004 | 0.004 | 0.004 | 0.004 | 0.004 | 0.004 | 0.004 |
| V | 0.002 | 0.002 | 0.002 | 0.002 | 0.002 | 0.002 | 0.002 | 0.002 | 0.002 |
| Zr | 0.002 | 0.002 | 0.002 | 0.002 | 0.002 | 0.002 | 0.002 | 0.002 | 0.002 |
| W | 0.02 | 0.02 | 0.02 | 0.02 | 0.02 | 0.02 | 0.02 | 0.02 | 0.02 |
| Co | 24.63 | 24.5 | 24.5 | 24.5 | 24.5 | 24.5 | 24.5 | 24.5 | 24.5 |
| Hf | 0 | 0 | 0 | 0 | 0 | 0 | 0 | 0 | 0 |
| B | 0.004 | 0.004 | 0.004 | 0.004 | 0.004 | 0.004 | 0.004 | 0.004 | 0.004 |
| O | 0.002 | 0.002 | 0.002 | 0.002 | 0.002 | 0.002 | 0.002 | 0.002 | 0.002 |

Tabelle 7b: Berechnete Eigenschaften der Phasen und Legierungen aus Tab. 7a

| Variante | 420420 | 1 | 20 | 21 | 22 | 23 | 24 | 25 | 26 |
|---|---|---|---|---|---|---|---|---|---|
| y'sol. T-r (°C) | 990 | 1016 | 1000 | 1013 | 995 | 986 | 979 | 980 | 950 |
| y' Vol. (%) bei 600°C , | 26 | 29 | 28 | 30,5 | 30,4 | 32,5 | 35 | 24,3 | 19,7 |
| eta sol. T-r (°C) | 1020 | 996 | 0 | 0 | 1060 | 1090 | 1120 | 998 | 966 |
| eta max Vol. (%) | 2,5 | 2,8 | 0 | 0 | 9,8 | 15 | 19 | 1,9 | 1,4 |
| eta sol. T-r (°C) | | 970 | 0 | 0 | 844 | 770 | 715 | 957 | 936 |
| Delta sol. T-r (°C) | 1060 | 1014 | 1011 | 1002 | 956 | 889 | 801 | 1022 | 1031 |
| Delta Vol.(%) bei 600°C | 2 | 4,5 | 4,7 | 3,7 | 4,3 | 3,3 | 3,1 | 6,7 | 8,2 |
| sigma sol. T-r (°C) | - | 774 | 756 | 784 | 803 | 825 | 849 | 734 | 699 |
| sigma Vol.(%) bei 600°C | - | 8,6 | 7,2 | 9,4 | 10 | 11,7 | 13,7 | 5,9 | 3,3 |

Aus den Tabellen 6 und 7 ist zu erkennen, dass wie zuvor bereits beschrieben, mit steigendem Ti-Gehalt die gamma'-solvus-Temperatur und der gamma'-Anteil bei 600°C ansteigen. Im Fall von 0,3 % Ti steigen sowohl die gamma'-solvus-Temperaturen als auch die gamma'-Anteile bei 600°C mit ansteigenden Al-Gehalten an. Bei weiter reduziertem Ti-Gehalt und einem größeren Al-Gehalt von 2,4 % bleibt die gamma'-solvus-Temperatur nahezu gleich, der gamma'-Anteil bei 600°C steigt leicht an. Außerdem ist aus den Tabellen zu entnehmen, dass die Kombination aus hohem Ti-Gehalt bei hohen Nb-und Co-Gehalten die Eta-Phase extrem stabilisiert. Dabei kann man deutlich erkennen, dass bei der vorliegenden Arbeit auch die Grenzbereiche berücksichtigt worden sind. Die Abstimmung von Zusammensetzungen anhand des Verständnisses für die Wirkungen von Einzelelementen ist den folgenden Tabellen zu entnehmen. Die Legierungen zeigen im Vergleich zu Legierung 420420 keine eta-Phase.

In den Tabellen 7c-1 bis 7c-3 sind die berechneten Werte der Anteile und Partikelgrößen der gamma'-Phase sowie die prüftemperaturabhängigen Werte der Streckgrenze Rp0.2 der Legierungen aus Tab. 7a für die Ausscheidungswärmebehandlungen 700°C/8h, 850°C/8h und 850°C/24h für die Korngröße ASTM 4.5 gelistet.

| Variante | 1 | 20 | 21 | 22 | 23 | 24 | 25 | 26 |
|---|---|---|---|---|---|---|---|---|
| Gamma' [%] | 31 | 31 | 32 | 33 | 35 | 36 | 29 | 26 |
| Gamma' [nm] | 24 | 23 | 24 | 24 | 25 | 25 | 23 | 21 |
| Rp0.2 [MPa] | | | | | | | | |
| 650°C | 871 | 823 | 854 | 913 | 976 | 1021 | 835 | 781 |
| 700°C | 875 | 827 | 858 | 918 | 981 | 1027 | 838 | 784 |
| 750°C | 848 | 800 | 831 | 892 | 954 | 999 | 812 | 758 |
| 800°C | 690 | 650 | 688 | 739 | 795 | 846 | 633 | 568 |
| 850°C | 474 | 442 | 471 | 514 | 559 | 595 | 432 | 380 |
| 900°C | 328 | 300 | 325 | 313 | 402 | 433 | 282 | 246 |

Tabelle 7c-1: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 700°C / 8h für eine Korngröße ASTM 4.5 der Legierungsanalysen aus Tab. 7a.

| Variante | 1 | 20 | 21 | 22 | 23 | 24 | 25 | 26 |
|---|---|---|---|---|---|---|---|---|
| Gamma' [%] | 25 | 23 | 25 | 28 | 30 | 32 | 21 | 17 |
| Gamma' [nm] | 45 | 46 | 46 | 44 | 44 | 43 | 45 | 45 |
| Rp0.2 [MPa] | | | | | | | | |
| 650°C | 896 | 845 | 891 | 972 | 1026 | 1088 | 824 | 742 |
| 700°C | 886 | 834 | 880 | 960 | 1014 | 1076 | 814 | 733 |
| 750°C | 852 | 799 | 856 | 928 | 1000 | 1061 | 763 | 669 |
| 800°C | 643 | 603 | 645 | 702 | 754 | 811 | 576 | 505 |
| 850°C | 502 | 470 | 503 | 549 | 590 | 635 | 449 | 393 |
| 900°C | 348 | 318 | 347 | 378 | 425 | 463 | 294 | 252 |

Tabelle 7c-2: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 8h für eine Korngröße ASTM 4.5 der Legierungsanalysen aus Tab. 7a.

| Variante | 1 | 20 | 21 | 22 | 23 | 24 | 25 | 26 |
|---|---|---|---|---|---|---|---|---|
| Gamma' [%] | 25 | 23 | 25 | 28 | 30 | 32 | 21 | 12 |
| Gamma' [nm] | 64 | 65 | 65 | 62 | 61 | 60 | 64 | 65 |
| Rp0.2 [MPa] | | | | | | | | |
| 650°C | 807 | 801 | 804 | 876 | 928 | 982 | 743 | 669 |
| 700°C | 797 | 792 | 794 | 866 | 917 | 970 | 734 | 660 |
| 750°C | 787 | 781 | 784 | 854 | 904 | 954 | 725 | 645 |
| 800°C | 613 | 622 | 616 | 670 | 721 | 775 | 550 | 481 |
| 850°C | 472 | 476 | 475 | 518 | 558 | 599 | 424 | 370 |
| 900°C | 324 | 297 | 324 | 352 | 397 | 431 | 274 | 234 |

Tabelle 7c-3: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 24h für eine Korngröße ASTM 4.5 der Legierungsanalysen aus Tab. 7a.

Aus den Daten der Tabellen 7c-1 bis 7c-3 ist ebenfalls zu erkennen, dass für die hier betrachteten chemischen Zusammensetzungen die beiden Legierungen mit den höchsten Summengehalten der Elemente Al und Ti die höchsten Werte der Streckgrenze Rp0.2 erreichen. Dies sind für 24,5% Co die bereits in der Tab. 7a betrachteten Legierungen 23 mit 2,2% Al und 0,9% Ti und 24 mit 2,2% Al und 1,2% Ti.

Tabelle 8a: Ausgewählte Legierungsanalysen mit Variation von Ni-, Nb-, Ti- und Al-Gehalten.

| Variante | 420420 | 1 | 27 | 28 | 29 |
|---|---|---|---|---|---|
| C | 0.021 | 0.021 | 0.021 | 0.021 | 0.021 |
| S | 0.0005 | 0.0005 | 0.0005 | 0.0005 | 0.0005 |
| N | 0.008 | 0.008 | 0.008 | 0.008 | 0.008 |
| Cr | 17.75 | 18 | 18 | 18 | 18 |
| Ni | 45.96 | 46.018 | 46.418 | 46.018 | 46.218 |
| Mn | 0.018 | 0.018 | 0.018 | 0.018 | 0.018 |
| Si | 0.065 | 0.065 | 0.065 | 0.065 | 0.065 |
| Mo | 2.94 | 3 | 3 | 3 | 3 |
| Ti | 0.31 | 0.3 | 0.3 | 0.3 | 0.1 |
| Nb | 5.41 | 5.4 | 5 | 5 | 5 |
| Ta | 0.01 | 0.01 | 0.01 | 0.01 | 0.01 |
| Cu | 0.01 | 0.01 | 0.01 | 0.01 | 0.01 |
| Fe | 0.67 | 0.43 | 0.43 | 0.43 | 0.43 |
| P | 0.011 | 0.011 | 0.011 | 0.011 | 0.011 |
| Al | 2.16 | 2.2 | 2.2 | 2.6 | 2.6 |
| Mg | 0.0008 | 0.0008 | 0.0008 | 0.0008 | 0.0008 |
| Ca | 0.0004 | 0.004 | 0.004 | 0.004 | 0.004 |

(fortgesetzt)

| Variante | 420420 | 1 | 27 | 28 | 29 |
|---|---|---|---|---|---|
| V | 0.002 | 0.002 | 0.002 | 0.002 | 0.002 |
| Zr | 0.002 | 0.002 | 0.002 | 0.002 | 0.002 |
| W | 0.02 | 0.02 | 0.02 | 0.02 | 0.02 |
| Co | 24.63 | 24.5 | 24.5 | 24.5 | 24.5 |
| Hf | 0 | 0 | 0 | 0 | 0 |
| B | 0.004 | 0.004 | 0.004 | 0.004 | 0.004 |
| O | 0.002 | 0.002 | 0.002 | 0.002 | 0.002 |

Tabelle 8b: Berechnete Eigenschaften der Phasen und Legierungen aus Tab. 8a.

| Variante | 420420 | 1 | 27 | 28 | 29 |
|---|---|---|---|---|---|
| y'sol. T-r (°C) | 990 | 1016 | 1012 | 1032 | 1015 |
| y' Vol. (%) bei 600°C | 26 | 29 | 29 | 33,4 | 32 |
| eta sol. T-r (°C) | 1020 | 996 | 0 | 0 | 0 |
| eta max Vol. (%) | 2,5 | 2,8 | 0 | 0 | 0 |
| eta sol. T-r (°C) | | 970 | 0 | 0 | 0 |
| Delta sol. T-r (°C) | 1060 | 1014 | 976 | 930 | 952 |
| Delta Vol.(%) bei 600°C | 2 | 4,5 | 3,3 | 1,6 | 1,9 |
| sigma sol. T-r (°C) | - | 774 | 748 | 791 | 772 |
| sigma Vol.(%) bei 600°C | - | 8,6 | 6,5 | 9,4 | 8,4 |

Aus den Tabellen 8a und 8b ist zu erkennen, dass im Fall von 0,3 % Ti und 2,2 % Al die gamma'-solvus-Temperatur um wenige Grad Celsius von 5,4 auf 5,0 % Nb fällt. Der gamma'-Anteil bei 600°C bleibt nahezu unverändert. Im Fall von 5,0 % Nb und 0,3% Ti steigt die gamma'-solvus-Temperatur bei dem größeren Al-Gehalt von 2,6% deutlich an sowie auch der gamma'-Anteil bei 600°C. Bei der Kombination von 5,0 % Nb, 2,6% Al und dem niedrigeren Ti-Gehalt von 0,1 % steigt die gamma'-solvus-Temperatur nur leicht, aber der gamma-Anteil bei 600°C deutlich im Vergleich zur Legierung mit 5,0 % Nb, 0,3% Ti und 2,2 % Al.

In den Tabellen 8c-1 bis 8c-3 sind die berechneten Werte der Anteile und Partikelgrößen der gamma'-Phase sowie die prüftemperaturabhängigen Werte der Streckgrenze Rp0.2 der Legierungen aus Tab. 8a für die Ausscheidungswärmebehandlungen 700°C/8h, 850°C/8h und 850°C/24h für die Korngröße ASTM 4.5 gelistet.

| Variante | 1 | 27 | 28 | 29 |
|---|---|---|---|---|
| Gamma' [%] | 31 | 30.1 | 33.9 | 32.9 |
| Gamma' [nm] | 24 | 24 | 25 | 25 |
| Rp0.2 [MPa] | | | | |
| 650°C | 871 | 868 | 907 | 880 |
| 700°C | 875 | 872 | 912 | 884 |
| 750°C | 848 | 844 | 883 | 853 |
| 800°C | 690 | 671 | 736 | 701 |
| 850°C | 474 | 463 | 511 | 484 |
| 900°C | 328 | 317 | 361 | 338 |

Tabelle 8c-1: Berechnete Anteile und Partikelgrößen der Ausscheidungsphase gamma' und Werte der mechanischen Streckgrenze Rp0.2 in Abhängigkeit der Prüftemperaturen von 650°C bis 900°C nach einer Ausscheidungswärmebehandlung von 700°C / 8h für eine Korngröße ASTM 4.5 der Legierungsanalysen aus Tab. 8a.

| Variante | 1 | 27 | 28 | 29 |
|---|---|---|---|---|
| Gamma' [%] | 25 | 23.7 | 28.1 | 26 |
| Gamma' [nm] | 45 | 45 | 45 | 45 |
| Rp0.2 [MPa] | | | | |
| 650°C | 896 | 874 | 958 | 909 |
| 700°C | 886 | 864 | 947 | 899 |
| 750°C | 852 | 823 | 928 | 876 |
| 800°C | 643 | 622 | 700 | 661 |
| 850°C | 502 | 485 | 547 | 516 |
| 900°C | 348 | 332 | 388 | 361 |

Tabelle 8c-2: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 8h für eine Korngröße ASTM 4.5 der Legierungsanalysen aus Tab. 8a.

| Variante | 1 | 27 | 28 | 29 |
|---|---|---|---|---|
| Gamma' [%] | 25 | 23.7 | 28.1 | 26 |
| Gamma' [nm] | 64 | 64 | 63 | 63 |
| Rp0.2 [MPa] | | | | |
| 650°C | 807 | 787 | 866 | 822 |
| 700°C | 797 | 778 | 855 | 813 |
| 750°C | 787 | 767 | 844 | 802 |
| 800°C | 613 | 593 | 669 | 632 |
| 850°C | 472 | 457 | 517 | 487 |
| 900°C | 324 | 309 | 362 | 337 |

Tabelle 8c-3: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 24h für eine Korngröße ASTM 4.5 der Legierungsanalysen aus Tab. 8a.

Aus den Daten der Tabellen 8c-1 bis 8c-3 ist zu erkennen, dass die Legierung 28, die in dieser Legierungsserie den höchsten Summengehalt der Elemente Al (2,6%) und Ti (0,3%) aufweist, die im Vergleich zu den hier betrachteten anderen Legierungen die höchsten Werte der Streckgrenze Rp0.2 erzielt. Die Legierung 29 enthält zwar ebenfalls denselben höheren Al-Gehalt von 2,6% wie Legierung 28, allerdings ist in dieser Legierung 29 der Ti-Gehalt auf 0,1 % reduziert.

Tabelle 9a: Ausgewählte Legierungsanalysen mit Variation von Ni-, Nb-, und Mo-Gehalten

| Variante | 420420 | 1 | 30 | 31 | 32 | 33 | 34 | 35 |
|---|---|---|---|---|---|---|---|---|
| C | 0.021 | 0.021 | 0.021 | 0.021 | 0.021 | 0.021 | 0.021 | 0.021 |
| S | 0.0005 | 0.0005 | 0.0005 | 0.0005 | 0.0005 | 0.0005 | 0.0005 | 0.0005 |
| N | 0.008 | 0.008 | 0.008 | 0.008 | 0.008 | 0.008 | 0.008 | 0.008 |
| Cr | 17.75 | 18 | 18 | 18 | 18 | 18 | 18 | 18 |
| Ni | 45.96 | 46.018 | 45.518 | 45.918 | 45.018 | 45.418 | 43.018 | 43.418 |
| Mn | 0.018 | 0.018 | 0.018 | 0.018 | 0.018 | 0.018 | 0.018 | 0.018 |
| Si | 0.065 | 0.065 | 0.065 | 0.065 | 0.065 | 0.065 | 0.065 | 0.065 |
| Mo | 2.94 | 3 | 3.5 | 3.5 | 4 | 4 | 6 | 6 |
| Ti | 0.31 | 0.3 | 0.3 | 0.3 | 0.3 | 0.3 | 0.3 | 0.3 |
| Nb | 5.41 | 5.4 | 5.4 | 5 | 5.4 | 5 | 5.4 | 5 |
| Ta | 0.01 | 0.01 | 0.01 | 0.01 | 0.01 | 0.01 | 0.01 | 0.01 |
| Cu | 0.01 | 0.01 | 0.01 | 0.01 | 0.01 | 0.01 | 0.01 | 0.01 |
| Fe | 0.67 | 0.43 | 0.43 | 0.43 | 0.43 | 0.43 | 0.43 | 0.43 |
| P | 0.011 | 0.011 | 0.011 | 0.011 | 0.011 | 0.011 | 0.011 | 0.011 |
| Al | 2.16 | 2.2 | 2.2 | 2.2 | 2.2 | 2.2 | 2.2 | 2.2 |
| Mg | 0.0008 | 0.0008 | 0.0008 | 0.0008 | 0.0008 | 0.0008 | 0.0008 | 0.0008 |
| Ca | 0.0004 | 0.004 | 0.004 | 0.004 | 0.004 | 0.004 | 0.004 | 0.004 |
| V | 0.002 | 0.002 | 0.002 | 0.002 | 0.002 | 0.002 | 0.002 | 0.002 |
| Zr | 0.002 | 0.002 | 0.002 | 0.002 | 0.002 | 0.002 | 0.002 | 0.002 |
| W | 0.02 | 0.02 | 0.02 | 0.02 | 0.02 | 0.02 | 0.02 | 0.02 |
| Co | 24.63 | 24.5 | 24.5 | 24.5 | 24.5 | 24.5 | 24.5 | 24.5 |
| B | 0.004 | 0.004 | 0.004 | 0.004 | 0.004 | 0.004 | 0.004 | 0.004 |
| O | 0.002 | 0.002 | 0.002 | 0.002 | 0.002 | 0.002 | 0.002 | 0.002 |

Tabelle 9b: Berechnete Eigenschaften der Phasen und Legierungen aus Tab. 9a.

| Variante , | 420420 | 1 | 30 | 31 | 32 | 33 | 34 | 35 |
|---|---|---|---|---|---|---|---|---|
| y'sol. T-r (°C) | 990 | 1016 | 1006 | 1009 | 1002 | 1009 | 996 | 1006 |
| y' Vol. (%) bei 600°C | 26 | 29 | 29 | 29 | 29,5 | 29 | 30 | 30 |
| eta sol. T-r (°C) | 1020 | 996 | 1021 | 0 | 1024 | 0 | 1020 | 1004 |
| eta max Vol. (%) | 2,5 | 2,8 | 2,9 | 0 | 3,3 | 0 | 4,7 | 0,9 |
| eta sol. T-r (°C) | | 970 | 968 | 0 | 953 | 0 | 915 | 946 |
| Delta sol. T-r (°C) | 1060 | 1014 | 1000 | 971 | 993 | 964 | 981 | 956 |
| Delta Vol.(%) bei 600°C | 2 | 4,5 | 4,7 | 2,6 | 4,4 | 2,8 | 4,6 | 2,6 |

(fortgesetzt)

| Variante , | 420420 | 1 | 30 | 31 | 32 | 33 | 34 | 35 |
|---|---|---|---|---|---|---|---|---|
| sigma sol. T-r (°C) | - | 774 | 800 | 779 | 837 | 808 | 931 | 910 |
| sigma Vol.(%) bei 600°C | - | 8,6 | 8,5 | 7 | 9,3 | 7 | 11 | 8,9 |

Aus den Tabellen 9a und 9b ist zu erkennen, dass die gamma'-solvus-Temperatur mit steigendem Mo-Gehalt leicht fällt. Der gamma'-Anteil bei 600°C steigt leicht an_ mit steigendem Mo-Gehalt. Die Erhöhung des Mo-Gehaltes bei gleichbleibendem Nb-Gehalt stabilisiert Delta-, eta- sowie sigma-Phasen. Aus diesem Grund soll der Nb-Gehalt angepasst werden, wenn die Legierungen hohe Gehalte von Mischkristallverfestiger für die y-Matrix Verfestigung bei hohen Temperaturen benötigen.

In den Tabellen 9c-1 bis 9c-3 sind die berechneten Werte der Anteile und Partikelgrößen der gamma'-Phase sowie die prüftemperaturabhängigen Werte der Streckgrenze Rp0.2 der Legierungen aus Tab. 9a für die Ausscheidungswärmebehandlungen 700°C/8h, 850°C/8h und 850°C/24h für die Korngröße ASTM 4.5 gelistet.

| Variante | 1 | 30 | 31 | 32 | 33 | 34 | 35 |
|---|---|---|---|---|---|---|---|
| Gamma' [%] | 31 | 31.4 | 30.7 | 31.5 | 30.8 | 31.9 | 30.7 |
| Gamma' [nm] | 24 | 24 | 24 | 24 | 24 | 24 | 24 |
| Rp0.2 [MPa] | | | | | | | |
| 650°C | 871 | 873 | 868 | 875 | 871 | 882 | 880 |
| 700°C | 875 | 877 | 872 | 879 | 875 | 886 | 884 |
| 750°C | 848 | 850 | 844 | 852 | 846 | 855 | 853 |
| 800°C | 690 | 696 | 676 | 701 | 682 | 726 | 706 |
| 850°C | 474 | 477 | 465 | 480 | 468 | 489 | 478 |
| 900°C | 328 | 329 | 321 | 331 | 322 | 332 | 325 |

Tabelle 9c-1: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 700°C / 8h für eine Korngröße ASTM 4.5 der Legierungsanalysen aus Tab. 9a.

| Variante | 1 | 30 | 31 | 32 | 33 | 34 | 35 |
|---|---|---|---|---|---|---|---|
| Gamma' [%] | 25 | 24.9 | 22.6 | 25 | 23.5 | 25.1 | 23.8 |
| Gamma' [nm] | 45 | 45 | 45 | 45 | 45 | 45 | 45 |
| Rp0.2 [MPa] | | | | | | | |
| 650°C | 896 | 900 | 849 | 904 | 874 | 914 | 890 |
| 700°C | 886 | 890 | 839 | 894 | 864 | 904 | 880 |
| 750°C | 852 | 860 | 806 | 867 | 835 | 893 | 867 |
| 800°C | 643 | 648 | 607 | 653 | 629 | 673 | 651 |
| 850°C | 502 | 505 | 473 | 509 | 490 | 522 | 505 |
| 900°C | 348 | 350 | 336 | 351 | 339 | 355 | 343 |

Tabelle 9c-2: Berechnete Anteile und Partikelgrößen der Ausscheidungsphase gamma' und Werte der mechanischen Streckgrenze Rp0.2 in Abhängigkeit der Prüftemperaturen von 650°C bis 900°C nach einer Ausscheidungswärmebehandlung von 850°C / 8h für eine Korngröße ASTM 4.5 der Legierungsanalysen aus Tab. 9a.

| Variante | 1 | 30 | 31 | 32 | 33 | 34 | 35 |
|---|---|---|---|---|---|---|---|
| Gamma' [%] | 25 | 24.9 | 22.6 | 25 | 23.5 | 25.1 | 23.8 |
| Gamma' [nm] | 64 | 64 | 64 | 64 | 64 | 64 | 64 |
| 650 | 807 | 811 | 766 | 815 | 788 | 826 | 804 |
| 700 | 797 | 801 | 756 | 805 | 779 | 817 | 795 |
| 750 | 787 | 791 | 746 | 795 | 769 | 806 | 785 |
| 800 | 613 | 619 | 580 | 624 | 601 | 644 | 623 |
| 850 | 472 | 576 | 446 | 480 | 462 | 493 | 477 |
| 900 | 324 | 326 | 313 | 327 | 315 | 331 | 320 |

Tabelle 9c-3: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 24h für eine Korngröße ASTM 4.5 der Legierungsanalysen aus Tab. 9a.

Die höheren Mo-Gehalte der Legierungen 30 bis 35 von 3,5%, 4% und 6% (bei zwei unterschiedlichen Nb-Gehalten von 5,4% und 5%) zeigen kaum einen merklichen Effekt auf das Niveau der Streckgrenzwerte Rp0.2 im Vergleich zur Referenzlegierung 1, die einen Mo-Gehalt von 3% aufweist.

In der Tabelle 10a sind neben den Analysen der Referenz-Charge 420420 und der Referenz-Analysen-Nummern 1 und 9 weitere Analysen mit Variationen in den Gehalten an Nb, Ta, W und Hf betrachtet. Dies sind die Analysen-Nummern 38 bis 48. In der Tabelle 10b sind die Ergebnisse der Berechnungen für diese Analysen-Variationen gelistet. Im Vergleich zu Standard VDM Alloy 780 erhöht sich der y'-Volumenanteil bis max. 36,5 %. Außerdem weisen alle aufgelisteten Legierungen keine eta-Phase auf. In diesen Legierungen kann ein fast gleiches y'-Phase Volumen bei deutlich niedriger y'-solvus Temperatur erreicht werden. Durch das Legieren von Ta kann neben der Verfestigung der y'-Phase höhere Fehlpassung und damit verbundene langsame Ausscheidungskinetik der y'-Phase realisiert werden. Bei den Legierungen 9, 39, 43-48 können geringe Mengen an Delta-Phase an den Korngrenzen bei 900°C ausscheiden, was sich positiv auf Hochtemperatureigenschaften auswirkt, da die Korngrenzen verfestigt werden. Außerdem ist die Stabilität der sigma-Phase deutlich geringer im Vergleich zu alloy 939.

66

Tabelle 10a: Ausgewählte Legierungsanalysen mit Variation von Ni-, Nb-, Ta-, W- und Hf-Gehalten.

| Variante | 420420 | 1 | 9 | 38 | 39 | 40 | 41 | 42 | 43 | 44 | 45 | 46 | 47 | 48 |
|---|---|---|---|---|---|---|---|---|---|---|---|---|---|---|
| C | 0.021 | 0.021 | 0.021 | 0.021 | 0.021 | 0.021 | 0.021 | 0.021 | 0.021 | 0.021 | 0.021 | 0.021 | 0.021 | 0.021 |
| S | 0.0005 | 0.0005 | 0.0005 | 0.0005 | 0.0005 | 0.0005 | 0.0005 | 0.0005 | 0.0005 | 0.0005 | 0.0005 | 0.0005 | 0.0005 | 0.0005 |
| N | 0.008 | 0.008 | 0.008 | 0.008 | 0.008 | 0.008 | 0.008 | 0.008 | 0.008 | 0.008 | 0.008 | 0.008 | 0.008 | 0.008 |
| Cr | 17.75 | 18 | 18 | 18 | 18 | 18 | 18 | 18 | 18 | 18 | 18 | 18 | 18 | 18 |
| Ni | 45.96 | 46.018 | 50.118 | 51.508 | 49.618 | 51.018 | 50.518 | 49.518 | 49.628 | 49.128 | 48,128 | 49.608 | 49.108 | 48.108 |
| Mn | 0.018 | 0.018 | 0.018 | 0.018 | 0.018 | 0.018 | 0.018 | 0.018 | 0.018 | 0.018 | 0.018 | 0.018 | 0.018 | 0.018 |
| Si | 0.065 | 0.065 | 0.065 | 0.065 | 0.065 | 0.065 | 0.065 | 0.065 | 0.065 | 0.065 | 0.065 | 0.065 | 0.065 | 0.065 |
| Mo | 2.94 | 3 | 3 | 3 | 3 | 3 | 3 | 3 | 3 | 3 | 3 | 3 | 3 | 3 |
| Ti | 0.31 | 0.3 | 0.3 | 0.3 | 0.3 | 0.3 | 0.3 | 0.3 | 0.3 | 0.3 | 0.3 | 0.3 | 0.3 | 0.3 |
| Nb | 5.41 | 5.4 | 5.4 | 4 | 5.4 | 4 | 4 | 4 | 5.4 | 5.4 | 5.4 | 5.4 | 5.4 | 5.4 |
| Ta | 0.01 | 0.01 | 0.01 | 0.01 | 0.5 | 0.5 | 1 | 2 | 0.01 | 0.01 | 0.01 | 0.01 | 0.01 | 0.01 |
| Cu | 0.01 | 0.01 | 0.01 | 0.01 | 0.01 | 0.01 | 0.01 | 0.01 | 0.01 | 0.01 | 0.01 | 0.01 | 0.01 | 0.01 |
| Fe | 0.67 | 0.43 | 0.43 | 0.43 | 0.43 | 0.43 | 0.43 | 0.43 | 0.43 | 0.43 | 0.43 | 0.43 | 0.43 | 0.43 |
| P | 0.011 | 0.011 | 0.011 | 0.011 | 0.011 | 0.011 | 0.011 | 0.011 | 0.011 | 0.011 | 0.011 | 0.011 | 0.011 | 0.011 |
| Al | 2.16 | 2.2 | 2.6 | 2.6 | 2.6 | 2.6 | 2.6 | 2.6 | 2.6 | 2.6 | 2.6 | 2.6 | 2.6 | 2.6 |
| Mg | 0.0008 | 0.0008 | 0.0008 | 0.0008 | 0.0008 | 0.0008 | 0.0008 | 0.0008 | 0.0008 | 0.0008 | 0.0008 | 0.0008 | 0.0008 | 0.0008 |
| Ca | 0.0004 | 0.004 | 0.004 | 0.004 | 0.004 | 0.004 | 0.004 | 0.004 | 0.004 | 0.004 | 0.004 | 0.004 | 0.004 | 0.004 |
| V | 0.002 | 0.002 | 0.002 | 0.002 | 0.002 | 0.002 | 0.002 | 0.002 | 0.002 | 0.002 | 0.002 | 0.002 | 0.002 | 0.002 |
| Zr | 0.002 | 0.002 | 0.002 | 0.002 | 0.002 | 0.002 | 0.002 | 0.002 | 0.002 | 0.002 | 0.002 | 0.002 | 0.002 | 0.002 |
| W | 0.02 | 0.02 | 0.02 | 0.02 | 0.02 | 0.02 | 0.02 | 0.02 | 0.5 | 1 | 2 | 0.02 | 0,02 | 0.02 |
| Co | 24.63 | 24.5 | 20 | 20 | 20 | 20 | 20 | 20 | 20 | 20 | 20 | 20 | 20 | 20 |
| Hf | 0 | 0 | 0 | 0 | 0 | 0 | 0 | 0 | 0 | 0 | 0 | 0.5 | 1 | 2 |
| B | 0.004 | 0.004 | 0.004 | 0.004 | 0.004 | 0.004 | 0.004 | 0.004 | 0.004 | 0.004 | 0.004 | 0.004 | 0.004 | 0.004 |
| O | 0.002 | 0.002 | 0.002 | 0.002 | 0.002 | 0.002 | 0.002 | 0.002 | 0.002 | 0.002 | 0.002 | 0.002 | 0.002 | 0.002 |

EP 3 994 288 B1

Tabelle 10b: Berechnete Eigenschaften der Phasen und Legierungen aus Tab. 10a.

| Variante | 420420 | 1 | 9 | 38 | 39 | 40 | 41 | 42 | 43 | 44 | 45 | 46 | 47 | 48 |
|---|---|---|---|---|---|---|---|---|---|---|---|---|---|---|
| y'sol. T-r (°C) | 990 | 1016 | 1040 | 1022 | 1044 | 1030 | 1037 | 1045 | 1038 | 1039 | 1039 | 1045 | 1048 | 1060 |
| y' Vol. (%) bei 600°C | 26 | 29 | 35 | 33 | 35 | 33,7 | 34,6 | 36,5 | 35,1 | 35,3 | 35,8 | 35 | 36 | 36 |
| eta sol. T-r (°C) | 1020 | 996 | 0 | 0 | 0 | 0 | 0 | 0 | 0 | 0 | 0 | 0 | 0 | 0 |
| eta max Vol. (%) | 2,5 | 2,8 | 0 | 0 | 0 | 0 | 0 | 0 | 0 | 0 | 0 | 0 | 0 | 0 |
| eta sol. T-r (°C) | | 970 | 0 | 0 | 0 | 0 | 0 | 0 | 0 | 0 | 0 | 0 | 0 | 0 |
| Delta sol. T-r (°C) | 1060 | 1014 | 960 | 0 | 972 | 0 | 0 | 0 | 958 | 956 | 950 | 968 | 968 | 964 |
| Delta Vol.(%) bei 600°C | 2 | 4,5 | 2,4 | 0 | 2,7 | 0 | 0 | 0 | 2,3 | 2,6 | 2,5 | 2,3 | 2,3 | 2,3 |
| sigma sol. T-r (°C) | | 774 | 799 | 719 | 818 | 744 | 762 | 798 | 816 | 826 | 852 | 819 | 838 | 875 |
| sigma Vol.(%) bei 600°C | | 8,6 | 10 | 5,3 | 11 | 6,5 | 7,4 | 10 | 10,6 | 11,7 | 13 | 11,7 | 12,5 | 15 |

In den Tabellen 10c-1 bis 10c-3 sind die berechneten Werte der Anteile und Partikelgrößen der gamma'-Phase sowie die prüftemperaturabhängigen Werte der Streckgrenze Rp0.2 der Legierungen aus Tab. 10a für die Ausscheidungswärmebehandlungen 700°C/8h, 850°C/8h und 850°C/24h für die Korngröße ASTM 4.5 gelistet.

| Variante | 1 | 9 | 38 | 39 | 40 | 41 | 42 | 43 | 44 | 45 | 46 | 47 | 48 |
|---|---|---|---|---|---|---|---|---|---|---|---|---|---|
| Gamma' [%] | 31 | 34.9 | 30.4 | 35.8 | 31.3 | 32.7 | 34.4 | 35.2 | 35.5 | 36.1 | 36 | 36.8 | 38.6 |
| Gamma' [nm] | 24 | 25 | 25 | 25 | 25 | 25 | 25 | 25 | 25 | 25 | 25 | 25 | 25 |
| Rp0.2 [MPa] | | | | | | | | | | | | | |
| 650°C | 871 | 933 | 917 | 935 | 922 | 925 | 929 | 935 | 936 | 937 | 936 | 938 | 943 |
| 700°C | 875 | 938 | 921 | 940 | 927 | 930 | 934 | 940 | 941 | 942 | 941 | 943 | 948 |
| 750°C | 848 | 914 | 888 | 914 | 895 | 898 | 908 | 912 | 913 | 914 | 914 | 916 | 922 |
| 800°C | 690 | 701 | 635 | 721 | 652 | 669 | 706 | 707 | 713 | 726 | 714 | 737 | 778 |
| 850°C | 474 | 497 | 447 | 510 | 465 | 476 | 504 | 500 | 503 | 508 | 508 | 520 | 548 |
| 900°C | 328 | 356 | 323 | 365 | 334 | 340 | 365 | 357 | 359 | 361 | 365 | 373 | 394 |

Tabelle 10c-1:  Berechnete Anteile und Partikelgrößen der Ausscheidungsphase gamma' und Werte der mechanischen Streckgrenze Rp0.2 in Abhängigkeit der Prüftemperaturen von 650°C bis 900°C nach einer Ausscheidungswärmebehandlung von 700°C / 8h für eine Korngröße ASTM 4.5 der Legierungsanalysen aus Tab. 10a.

| Variante | 1 | 9 | 38 | 39 | 40 | 41 | 42 | 43 | 44 | 45 | 46 | 47 | 48 |
|---|---|---|---|---|---|---|---|---|---|---|---|---|---|
| Gamma' [%] | 25 | 29.3 | 22.8 | 30.5 | 24.9 | 26.4 | 28.9 | 29.6 | 29.9 | 30.4 | 30 | 31.4 | 33.7 |
| Gamma' [nm] | 45 | 45 | 44 | 44 | 44 | 44 | 44 | 44 | 44 | 44 | 44 | 44 | 44 |
| Rp0.2 [MPa] | | | | | | | | | | | | | |
| 650°C | 896 | 987 | 857 | 1016 | 903 | 935 | 986 | 999 | 1004 | 1015 | 1007 | 1033 | 1077 |
| 700°C | 886 | 975 | 847 | 1005 | 893 | 924 | 974 | 887 | 993 | 1003 | 995 | 1021 | 1065 |
| 750°C | 852 | 874 | 754 | 909 | 793 | 829 | 891 | 886 | 895 | 914 | 900 | 936 | 1007 |
| 800°C | 643 | 671 | 577 | 698 | 607 | 635 | 682 | 680 | 686 | 699 | 690 | 718 | 770 |
| 850°C | 502 | 532 | 455 | 554 | 480 | 502 | 540 | 539 | 544 | 553 | 547 | 569 | 609 |
| 900°C | 348 | 383 | 328 | 400 | 347 | 358 | 393 | 387 | 390 | 396 | 398 | 412 | 444 |

Tabelle 10c-2:  Berechnete Anteile und Partikelgrößen der Ausscheidungsphase gamma' und Werte der mechanischen Streckgrenze Rp0.2 in Abhängigkeit der Prüftemperaturen von 650°C bis 900°C nach einer Ausscheidungswärmebehandlung von 850°C / 8h für eine Korngröße ASTM 4.5 der Legierungsanalysen aus Tab. 10a.

| Variante | 1 | 9 | 38 | 39 | 40 | 41 | 42 | 43 | 44 | 45 | 46 | 47 | 48 |
|---|---|---|---|---|---|---|---|---|---|---|---|---|---|
| Gamma' [%] | 25 | 29.3 | 22.8 | 30.5 | 24.9 | 26.4 | 28.9 | 29.6 | 29.9 | 30.4 | 30 | 31.4 | 33.7 |
| Gamma' [nm] | 64 | 62 | 62 | 62 | 62 | 62 | 62 | 62 | 62 | 62 | 62 | 62 | 62 |
| 650 | 807 | 921 | 773 | 917 | 814 | 842 | 888 | 901 | 906 | 917 | 908 | 932 | 973 |
| 700 | 797 | 909 | 763 | 906 | 805 | 832 | 878 | 890 | 896 | 906 | 897 | 921 | 961 |
| 750 | 787 | 897 | 726 | 875 | 763 | 798 | 859 | 852 | 861 | 890 | 868 | 901 | 948 |
| 800 | 613 | 711 | 549 | 664 | 578 | 604 | 650 | 647 | 653 | 666 | 657 | 683 | 733 |
| 850 | 472 | 549 | 428 | 520 | 451 | 472 | 507 | 507 | 511 | 521 | 514 | 535 | 573 |
| 900 | 324 | 357 | 305 | 371 | 322 | 333 | 365 | 359 | 362 | 368 | 369 | 382 | 413 |

Tabelle 10c-3: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 24h für eine Korngröße ASTM 4.5 der Legierungsanalysen aus Tab. 10a.

Betrachten wir zunächst die Legierungen 9 und 38 bis 42, die konstante Gehalte an Co (20%), Al (2,6%) und Ti (0,3%) enthalten und in den Gehalten der Elemente Nb und Ta variieren. Hierunter erzielen die Legierungen 9 und 39, die beide den etwas höheren Nb-Gehalt von 5,4% enthalten, die höchsten Werte der Streckgrenzen . Rp0.2. Im Fall der Ausscheidungswärmebehandlung 850°C/8h weist die Legierung 39, die mit 0,5% einen höheren Ta-Gehalt enthält als Legierung 9, etwas größere Werte der Streckgrenzen Rp0.2 auf. Das Niveau der Werte der Streckgrenzen der Legierungen 38, 40 und 41 liegt niedriger im Vergleich zu dem der beiden Legierungen 9 und 39. Die Legierungen 38, 40 und 41 beinhalten mit 5% Nb einen etwas niedrigeren Nb-Gehalt als die beiden Legierungen 9 und 39. Unter den drei Legierungen 38, 40 und 41 erzielt die Legierung 41 etwas höhere Streckgrenzwerte. Die Legierung beinhaltet mit 1 % einen etwas höheren Ta-Gehalt. Die Werte der Streckgrenzen der Legierung 42 liegt nahezu vergleichbar auf dem Niveau der Streckgrenzwerte der Legierung 9, obwohl Legierung 42 einen niedrigeren Nb-Gehalt beinhaltet, allerdings mit 2% auch den in dieser Legierungsserie höchsten Ta-Gehalt.

Betrachten wir nun die Legierungen 43, 44 und 45 mit W-Gehalten von 0,5%, 1% und 2% im Vergleich zur Legierung 9, die mit 0,02% nur einen sehr geringen Gehalt an W enthält. Im Fall der Ausscheidungswärmebehandlung 850°C/8h steigt das. Niveau der Werte der Streckgrenze der Legierungen 43, 44 und 45 mit steigendem W-Gehalt nur geringfügig gegenüber dem Niveau der Streckgrenzwerte der Legierung 9.

Betrachten wir nun die Legierungen 46, 47 und 48 mit Hf-Gehalten von 0,5%, 1% und 2% im Vergleich zur Legierung 9, die kein Hf enthält. Im Fall der Ausscheidungswärmebehandlung 850°C/8h steigt das Niveau der Werte der Streckgrenzen mit wachsendem Hf-Gehalt, so dass die Werte der Streckgrenzen der Legierung 48, d.h. mit dem in dieser Legierungsserie höchsten Hf-Gehalt (2%) deutlich höher sind im Vergleich zur Hf-freien Legierung 9.

In der Tabelle 11a sind neben den Analysen der Referenz-Charge 420420 und der Referenz-Analysen-Nummer 1 weitere Analysen mit Variationen in den Gehalten an Nb, Ta und W betrachtet. Dies sind die Analysen-Nummern 50 bis 57. In der Tabelle 11b sind die Ergebnisse der Berechnungen für diese Analysen-Variationen gelistet. Für die Hochtemperatur-Anwendungen können je nach Bauteilanforderungen hohe thermo-mechanische Belastungen auftreten, für diese Anwendungen kann es ratsam sein, teilweise Nb mit Ta zu ersetzen. Ta verlangsamt neben der Substitution von Al in y'-Phase die Diffusionsvorgänge in der Legierung. Außerdem wird diese stark erhöht. Die Ausscheidungskinetik wird dabei günstig für die Prozessierbarkeit beeinträchtigt. Bei den Legierungen 50-52 und 57 kann die Delta-Phase für die Hochtemperatur Korngrenzenverfestigung ausgenutzt werden.

Tabelle 11 a: Ausgewählte Legierungsanalysen mit Variation von Ni-, Nb-, Ta-, W-Gehalte

| Variante | 420420 | 1 | 50 | 51 | 52 | 53 | 54 | 55 | 56 | 57 |
|---|---|---|---|---|---|---|---|---|---|---|
| C | 0.021 | 0.021 | 0.021 | 0.021 | 0.021 | 0.021 | 0.021 | 0.018 | 0.018 | 0.018 |
| S | 0.0005 | 0.0005 | 0.0005 | 0.0005 | 0.0005 | 0.0005 | 0.0005 | 0.0005 | 0.0005 | 0.0005 |
| N | 0.008 | 0.008 | 0.008 | 0.008 | 0.008 | 0.008 | 0.008 | 0.008 | 0.008 | 0.008 |
| Cr | 17.75 | 18 | 18 | 18 | 18 | 18 | 18 | 18 | 18 | 18 |
| Ni | 45.96 | 46.018 | **49.038** | **49.238** | **48.738** | **49.218** | **50.818** | **49.318** | 49.218 | 49.518 |

(fortgesetzt)

| Variante | 420420 | 1 | 50 | 51 | 52 | 53 | 54 | 55 | 56 | 57 |
|---|---|---|---|---|---|---|---|---|---|---|
| Mn | 0.018 | 0.018 | 0.018 | 0.018 | 0.018 | 0.018 | 0.018 | 0.018 | 0.018 | 0.018 |
| Si | 0.065 | 0.065 | 0.065 | 0.065 | 0.065 | 0.065 | 0.065 | 0.065 | 0.065 | 0.065 |
| Mo | 2.94 | 3 | **3.5** | **3.5** | **4** | **4** | **3** | **3** | **3** | **3** |
| Ti | 0.31 | 0.3 | **0.3** | **0.1** | **0.1** | **0.1** | **0.1** | **0.1** | **0.1** | **0.1** |
| Nb | 5.41 | 5.4 | **5** | **5** | **5** | **4.5** | **3.5** | **5** | **5** | **5** |
| Ta | 0.01 | 0.01 | 0.5 | 0.5 | 0.5 | 0.5 | 0.5 | **1** | **1** | **1** |
| Cu | 0.01 | 0.01 | 0.01 | 0.01 | 0.01 | 0.01 | 0.01 | 0.01 | 0.01 | 0.01 |
| Fe | 0.67 | 0.43 | 0.43 | 0.43 | 0.43 | 0.43 | 0.43 | 0.43 | 0.43 | 0.43 |
| P | 0.011 | 0.011 | 0.011 | 0.011 | 0.011 | 0.011 | 0.011 | 0.011 | 0.011 | 0.011 |
| Al | 2.16 | 2.2 | **2.6** | **2.6** | **2.6** | **2.6** | **3.5** | **3** | **3.1** | **2.8** |
| Mg | 0.0008 | 0.0008 | 0.0008 | 0.0008 | 0.0008 | 0.0008 | 0.0008 | 0.0008 | 0.0008 | 0.0008 |
| Ca | 0.0004 | 0.004 | 0.004 | 0.004 | 0.004 | 0.004 | 0.004 | 0.004 | 0.004 | 0.004 |
| V | 0.002 | 0.002 | 0.002 | 0.002 | 0.002 | 0.002 | 0.002 | 0.002 | 0.002 | 0.002 |
| Zr | 0.002 | 0.002 | 0.002 | 0.002 | 0.002 | 0.002 | 0.002 | 0.002 | 0.002 | 0.002 |
| W | 0.02 | 0.02 | **0.5** | **0.5** | **0.5** | **0.5** | 0.02 | 0.02 | 0.02 | 0.02 |
| Co | 24.63 | 24.5 | **20** | **20** | **20** | **20** | **20** | **20** | **20** | **20** |
| Hf | 0 | 0 | 0 | 0 | 0 | 0 | 0 | 0 | 0 | 0 |
| B | 0.004 | 0.004 | 0.004 | 0.004 | 0.004 | 0.004 | 0.004 | 0.004 | 0.004 | 0.004 |
| O | 0.002 | 0.002 | 0.002 | 0.002 | 0.002 | 0.002 | 0.002 | 0.002 | 0.002 | 0.002 |

Tabelle 11b: Berechnete Eigenschaften der Phasen und Legierungen aus Tab. 11a.

| Variante | 420420 | 1 | 50 | 51 | 52 | 53 | 54 | 55 | 56 | 57 |
|---|---|---|---|---|---|---|---|---|---|---|
| y'sol. T-r (°C) | 990 | 1016 | 1040 | 1027 | 1026 | 1020 | 1065 | 1058 | 1064 | 1046 |
| y' Vol. (%) bei 600°C | 26 | 29 | 36 | 34,2 | 34,4 | 34,4 | 40 | 40,2 | 41 | 37,5 |
| eta sol. T-r (°C) | 1020 | 996 | 0 | 0 | 0 | 0 | 0 | 0 | 0 | 0 |
| eta max Vol. (%) | 2,5 | 2,8 | 0 | 0 | 0 | 0 | 0 | 0 | 0 | 0 |
| eta sol. T-r (°C) | | 970 | 0 | 0 | 0 | 0 | 0 | 0 | 0 | 0 |
| Delta sol. T-r (°C) | 1060 | 1014 | 916 | 936 | 930 | 0 | 0 | 0 | 0 | 888 |
| Delta Vol.(%) bei 600°C | 2 | 4,5 | 1,6 | 1,9 | 1,6 | 0 | 0 | 0 | 0 | 0,75 |
| sigma sol. T-r (°C) | - | 774 | 840 | 823 | 850 | 829 | 806 | 846 | 860 | 824 |
| sigma Vol.(%) bei 600°C | - | 8,6 | 10,8 | 10 | 10,5 | 8,8 | 11 | 13,4 | 13,7 | 12 |

In den Tabellen 11c-1 bis 11c-3 sind die berechneten Werte der Anteile und Partikelgrößen der gamma'-Phase sowie die prüftemperaturabhängigen Werte der Streckgrenze Rp0.2 der Legierungen aus Tab. 11a für die Ausscheidungswärmebehandlungen 700°C/8h, 850°C/8h und 850°C/24h für die Korngröße ASTM 4.5 gelistet.

| Variante | 1 | 50 | 51 | 52 | 53 | 54 | 55 | 56 | 57 |
|---|---|---|---|---|---|---|---|---|---|
| Gamma' [%] | 31 | 35.1 | 34.2 | 34.3 | 32.5 | 36.8 | 37.9 | 39 | 36.4 |
| Gamma' [nm] | 24 | 23 | 23 | 23 | 23 | 27 | 26 | 26 | 25 |
| Rp0.2 [MPa] | | | | | | | | | |
| 650°C | 871 | 899 | 873 | 875 | 872 | 968 | 950 | 957 | 920 |
| 700°C | 875 | 904 | 877 | 880 | 876 | 973 | 956 | 962 | 925 |
| 750°C | 848 | 877 | 849 | 852 | 847 | 937 | 927 | 930 | 897 |
| 800°C | 690 | 700 | 671 | 677 | 653 | 707 | 756 | 764 | 720 |
| 850°C | 474 | 492 | 469 | 471 | 457 | 509 | 535 | 541 | 508 |
| 900°C | 328 | 351 | 330 | 331 | 322 | 374 | 386 | 391 | 364 |

Tabelle 11c-1: Berechnete Anteile und Partikelgrößen der Ausscheidungsphase gamma' und Werte der mechanischen Streckgrenze Rp0.2 in Abhängigkeit der Prüftemperaturen von 650°C bis 900°C nach einer Ausscheidungswärmebehandlung von 700°C / 8h für eine Korngröße ASTM 4.5 der Legierungsanalysen aus Tab. 11a.

| Variante | 1 | 50 | 51 | 52 | 53 | 54 | 55 | 56 | 57 |
|---|---|---|---|---|---|---|---|---|---|
| Gamma' [%] | 25 | 29.4 | 27.4 | 27.5 | 25.6 | 29.9 | 32.4 | 33.4 | 30.4 |
| Gamma' [nm] | 45 | 45 | 45 | 45 | 45 | 45 | 44 | 44 | 44 |
| Rp0.2 [MPa] | | | | | | | | | |
| 650°C | 896 | 991 | 943 | 947 | 910 | 982 | 1043 | 1061 | 1005 |
| 700°C | 886 | 980 | 932 | 937 | 899 | 971 | 1031 | 1049 | 993 |
| 750°C | 852 | 891 | 845 | 853 | 814 | 882 | 960 | 982 | 912 |
| 800°C | 643 | 682 | 646 | 651 | 621 | 677 | 735 | 752 | 698 |
| 850°C | 502 | 540 | 510 | 514 | 490 | 537 | 582 | 596 | 553 |
| 900°C | 348 | 388 | 364 | 366 | 348 | 398 | 429 | 437 | 404 |

Tabelle 11c-2: Berechnete Anteile und Partikelgrößen der Ausscheidungsphase gamma' und Werte der mechanischen Streckgrenze Rp0.2 in Abhängigkeit der Prüftemperaturen von 650°C bis 900°C nach einer Ausscheidungswärmebehandlung von 850°C / 8h für eine Korngröße ASTM 4.5 der Legierungsanalysen aus Tab. 11a.

| Variante | 1 | 50 | 51 | 52 | 53 | 54 | 55 | 56 | 57 |
|---|---|---|---|---|---|---|---|---|---|
| Gamma' [%] | 25 | 29.4 | 27.4 | 27.5 | 25.6 | 29.9 | 32.4 | 33.4 | 30.4 |
| Gamma' [nm] | 64 | 63 | 63 | 63 | 63 | 62 | 61 | 61 | 61 |
| Rp0.2 [MPa] | | | | | | | | | |
| 650°C | 807 | 896 | 853 | 857 | 823 | 891 | 946 | 962 | 911 |
| 700°C | 797 | 885 | 843 | 847 | 813 | 880 | 934 | 951 | 900 |
| 750°C | 787 | 859 | 815 | 822 | 785 | 851 | 922 | 938 | 879 |
| 800°C | 613 | 650 | 616 | 621 | 593 | 646 | 701 | 717 | 667 |
| 850°C | 472 | 508 | 481 | 484 | 462 | 506 | 549 | 562 | 552 |
| 900°C | 324 | 361 | 339 | 340 | 324 | 371 | 400 | 407 | 376 |

Tabelle 11c-3: Berechnete Anteile und Partikelgrößen der Ausscheidungsphase gamma` und Werte der mechanischen Streckgrenze Rp0.2 in Abhängigkeit der Prüftemperaturen von 650°C bis 900°C nach einer Ausscheidungswärmebehandlung von 850°C / 24h für eine Korngröße ASTM 4.5 der Legierungsanalysen aus Tab. 11a.

Insbesondere, wenn man die Daten der Tab. 11c-2 betrachtet, d.h. Im Fall der Ausscheidungswärmebehandlung 850°C/8h, ist festzustellen, dass die Legierungen 54, 55, 56 und 57, die mit 3,5%, 3%, 3,1% und 2,8% die in dieser Legierungsserie höchsten Al-Gehalten aufweisen, ein hohes Niveau der Streckgrenzenwerte erzielen. Die Legierungen 54 bis 57 enthalten mit 0,5% bzw. 1 % zudem einen höheren Ta-Gehalt auf; allerdings mit nur 0,1% einen niedrigen Ti-Gehalt. Die Legierung 50, die mit 2,6% einen nicht so hohen Al-Gehalt aufweist, erzielt ebenfalls ein recht hohes Niveau der Streckgrenzenwerte. Neben 0,5% Ta enthält die Legierung 50 den mit 0,3% etwas höheren Ti-Gehalt.

In der Tabelle 12 sind die erfindungsgemäßen Beispielanalysen dargestellt, die durch angepasste Zusammensetzungen die konventionellen Benchmark Legierungen aufgrund der verbesserten Prozessierbarkeit mit gleich und/oder besseren Hochtemperatureigenschaften substituieren können:

Tabelle 12

| Benchmark Legierung | Alloy 718 Waspaloy Udimet 720 | VDM Alloy 780 | Alloy 939 | | Alloy 738LC | |
|---|---|---|---|---|---|---|
| Anforderungen an Gefüge | 25%<y'-Vol.(%) <30%, Delta-Vol.< 6% | 25%<y'-Vol.(%) <30%, Delta-Vol.< 6% Keine eta-Phase | 30%<y'-Vol.(%) ≤35%, keine eta-Phase | | 35%<y'-Vol.(%) ≤45%, keine eta-Phase | |
| | | | Mit Delta-Ph. | Ohne Delta-Ph. | Mit Delta-Ph. | Ohne Delta-Ph. |
| Gruppen-Nr. | 0 | 1 | 2 | 3 | 4 | 5 |
| Legierungen | 1;27 | 5; 6; 7; 8; | 9; 28; 29; 39; 46; 51; 52 | 38; 40; 41; 53 | 43; 44; 45; 47; 48; 50; 57 | 42; 55; 56 |

(fortgesetzt)

| Benchmark Legierung | Alloy 718 Waspaloy Udimet 720 | VDM Alloy 780 | Alloy 939 | | Alloy 738LC | |
|---|---|---|---|---|---|---|
| Anforderungen an Gefüge | 25%<y'-Vol.(%) <30%, Delta-Vol.< 6% | 25%<y'-Vol.(%) <30%, Delta-Vol.< 6% Keine eta-Phase | 30%<y'-Vol.(%) ≤35%, keine eta-Phase | | 35%<y'-Vol.(%) ≤45%, keine eta-Phase | |
| | | | Mit Delta-Ph. | Ohne Delta-Ph. | Mit Delta-Ph. | Ohne Delta-Ph. |
| Elementen Bereiche basierend auf VDM Alloy 780 | | 1,8 - 2,4 Al<br><br>15 -23 Co | 2,3-2,8 Al<br><br>19-25 Co<br><br>4,5-5,5 Nb<br><br>3,0-5,0 Mo | 2,4-3,0 Al<br><br>18-22 Co<br><br>3,5-5,0 Nb | 2,4-3,0 Al<br><br>18-22 Co<br><br>4,5-6,0 Nb | 2,4-3,3 Al<br><br>18-22 Co<br><br>3,8-6,0 Nb<br><br>0,5-2,5 Ta |

Gruppe 0: Standard VDM alloy 780 (Tabelle 13)

Gruppe 1: Angepasste Zusammensetzungen von VDM Alloy 780 Pulver - Tabelle 14 (a,b) mit verbesserter Prozessierbarkeit und Gefügestabilität.

Gruppe 2: Optimierte Zusammensetzungen von VDM Alloy 780HT Pulver für die Anwendungen bei höheren Temperaturen im Vergleich zu VDM Alloy 780 Standard Pulver. Diese Legierungen weisen erhöhten y'-Volumen Anteil auf, allerdings begrenzt auf 35%. In dieser Gruppe sind die Legierungen beispielhaft dargestellt, die im Temperaturbereich zwischen 800°C und 900°C geringe Anteile von Delta-Phase aufweisen (Tab. 15).

Gruppe 3: Optimierte Zusammensetzungen von VDM Alloy 780HT Pulver für die Anwendungen bei höheren Temperaturen im Vergleich zu VDM Alloy 780 Standard Pulver. Diese Legierungen weisen erhöhten y'-Volumen Anteil auf, allerdings begrenzt auf 35%. In dieser Gruppe sind die Legierungen beispielhaft dargestellt, die im Vergleich zu Gruppe 2 keine Delta-Phase aufweisen (Tabelle 16).

Gruppe 4 und 5: Optimierte Zusammensetzungen von VDM Alloy 780HT Pulver für die Anwendungen bei höheren Temperaturen im Vergleich zu VDM Alloy 780 Pulver. Diese Legierungen weisen höhere Volumenanteile von y'-Phase auf. In Analogie zu Gruppe 2 und 3 sind die Legierungen mit und ohne Delta-Phase zusammengefasst. In allen 5 Gruppen ist die eta-Phase nicht vorhanden bzw. thermodynamisch nicht stabil (Tab 17 und 18).

Tabelle 13: Gruppe 0

| Variante | 420420 | 1 | 27 |
|---|---|---|---|
| C | 0,021 | 0,021 | 0,021 |
| S | 0,0005 | 0,0005 | 0,0005 |
| N | 0,008 | 0,008 | 0,008 |
| Cr | 17,75 | 18 | 18 |
| Ni | 45,96 | 46,018 | 46,518 |
| Mn | 0,018 | 0,018 | 0,018 |
| Si | 0,065 | 0,065 | 0,065 |
| Mo | 2,94 | 3 | 3 |

(fortgesetzt)

| Variante | 420420 | 1 | 27 |
|---|---|---|---|
| Ti | 0,31 | 0,3 | 0,3 |
| Nb | 5,41 | 5,4 | 4,9 |
| Cu | 0,01 | 0,01 | 0,01 |
| Fe | 0,67 | 0,43 | 0,43 |
| P | 0,011 | 0,011 | 0,011 |
| Al | 2,16 | 2,2 | 2,2 |
| Mg | 0,0008 | 0,0008 | 0,0008 |
| Ca | 0,0004 | 0,004 | 0,004 |
| V | 0,002 | 0,002 | 0,002 |
| Zr | 0,002 | 0,002 | 0,002 |
| W | 0,02 | 0,02 | 0,02 |
| Co | 24,63 | 24,5 | 24,5 |
| B | 0,004 | 0,004 | 0,004 |
| O | 0,002 | 0,002 | 0,002 |

Tabelle 14a: Gruppe 1

| Variante | 5 | 6 | 7 | 8 |
|---|---|---|---|---|
| C | 0,021 | 0,021 | 0,021 | 0,021 |
| S | 0,0005 | 0,0005 | 0,0005 | 0,0005 |
| N | 0,008 | 0,008 | 0,008 | 0,008 |
| Cr | 18 | 18 | 18 | 18 |
| Ni | 48,018 | 55,518 | 53,018 | 50,518 |
| Mn | 0,018 | 0,018 | 0,018 | 0,018 |
| Si | 0,065 | 0,065 | 0,065 | 0,065 |
| Mo | 3 | 3 | 3 | 3 |
| Ti | 0,3 | 0,3 | 0,3 | 0,3 |
| Nb | 5,4 | 5,4 | 5,4 | 5,4 |
| Cu | 0,01 | 0,01 | 0,01 | 0,01 |
| Fe | 0,43 | 0,43 | 0,43 | 0,43 |
| P | 0,011 | 0,011 | 0,011 | 0,011 |
| Al | 2,2 | 2,2 | 2,2 | 2,2 |
| Mg | 0,0008 | 0,0008 | 0,0008 | 0,0008 |
| Ca | 0,004 | 0,004 | 0,004 | 0,004 |
| V | 0,002 | 0,002 | 0,002 | 0,002 |
| Zr | 0,002 | 0,002 | 0,002 | 0,002 |
| W | 0,02 | 0,02 | 0,02 | 0,02 |
| Co | 22,5 | 15 | 17,5 | 20 |

(fortgesetzt)

| Variante | 5 | 6 | 7 | 8 |
|---|---|---|---|---|
| B | 0,004 | 0,004 | 0,004 | 0,004 |
| O | 0,002 | 0,002 | 0,002 | 0,002 |

Tabelle 14b: Gruppe 1

| Variante | 5 | 6 | 7 | 8 |
|---|---|---|---|---|
| y'sol. T-r (°C) | 1015 | 1005 | 1010 | 1013 |
| y' Vol. (%) bei 600°C | 29 | 29 | 29 | 29 |
| eta sol. T-r (°C) | 0 | 0 | 0 | 0 |
| eta max Vol. (%) | 0 | 0 | 0 | 0 |
| eta sol. T-r (°C) | 0 | 0 | 0 | 0 |
| Delta sol. T-r (°C) | 1007 | 985 | 992 | 1000 |
| Delta Vol.(%) bei 600°C | 4,6 | 4,8 | 5 | 4,8 |
| sigma sol. T-r (°C) | 763 | 705 | 720 | 747 |
| sigma Vol.(%) bei 600°C | 7,7 | 4,8 | 6,2 | 6,5 |

| Variante | 9 | 28 | 29 | 39 | 46 | 51 | 52 |
|---|---|---|---|---|---|---|---|
| C | 0,021 | 0,021 | 0,021 | 0,021 | 0,021 | 0,021 | 0,021 |
| S | 0,0005 | 0,0005 | 0,0005 | 0,0005 | 0,0005 | 0,0005 | 0,0005 |
| N | 0,008 | 0,008 | 0,008 | 0,008 | 0,008 | 0,008 | 0,008 |
| Cr | 18 | 18 | 18 | 18 | 18 | 18 | 18 |
| Ni | 50,118 | 46,218 | 46,418 | 49,618 | 49,608 | 49,238 | 48,738 |
| Mn | 0,018 | 0,018 | 0,018 | 0,018 | 0,018 | 0,018 | 0,018 |
| Si | 0,065 | 0,065 | 0,065 | 0,065 | 0,065 | 0,065 | 0,065 |
| Mo | 3 | 3 | 3 | 3 | 3 | 3,5 | 4 |
| Ti | 0,3 | 0,3 | 0,1 | 0,3 | 0,3 | 0,1 | 0,1 |
| Nb | 5,4 | 4,9 | 4,9 | 5,4 | 5,4 | 5 | 5 |
| Ta | 0 | 0 | 0 | 0,5 | 0,01 | 0,5 | 0,5 |
| Cu | 0,01 | 0,01 | 0,01 | 0,01 | 0,01 | 0,01 | 0,01 |
| Fe | 0,43 | 0,43 | 0,43 | 0,43 | 0,43 | 0,43 | 0,43 |
| P | 0,011 | 0,011 | 0,011 | 0,011 | 0,011 | 0,011 | 0,011 |
| Al | 2,6 | 2,5 | 2,5 | 2,6 | 2,6 | 2,6 | 2,6 |
| Mg | 0,0008 | 0,0008 | 0,0008 | 0,0008 | 0,0008 | 0,0008 | 0,0008 |
| Ca | 0,004 | 0,004 | 0,004 | 0,004 | 0,004 | 0,004 | 0,004 |
| V | 0,002 | 0,002 | 0,002 | 0,002 | 0,002 | 0,002 | 0,002 |
| Zr | 0,002 | 0,002 | 0,002 | 0,002 | 0,002 | 0,002 | 0,002 |
| W | 0,02 | 0,02 | 0,02 | 0,02 | 0,02 | 0,5 | 0,5 |
| Co | 20 | 24,5 | 24,5 | 20 | 20 | 20 | 20 |
| Hf | 0 | 0 | 0 | 0 | 0,5 | 0 | 0 |
| B | 0,004 | 0,004 | 0,004 | 0,004 | 0,004 | 0,004 | 0,004 |
| O | 0,002 | 0,002 | 0,002 | 0,002 | 0,002 | 0,002 | 0,002 |

Tabelle 15a: Gruppe 2

Tabelle 15b: Gruppe 2

| Variante | 9 | 28 | 29 | 39 | 46 | 51 | 52 |
|---|---|---|---|---|---|---|---|
| y'sol. T-r (°C) | 1040 | 1032 | 1015 | 1044 | 1045 | 1027 | 1026 |
| y' Vol. (%) bei 600°C | 35 | 33,4 | 32 | 35 | 35 | 34,2 | 34,4 |
| eta sol. T-r (°C) | 0 | 0 | 0 | 0 | 0 | 0 | 0 |

(fortgesetzt)

| Variante | 9 | 28 | 29 | 39 | 46 | 51 | 52 |
|---|---|---|---|---|---|---|---|
| eta max Vol. (%) | 0 | 0 | 0 | 0 | 0 | 0 | 0 |
| eta sol. T-r (°C) | 0 | 0 | 0 | 0 | 0 | 0 | 0 |
| Delta sol. T-r (°C) | 960 | 930 | 952 | 972 | 968 | 936 | 930 |
| Delta Vol.(%) bei 600°C | 2,4 | 1,6 | 1,9 | 2,7 | 2,3 | 1,9 | 1,6 |
| sigma sol. T-r (°C) | 799 | 791 | 772 | 818 | 819 | 823 | 850 |
| sigma Vol.(%) bei 600°C | 10 | 9,4 | 8,4 | 11 | 11,7 | 10 | 10,5 |

Tabelle 16a: Gruppe 3

| Variante | 38 | 40 | 41 | 53 |
|---|---|---|---|---|
| C | 0,021 | 0,021 | 0,021 | 0,021 |
| S | 0,0005 | 0,0005 | 0,0005 | 0,0005 |
| N | 0,008 | 0,008 | 0,008 | 0,008 |
| Cr | 18 | 18 | 18 | 18 |
| Ni | 51,508 | 51,018 | 50,518 | 49,218 |
| Mn | 0,018 | 0,018 | 0,018 | 0,018 |
| Si | 0,065 | 0,065 | 0,065 | 0,065 |
| Mo | 3 | 3 | 3 | 4 |
| Ti | 0,3 | 0,3 | 0,3 | 0,1 |
| Nb | 4 | 4 | 4 | 4,5 |
| Ta | 0,01 | 0,5 | 1 | 0,5 |
| Cu | 0,01 | 0,01 | 0,01 | 0,01 |
| Fe | 0,43 | 0,43 | 0,43 | 0,43 |
| P | 0,011 | 0,011 | 0,011 | 0,011 |
| Al | 2,6 | 2,6 | 2,6 | 2,6 |
| Mg | 0,0008 | 0,0008 | 0,0008 | 0,0008 |
| Ca | 0,004 | 0,004 | 0,004 | 0,004 |
| V | 0,002 | 0,002 | 0,002 | 0,002 |
| Zr | 0,002 | 0,002 | 0,002 | 0,002 |
| W | 0,02 | 0,02 | 0,02 | 0,5 |
| Co | 20 | 20 | 20 | 20 |
| Hf | 0 | 0 | 0 | 0 |
| B | 0,004 | 0,004 | 0,004 | 0,004 |
| O | 0,002 | 0,002 | 0,002 | 0,002 |

Tabelle 16b: Gruppe 3

| Variante | 38 | 40 | 41 | 53 |
|---|---|---|---|---|
| y'sol. T-r (°C) | 1022 | 1030 | 1037 | 1020 |

(fortgesetzt)

| Variante | 38 | 40 | 41 | 53 |
|---|---|---|---|---|
| y'Vol. (%) bei 600°C | 33 | 33,7 | 34,6 | 34,4 |
| eta sol. T-r (°C) | 0 | 0 | 0 | 0 |
| eta max Vol: (%) | 0 | 0 | 0 | 0 |
| eta sol. T-r (°C) | 0 | 0 | 0 | 0 |
| Delta sol. T-r (°C) | 0 | 0 | 0 | 0 |
| Delta Vol.(%) bei 600°C | 0 | 0 | 0 | 0 |
| sigma sol. T-r (°C) | 719 | 744 | 762 | 829 |
| sigma Vol.(%) bei 600°C | 5,3 | 6,5 | 7,4 | 8,8 |

Tabelle 17a: Gruppe 4

| Variante | 43 | 44 | 45 | 47 | 48 | 50 | 57 |
|---|---|---|---|---|---|---|---|
| C | 0,021 | 0,021 | 0,021 | 0,021 | 0,021 | 0,021 | 0,018 |
| S | 0,0005 | 0,0005 | 0,0005 | 0,0005 | 0,0005 | 0,0005 | 0,0005 |
| N | 0,008 | 0,008 | 0,008 | 0,008 | 0,008 | 0,008 | 0,008 |
| Cr | 18 | 18 | 18 | 18 | 18 | 18 | 18 |
| Ni | 49,628 | 49,128 | 48,128 | 49,108 | 48,108 | 49,038 | 49,518 |
| Mn | 0,018 | 0,018 | 0,018 | 0,018 | 0,018 | 0,018 | 0,018 |
| Si | 0,065 | 0,065 | 0,065 | 0,065 | 0,065 | 0,065 | 0,065 |
| Mo | 3 | 3 | 3 | 3 | 3 | 3,5 | 3 |
| Ti | 0,3 | 0,3 | 0,3 | 0,3 | 0,3 | 0,3 | 0,1 |
| Nb | 5,4 | 5,4 | 5,4 | 5,4 | 5,4 | 5 | 5 |
| Ta | 0,01 | 0,01 | 0,01 | 0,01 | 0,01 | 0,5 | 1 |
| Cu | 0,01 | 0,01 | 0,01 | 0,01 | 0,01 | 0,01 | 0,01 |
| Fe | 0,43 | 0,43 | 0,43 | 0,43 | 0,43 | 0,43 | 0,43 |
| P | 0,011 | 0,011 | 0,011 | 0,011 | 0,011 | 0,011 | 0,011 |
| Al | 2,6 | 2,6 | 2,6 | 2,6 | 2,6 | 2,6 | 2,8 |
| Mg | 0,0008 | 0,0008 | 0,0008 | 0,0008 | 0,0008 | 0,0008 | 0,0008 |
| Ca | 0,004 | 0,004 | 0,004 | 0,004 | 0,004 | 0,004 | 0,004 |
| V | 0,002 | 0,002 | 0,002 | 0,002 | 0,002 | 0,002 | 0,002 |
| Zr | 0,002 | 0,002 | 0,002 | 0,002 | 0,002 | 0,002 | 0,002 |
| W | 0,5 | 1 | 2 | 0,02 | 0,02 | 0,5 | 0,02 |
| Co | 20 | 20 | 20 | 20 | 20 | 20 | 20 |
| Hf | 0 | 0 | 0 | 1 | 2 | 0 | 0 |
| B | 0,004 | 0,004 | 0,004 | 0,004 | 0,004 | 0,004 | 0,004 |
| O | 0,002 | 0,002 | 0,002 | 0,002 | 0,002 | 0,002 | 0,002 |

Tabelle 17b: Gruppe 4

| Variante | 43 | 44 | 45 | 47 | 48 | 50 | 57 |
|---|---|---|---|---|---|---|---|
| y'sol. T-r (°C) | 1038 | 1039 | 1039 | 1048 | 1060 | 1040 | 1046 |
| y' Vol. (%) bei 600°C | 35,1 | 35,3 | 35,8 | 36 | 36 | 36 | 37,5 |
| eta sol. T-r (°C) | 0 | 0 | 0 | 0 | 0 | 0 | 0 |
| eta max Vol. (%) | 0 | 0 | 0 | 0 | 0 | 0 | 0 |
| eta sol. T-r (°C) | 0 | 0 | 0 | 0 | 0 | 0 | 0 |
| Delta sol. T-r (°C) | 958 | 956 | 950 | 968 | 964 | 916 | 888 |
| Delta Vol.(%) bei 600°C | 2,3 | 2,6 | 2,5 | 2,3 | 2,3 | 1,6 | 0,75 |
| sigma sol. T-r (°C) | 816 | 826 | 852 | 838 | 875 | 840 | 824 |
| sigma Vol.(%) bei 600°C | 10,6 | 11,7 | 13 | 12,5 | 15 | 10,8 | 12 |

Tabelle 18a: Gruppe 5

| Variante | 42 | 55 | 56 |
|---|---|---|---|
| C | 0,021 | 0,018 | 0,018 |
| S | 0,0005 | 0,0005 | 0,0005 |
| N | 0,008 | 0,008 | 0,008 |
| Cr | 18 | 18 | 18 |
| Ni | 49,518 | 49,318 | 49,218 |
| Mn | 0,018 | 0,018 | 0,018 |
| Si | 0,065 | 0,065 | 0,065 |
| Mo | 3 | 3 | 3 |
| Ti | 0,3 | 0,1 | 0,1 |
| Nb | 4 | 5 | 5 |
| Ta | 2 | 1 | 1 |
| Cu | 0,01 | 0,01 | 0,01 |
| Fe | 0,43 | 0,43 | 0,43 |
| P | 0,011 | 0,011 | 0,011 |
| Al | 2,6 | 3 | 3,1 |
| Mg | 0,0008 | 0,0008 | 0,0008 |
| Ca | 0,004 | 0,004 | 0,004 |
| V | 0,002 | 0,002 | 0,002 |
| Zr | 0,002 | 0,002 | 0,002 |
| W | 0,02 | 0,02 | 0,02 |
| Co | 20 | 20 | 20 |
| Hf | 0 | 0 | 0 |
| B | 0,004 | 0,004 | 0,004 |
| O | 0,002 | 0,002 | 0,002 |

Tabelle 18b: Gruppe 5

| Variante | 42 | 55 | 56 |
|---|---|---|---|
| y'sol. T-r (°C) | 1045 | 1058 | 1064 |
| y' Vol. (%) bei 600°C | 36,5 | 40,2 | 41 |
| eta sol. T-r (°C) | 0 | 0 | 0 |
| eta max Vol. (%) | 0 | 0 | 0 |
| eta sol. T-r (°C) | 0 | 0 | 0 |
| Delta sol. T-r (°C) | 0 | 0 | 0 |
| Delta Vol.(%) bei 600°C | 0 | 0 | 0 |
| sigma sol. T-r (°C) | 798 | 846 | 860 |
| sigma Vol.(%) bei 600°C | 10 | 13,4 | 13,7 |

Die Pulverlegierung weist im Vergleich mit VDM Alloy 780 Pulver eine verbesserte Prozessierbarkeit und Gefügestabilität auf, wenn nachstehende Forderungen und Kriterien erfüllt sind:

|  |  |
|---|---|
| Al | 1,8 - 2,4 Gew.-% |
| Co | 15 - 23 Gew.-% |

Die Pulverlegierung ist durch eine optimierte Zusammensetzung VDM Alloy 780 HT Pulver für die Anwendung bei höheren Temperaturen im Vergleich zu VDM Alloy 780 Standard Pulver geeignet. Diese Legierung weist höhere $\gamma'$ Volumen-Anteile, allerdings begrenzt auf 35%, auf. Geringe Anteile von Delta-Phase sind im Temperaturbereich zwischen 800° und 900°C vorhanden. Die Legierung weist eine besonders gute Kombination zwischen Prozessierbarkeit und Lastwechselfestigkeit bei höheren Temperaturen auf. Folgende Forderungen und Kriterien sollen erfüllt sein.

|  |  |
|---|---|
| Al | 2,3 - 2,8 Gew.-% |
| Co | 19 - 25 Gew.-% |
| Nb | 4,5 - 5,5 Gew.-% |
| Mo | 3,0 - 5,0 Gew.-% |

Die Pulverlegierung ist durch eine optimierte Zusammensetzung VDM Alloy 780 HT Pulver für die Anwendung bei höheren Temperaturen im Vergleich zu VDM Alloy 780 Standard Pulver geeignet. Diese Legierung weist höhere $\gamma'$ Volumen-Anteile, allerdings begrenzt auf 35%, auf. Geringe Anteile von Delta-Phase sind im Temperaturbereich zwischen 800° und 900°C vorhanden. Diese Legierung weist ebenfalls eine besonders gute Kombination zwischen Prozessierbarkeit und_ Lastwechselfestigkeit bei höheren Temperaturen auf. Folgende Forderungen und Kriterien sollen erfüllt sein.

|  |  |
|---|---|
| Al | 2,4 - 3,0 Gew.-% |
| Co | 18 - 22 Gew.-% |
| Nb | 3,5 - 5,0 Gew.-% |

Die Pulverlegierung ist durch eine optimierte Zusammensetzung VDM Alloy 780 HT Pulver für die Anwendung bei höheren Temperaturen im Vergleich zu VDM Alloy 780 Standard Pulver geeignet. Diese Legierung weist höhere $\gamma'$ Volumen-Anteile, allerdings begrenzt auf 35%, auf. Geringe Anteile von Delta-Phase sind im Temperaturbereich zwischen 800° und 900°C vorhanden. Auch diese Legierung weist eine besonders gute Kombination zwischen Prozessierbarkeit und Lastwechselfestigkeit bei höheren Temperaturen auf. Folgende Forderungen und Kriterien sollen erfüllt sein.

|  |  |
|---|---|
| Al | 2,4 - 3,0 Gew.-% |
| Co | 18 - 22 Gew.-% |
| Nb | 4,5 - 6,0 Gew.-% |

Die Pulverlegierung ist durch eine optimierte Zusammensetzung VDM Alloy 780 HT Pulver für die Anwendung bei höheren Temperaturen im Vergleich zu VDM Alloy 780 Standard Pulver geeignet. Diese Legierung weist höhere γ' Volumen-Anteile, allerdings begrenzt auf 35%, auf. Geringe Anteile von Delta-Phase sind im Temperaturbereich zwischen 800° und 900°C vorhanden. Die Legierung weist eine besonders gute Kombination zwischen Prozessierbarkeit und Lastwechselfestigkeit bei höheren Temperaturen auf. Folgende Forderungen und Kriterien sollen erfüllt sein.

| | |
|---|---|
| Al | 2,4 - 3,3 Gew.-% |
| Co | 18 - 22 Gew.-% |
| Nb | 3,8 - 6,0 Gew.-% |
| Ta | 0,5 - 2,5 Gew.-% |

Die Pulverlegierung ist durch eine optimierte Zusammensetzung VDM Alloy 780 HT Pulver für die Anwendung bei höheren Temperaturen im Vergleich zu VDM Alloy 780 Standard Pulver geeignet. Diese Legierung weist höhere γ' Volumen-Anteile auf. Die Legierung weist eine besonders gute Kombination zwischen Prozessierbarkeit und hoher mechanischer Festigkeit bei höheren Temperaturen auf. Folgende Forderungen und Kriterien sollen erfüllt sein.

| | |
|---|---|
| Al | 2,4 - 4 Gew.-% |
| Co | 12 - 35 Gew.-% |
| Nb | 3,8 - 6,0 Gew.-% |
| Ti | 0 - 1 Gew.-% |

Die Pulverlegierung ist durch eine optimierte Zusammensetzung VDM Alloy 780 HT Pulver für die Anwendung bei höheren Temperaturen im Vergleich zu VDM Alloy 780 Standard Pulver geeignet. Diese Legierung weist höhere γ' Volumen-Anteile auf. Die Legierung weist eine besonders gute Kombination zwischen Prozessierbarkeit und hoher mechanischer Festigkeit bei höheren Temperaturen auf. Folgende Forderungen und Kriterien sollen erfüllt sein.

| | |
|---|---|
| Al | 2,4 - 3,2 Gew.-% |
| Co | 12 - 35 Gew.-% |
| Nb | 3,8 - 6,0 Gew.-% |
| Ti | 0,5 - 3,0 Gew.-% |

Die beschriebenen Pulverlegierungen Alloy 780 HT erzielen ein zur bisherigen Standardreferenzanalyse Alloy 780 ein gleiches oder deutlich höheres Festigkeitsniveau, was an prüftemperaturabhängigen Werten der Streckgrenze Rp0.2 festgestellt wird. Insbesondere verschiebt sich bei Legierungen, die eine höhere gamma'-solvus Temperatur aufweisen (z.B. Legierungen mit deutlich höheren Al-Gehalten als 2,2 %) der starke Abfall der Streckgrenze Rp0.2 zu höheren Prüftemperaturen. Dies ist insbesondere für eine mögliche höhere Anwendungstemperatur eines Bauteils interessant.

Innerhalb einer definierten chemischen Zusammensetzung haben mehrere Parameter einen Einfluss auf das Niveau der von der Prüftemperatur abhängigen mechanischen Festigkeit:

- Die Glühtemperatur und die Glühdauer der Ausscheidungswärmebehandlung und auch bereits die Abkühlgeschwindigkeit nach der Lösungswärmebehandlung beeinflusst sowohl den Anteil als auch die Partikelgröße der gamma'-Phase. Diese Größen in Kombination wiederum beeinflussen das Niveau der von der Prüftemperatur abhängigen Festigkeit.
- Die Korngröße des Gefüges beeinflusst das Niveau der von der Prüftemperatur abhängigen Festigkeit. Das Gefüge und insbesondere die Korngröße werden u.a. durch die Glühtemperatur und Glühdauer der Lösungswärmebehandlung beeinflusst.

**Patentansprüche**

1. Verfahren zur Herstellung eines Pulvers aus einer Nickel-Kobalt-Legierung, wobei die Gehalte (in Gew.-%) wie folgt definiert sind:

| | |
|---|---|
| C | > 0 - max. 0,1 % |

(fortgesetzt)

| | |
|---|---|
| S | max. 0,015 % |
| Cr | 13 - 23 % |
| Ni | Rest (> 30 %) |
| Mn | max. 1,0 % |
| Si | max. 1,0 % |
| Mo | 1 - 6 % |
| Ti | > 0 - 3,0 % |
| Nb+Ta | 3 - 8 % |
| Cu | max. 0,5 % |
| Fe | > 0 - max. 10 % |
| Al | > 0 - < 4,0 % |
| V | bis 4 % |
| Zr | > 0 - max. 0,1 % |
| Co | > 12 - < 35 % |
| W | bis 4 % |
| Hf | bis 3,0 % |
| O | max. 0,1% |
| N | > 0 - max. 0,1 % |
| Mg | > 0 - max. 0,01 % |
| B | > 0 - max. 0,02 % |
| P | > 0 - max. 0,03 % |
| Ar | 0 - max. 0,08 % |
| Se | max. 0,0005 % |
| Bi | max. 0,00005 % |
| Pb | max. 0,002 % |

indem

- eine Legierung in einem VIM-Ofen erschmolzen wird,
- die flüssige Schmelze für 5 min bis 2 Stunden, insbesondere 20 min bis 2 h, zur Homogenisierung gehalten wird,
- eine geschlossene Verdüsungsanlage mit einem zugeführten Gas auf einen Taupunkt von -10°C bis -120°C eingestellt wird,
- die Schmelze durch eine Düse in einen Gasstrom mit einer Gasflussrate von 2 m$^3$/min bis 150 m$^3$/min geblasen wird
- die erstarrten Pulverpartikel in einem gasdicht verschlossenen Behälter gesammelt werden, wobei
- die Partikel eine Partikelgröße von 5 $\mu$m bis 250 $\mu$m haben,
- die Partikel des Pulvers sphärisch sind,
- das Pulver Gaseinschlüsse von 0,0 bis 4 % Porenfläche (Poren > 1$\mu$m) im Verhältnis zur Gesamtfläche ausgewerteter Objekte aufweist,
- das Pulver eine Schüttdichte von 2 bis zur Dichte der Legierung von ca. 8 g/cm$^3$ hat,
- das Pulver unter einer Schutzgasatmosphäre mit Argon luftdicht verpackt wird.

2. Verfahren nach Anspruch 1 mit Gehalten (in Gew.-%) die wie folgt definiert sind:

| | |
|---|---|
| Fe | > 0 - max. 5 % |
| Co | > 15 - < 27 % |
| Cr | 16 - 22 % |
| Mo | 2 - 6 % |
| W | bis 4 % |
| Hf | bis 2,5 % |
| Nb + Ta | 3,5 - 7,5 % |

(fortgesetzt)

| | |
|---|---|
| Al | 1,6 - 3,5 % |
| Mn | max. 0,6 % |
| Ti | 0,0005 - < 2 %, insbesondere < 1,0 % |
| Si | 0,0005-0,4 % |
| C | > 0 - max. 0,05 % |
| P | > 0 - max. 0,025 % |
| N | > 0 - max. 0,1 % |
| Mg | > 0 - max. 0,008 % |
| B | > 0 - max. 0,02 % |
| Zr | > 0 - max. 0,1 % |
| Ar | max. 0,05 % |
| Ni | Rest (> 30 %) |

3. Verfahren nach Anspruch 1 oder 2, bei welcher nachfolgend aufgeführte Forderungen und Kriterien erfüllt werden sollen:

$$Mo + W \geq 2,5$$

$$0,0005 < B + Zr + P < 0,15$$

$$S + Se + Bi + Pb < 0,1$$

$$900°C < \gamma'\text{-Solvus} < 1130°C$$

20% < γ'-Volumenanteil < 45% im ausscheidungsgeglühten Zustand.

4. Verfahren nach einem der Ansprüche 1 bis 3 mit Gehalten ( in Gew.-%): Al 1,8-2,4; Co 15-23.

5. Verfahren nach einem der Ansprüche 1 bis 4 mit Gehalten (in Gew.-%): Al 2,3-2,8; Co 19-25, Nb 4,5-5,5; Mo 3;0-5;0.

6. Verfahren nach einem der Ansprüche 1 bis 5 mit Gehalten (in Gew.-%): Al 2,4-3,0; Co 18-22; Nb 3,5-5,0.

7. Verfahren nach einem der Ansprüche 1 bis 6 mit Gehalten (in Gew.-%): Al 2,4-3,0; Co 18-22, Nb 4,5-6,0.

8. Verfahren nach einem der Ansprüche 1 bis 7 mit Gehalten (in Gew.-%): Al 2,4-3,3; Co 18-22, Nb 3,8-6,0; Ta 0,5-2,5.

9. Verfahren nach einem der Ansprüche 1 bis 8, wobei

- die Legierung zunächst als Vorlegierungsblock mit definierter chemischer Analyse durch Erschmelzen im VIM-Ofen, VIM/ESU, VIM/ESU/VAR, VIM/VAR VOD oder VLF mit bei Bedarf folgender Umschmelzung im ESU und/oder VAR erzeugt wird,
- der Vorlegierungs-Block durch Sägen in kleine Stücke getrennt wird,
- die Stücke der Vorlegierung in einem VIM-Ofen erschmolzen werden.

10. Verfahren nach einem der Ansprüche 1 bis 9, **dadurch gekennzeichnet, dass** das zugeführte Gas ein Inertgas ist

11. Verfahren nach einem der Ansprüche1 bis 10, **dadurch gekennzeichnet, dass** das zugeführte Gas Argon ist.

12. Verfahren nach einem der Ansprüche 1 bis 11, **dadurch gekennzeichnet, dass** der Gasstrom, in dem verdüst wird, Argon ist.

**13.** Verfahren nach einem der Ansprüche 1 bis 12, **dadurch gekennzeichnet, dass** der Gasstrom, in dem verdüst wird, Stickstoff ist.

**14.** Verfahren nach einem der Ansprüche 1 bis 13, **dadurch gekennzeichnet, dass** der Gasstrom, in dem verdüst wird, ein Gemisch aus Stickstoff und Argon.

**15.** Verfahren nach einem der Ansprüche 1 bis 14, **dadurch gekennzeichnet, dass** die Verdüsung mit 0,5 bis 80 kg/min erfolgt.

**16.** Verfahren nach einem der Ansprüche 1 bis 15, mit an hieraus gedruckten Bauteilen durchzuführenden Spannungsarmglühungen zwischen 300°C und 600°C mit Glühdauern von 0,5h bis 10h und Lösungsglühtemperaturen zwischen 850°C und 1250°C mit Glühdauern zwischen 30 Minuten und 30 Stunden und Ausscheidungswärmebehandlungen einstufig oder zweistufig mit Glühtemperaturen im Bereich zwischen 600°C und 900°C und Glühdauer im Bereich von 1 bis 30 Stunden, um definierte Korngrößen von 0,5μm - 2000μm, Anteile (>25%) und Partikelgrößen (10 - 300nm) der gamma'-Phase und hohe mechanische Festigkeitseigenschaften (gleich oder höher im Vergleich zur Legierung 1) einzustellen.

**17.** Verwendung eines nach dem Verfahren hergestellten Pulvers nach einem der Ansprüche 1 bis 16, hergestellt für die additive Fertigung oder HIPen von Komponenten oder Bauteilen.

**18.** Verwendung eines nach dem Verfahren hergestellten Pulvers nach einem der Ansprüche 1 bis 16, hergestellt für die additive Fertigung oder HIPen von Schichten auf Komponenten oder Bauteilen.

**19.** Verwendung eines nach dem Verfahren hergestellten Pulvers nach einem der Ansprüche 1 bis 16, hergestellt für die Fertigung von Komponente von Turbinen.

**20.** Verwendung eines nach dem Verfahren hergestellten Pulvers nach einem der Ansprüche 1 bis 16 hergestellt für die Fertigung von Komponente für die Öl und Gas Industrie.

**21.** Verwendung eines nach dem Verfahren hergestellten Pulvers nach einem der Ansprüche 1 bis 16, hergestellt für die Fertigung von Ventilen oder Flanschen.

**22.** Verwendung eines nach dem Verfahren hergestellten Pulvers nach einem der Ansprüche 1 bis 16, hergestellt für die Fertigung von Komponente für die Automobilindustrie.

**23.** Verwendung eines nach dem Verfahren hergestellten Pulvers nach einem der Ansprüche 1 bis 16, hergestellt für die Fertigung von Komponente für die chemische Prozessindustrie und Ofenbau.

**Claims**

**1.** Method for producing a nickel-cobalt alloy powder, the contents (in % by weight) being defined as follows:

| | |
|---|---|
| C | > 0 - max. 0.1% |
| S | max. 0.015% |
| Cr | 13 - 23% |
| Ni | remainder (> 30%) |
| Mn | max. 1.0% |
| Si | max. 1.0% |
| Mo | 1 - 6% |
| Ti | > 0 - 3.0% |
| Nb+Ta | 3 - 8% |
| Cu | max. 0.5% |
| Fe | > 0 - max. 10% |
| Al | > 0 - < 4.0% |
| V | up to 4% |

(continued)

| | |
|---|---|
| Zr | > 0 - max. 0.1% |
| Co | > 12 - < 35% |
| W | up to 4% |
| Hf | up to 3.0% |
| O | max. 0.1% |
| N | > 0 - max. 0.1% |
| Mg | > 0 - max. 0.01% |
| B | > 0 - max.0.02% |
| P | > 0 - max.0.03% |
| Ar | 0 - max.0.08% |
| Se | max. 0.0005% |
| Bi | max. 0.00005% |
| Pb | max. 0.002%, |

by

- melting an alloy in a VIM furnace,
- retaining the liquid molten material for 5 min to 2 hours, particularly 20 min to 2 hours, for homogenisation
- setting a closed atomising plant with a supplied gas to a dewpoint from -10 °C to -120 °C
- blowing the molten material through a nozzle into a gas stream with a gas flow rate from 2 $m^3$/min to 150 $m^3$/min
- collecting the solidified powder particles in a sealed, gas-impermeable container, wherein
- the particles have a particle size from 5 $\mu$m to 250 $\mu$m
- the particles of the powder are spherical
- the powder has gas inclusions constituting from 0.0 to 4% of the pore area (pores > 1 pm) in proportion to the total area of evaluated objects,
- the powder has a bulk density of 2 up to the density of the alloy of about 8 g/cm$^3$,
- the powder is packed in airtight manner under a shielding gas atmosphere with argon.

2. Method according to Claim 1 with contents (in % by weight) which are defined as follows:

| | |
|---|---|
| Fe | > 0 - max. 5% |
| Co | > 15 - < 27% |
| Cr | 16 - 22% |
| Mo | 2 - 6% |
| W | up to 4% |
| Hf | up to 2.5% |
| Nb+Ta | 3.5 - 7.5% |
| Al | 1.6 - 3.5% |
| Mn | max. 0.6% |
| Ti | 0.0005 - < 2%, especially < 1.0% |
| Si | 0.0005 - 0.4% |
| C | > 0 - max.0.05% |
| P | > 0 - max.0.025% |
| N | > 0 - max. 0.1% |
| Mg | > 0 - max. 0.008% |
| B | > 0 - max.0.02% |
| Zr | > 0 - max. 0.1% |
| Ar | max. 0.05% |
| Ni | remainder (> 30%) |

3. Method according to Claim 1 or 2, in which the following requirements and criteria are to be met:

$$Mo+W \geq 2.5$$

$$0.0005 < B+Zr+P < 0.15$$

$$S+Se+Bi+Pb < 0.1$$

$$900\ °C < y'\ solvus < 1130\ °C$$

20% < y' volume fraction < 45% in the precipitation annealed condition.

4.  Method according to any one of Claims 1 to 3 with contents (in % by weight): Al 1.8 - 2.4; Co 15 - 23.

5.  Method according to any one of Claims 1 to 4 with contents (in % by weight): Al 2.3 - 2.8; Co 19 - 25, Nb 4.5 - 5.5; Mo 3.0 - 5.0.

6.  Method according to one of Claims 1 to 5 with contents (in % by weight): Al 2.4 - 3.0; Co 18 - 22; Nb 3.5 - 5.0.

7.  Method according to one of Claims 1 to 6 with contents (in % by weight): Al 2.4 - 3.0; Co 18 - 22, Nb 4.5 - 6.0.

8.  Method according to one of Claims 1 to 7 with contents (in % by weight): Al 2.4 - 3.3; Co 18 - 22, Nb 3.8 - 6.0; Ta 0.5 - 2.5.

9.  Method according to any one of Claims 1 to 8, wherein

    - the alloy is initially produced as a master alloy block with defined chemical analysis by melting in the VIM furnace, VIM/ESR, VIM/ESR/VAR, VIM/VAR VOD or VLF with subsequent remelting in the ESR and/or VAR if necessary,
    - the master alloy block is cut into small pieces by sawing,
    - the pieces of master alloy are melted in a VIM furnace.

10. Method according to any one of Claims 1 to 9, **characterized in that** the gas supplied is an inert gas.

11. Method according to any one of Claims 1 to 10, **characterized in that** the gas supplied is argon.

12. Method according to any one of Claims 1 to 11, **characterized in that** the gas stream in which atomisation is carried out is argon.

13. Method according to any one of Claims 1 to 12, **characterized in that** the gas stream in which atomisation is carried out is nitrogen.

14. Method according to any one of Claims 1 to 13, **characterized in that** the gas stream in which atomisation is carried out is a mixture of nitrogen and argon.

15. Method according to any one of Claims 1 to 14, **characterized in that** the atomisation takes place at a rate of 0.5 to 80 kg/min.

16. Method according to any one of Claims 1 to 15, with stress-relief heat treatments to be carried out on components compressed therefrom between 300 °C and 600 °C with annealing times from 0.5 h to 10 h and solution annealing temperatures between 850 °C and 1250 °C with annealing times between 30 minutes and 30 hours and precipitation heat treatments in one or two stages with annealing temperatures in the range between 600 °C and 900 °C and annealing times in the range from 1 to 30 hours, in order to adjust defined grain sizes from 0.5 um - 2000 $\mu$m, proportions (> 25%) and particle sizes (10 - 300 nm) of the gamma' phase and high mechanical strength properties (equal to or greater than alloy 1).

17. Use of a powder manufactured according to the method according to any one of Claims 1 to 16, produced for additive manufacturing or hot isostatic pressing (HIP) of components or parts.

18. Use of a powder manufactured according to the method according to any one of Claims 1 to 16, produced for additive manufacturing or hot isostatic pressing (HIP) of layers on components or parts.

19. Use of a powder manufactured according to the method according to any one of Claims 1 to 16, produced for the manufacturing of components of turbines.

20. Use of a powder manufactured according to the method, according to any one of Claims 1 to 16, produced for the manufacturing of components for the oil and gas industry.

21. Use of a powder manufactured according to the method according to any one of Claims 1 to 16, produced for the manufacturing of valves or flanges.

22. Use of a powder manufactured according to the method according to any one of Claims 1 to 16, produced for the manufacturing of components for the automotive industry.

23. Use of a powder manufactured according to the method according to any one of Claims 1 to 16, produced for the manufacturing of components for the chemical process industry and furnace construction.

**Revendications**

1. Procédé de fabrication d'une poudre à base d'un alliage nickel-cobalt, sachant que les teneurs (en %/poids), sont définies comme suit :

| | |
|---|---|
| C | > 0 - max. 0,1 % |
| S | max. 0,015 % |
| Cr | 13 - 23 % |
| Ni | Rest (> 30 %) |
| Mn | max. 1,0 % |
| Si | max. 1,0 % |
| Mo | 1 - 6 % |
| Ti | > 0 - 3,0 % |
| Nb+Ta | 3 - 8 % |
| Cu | max. 0,5 % |
| Fe | > 0 - max. 10 % |
| Al | > 0 - < 4,0 % |
| V | jusqu'à 4 % |
| Zr | > 0 - max. 0,1 % |
| Co | > 12 - < 35 % |
| W | jusqu'à 4 % |
| Hf | jusqu'à 3,0 % |
| O | max. 0,1 % |
| N | > 0 - max. 0,1 % |
| Mg | > 0 - max. 0,01 % |
| B | > 0 - max. 0,02 % |
| P | > 0 - max. 0,03 % |
| Ar | 0 - max. 0,08 % |
| Se | max. 0,0005 % |
| Bi | max. 0,00005 % |
| Pb | max. 0,002 % |

dans lequel

- un alliage est fondu dans un four à fusion sous vide,
- la matière en fusion liquide est maintenue pendant 5 min. à 2 heures, en particulier 20 min. à 2 h, pour homogénéisation,
- une installation d'atomisation fermée avec un gaz introduit est réglée à un point de rosée de - 10° C à - 120° C,
- la matière en fusion est soufflée à travers une buse dans un flux de gaz à un débit de flux gazeux de 2 m$^3$/min à 150 m$^3$/min,
- les particules de poudre solidifiées sont collectées dans un conteneur fermé étanche au gaz, sachant que
- les particules ont une taille particulaire de 5 $\mu$m à 250 $\mu$m,
- les particules de poudre sont sphériques,
- la poudre comporte des inclusions gazeuses de 0,0 à 4 % de la surface poreuse (pores > 1 $\mu$m) par rapport à la surface totale des objets évalués,
- la poudre possède une densité en vrac de 2 jusqu'à la densité de l'alliage d'env. 8 g/cm$^3$,
- la poudre est emballée de façon étanche à l'air sous une atmosphère de gaz protecteur avec de l'argon.

2. Procédé selon la revendication 1 avec des teneurs (en %/poids) définies comme suit :

| | |
|---|---|
| Fe | > 0 - max. 5 % |
| Co | > 15 - < 27 % |
| Cr | 16 - 22 % |
| Mo | 2 - 6 % |
| W | jusqu'à 4 % |
| Hf | jusqu'à 2,5 % |
| Nb + Ta | 3,5 - 7,5 % |
| Al | 1,6 - 3,5 % |
| Mn | max. 0,6 % |
| Ti | 0,0005 - < 2 %, en particulier < 1,0 % |
| Si | 0,0005 - 0,4 % |
| C | > 0 - max. 0,05 % |
| P | > 0 - max. 0,025 % |
| N | > 0 - max. 0,01 % |
| Mg | > 0 - max. 0,008 % |
| B | > 0 - max. 0,02 % |
| Zr | > 0 - max. 0,1 % |
| Ar | max. 0,05 % |
| Ni | Rest (> 30%) |

3. Procédé selon la revendication 1 ou 2, pour lequel les conditions et critères stipulés ci-après doivent être satisfaits

$$Mo + W \geq 2,5$$

$$0,0005 < B + Zr + P < 0,15$$

$$S + Se + Bi + Pb < 0,1$$

$$900° C < solvus \ \gamma' < 1130°C$$

20 % < part de volume $\gamma'$ < 45 % à l'état recuit de précipitation.

4. Procédé selon l'une quelconque des revendications 1 à 3 avec des teneurs (en %/poids) : Al 1,8-2,4, Co 15-23.

**5.** Procédé selon l'une quelconque des revendications 1 à 4 avec des teneurs (en %/poids) : Al 2,3-2,8, Co 19-25, Nb 4,5-5,5, Mo 3,0-5,0.

**6.** Procédé selon l'une quelconque des revendications 1 à 5 avec des teneurs (en %/poids) : Al 2,4-3,0, Co 18-22, Nb 3,5-5,0.

**7.** Procédé selon l'une quelconque des revendications 1 à 6 avec des teneurs (en %/poids) : Al 2,4-3,0, Co 18-22, Nb 4,5, 6,0.

**8.** Procédé selon l'une quelconque des revendications 1 à 7 avec des teneurs (en %/poids) : Al 2,4-3,3, Co 18-22, Nb 3,8-6,0, Ta 0,5-2,5.

**9.** Procédé selon l'une quelconque des revendications 1 à 8, sachant que

- l'alliage est produit d'abord sous la forme d'un bloc de préalliage avec une analyse chimique définie par fusion dans un four de fusion par induction sous vide (VIM), un four de fusion par induction sous vide/unité de refusion sous laitier électrolytique (VIM/ESU), un four de fusion par induction sous vide/de refusion sous laitier électrolytique/refusion à l'arc sous vide (VIM/ESU/VAR), un four de fusion par induction sous vide/de refusion à l'arc sous vide/décarburation sous vide à l'oxygène (VIM/VAR/VOD) ou un four-poche sous vide (VLF) avec refusion suivante si nécessaire dans une unité de refusion sous laitier électrolytique (ESU) et/ou four de refusion à l'arc sous vide (VAR),
- le bloc de préalliage est séparé en petits morceaux par sciage,
- les morceaux du préalliage sont fondus dans un four par induction sous vide (VIM).

**10.** Procédé selon l'une quelconque des revendications 1 à 9, *caractérisé en ce que* le gaz apporté est un gaz inerte.

**11.** Procédé selon l'une quelconque des revendications 1 à 10, *caractérisé en ce que* le gaz apporté est de l'argon.

**12.** Procédé selon l'une quelconque des revendications 1 à 11, *caractérisé en ce que* le flux gazeux dans lequel on atomise, est de l'argon.

**13.** Procédé selon l'une quelconque des revendications 1 à 12, *caractérisé en ce que* le flux gazeux dans lequel on atomise, est de l'azote.

**14.** Procédé selon l'une quelconque des revendications 1 à 13, *caractérisé en ce que* le flux gazeux, dans lequel on atomise, est un mélange d'azote et d'argon.

**15.** Procédé selon l'une quelconque des revendications 1 à 14, *caractérisée en ce que* l'atomisation a lieu avec 0,5 à 80 kg/min.

**16.** Procédé selon l'une quelconque des revendications 1 à 15, avec des recuits de détente sur les composants à réaliser comprimés à partir de celui-ci entre 300° C et 600° C avec une durée de recuit de 0,5 h à 10 h et des températures de recuit de mise en solution entre 850° C et 1250° C avec des durées de recuit entre 30 minutes et 30 heures et des traitements thermiques de précipitation à une phase ou deux phases avec des températures de recuit dans une plage se situant entre 600° C et 900° C et une durée de recuit dans une plage de 1 à 30 heures pour établir des granulométries définies de 0,5 $\mu$m - 2000 $\mu$m, parties (> 25 %) et tailles particulaires (10 - 300 nm) de phase gamma et des propriétés de résistance mécaniques élevées (égales ou supérieures en comparaison à l'alliage 1.

**17.** Utilisation d'une poudre fabriquée selon le procédé selon l'une quelconque des revendications 1 à 16, fabriquée pour la fabrication additive ou la compression isostatique à température élevée de composants ou d'éléments de construction.

**18.** Utilisation d'une poudre fabriquée selon le procédé selon l'une quelconque des revendications 1 à 16, fabriquée pour la fabrication additive ou la compression isostatique à température élevée de couches sur des composants ou des éléments de construction.

**19.** Utilisation d'une poudre fabriquée selon le procédé selon l'une quelconque des revendications 1 à 16, fabriquée pour la fabrication de composants de turbines.

20. Utilisation d'une poudre fabriquée selon le procédé selon l'une quelconque des revendications 1 à 16, fabriquée pour la fabrication de composants pour l'industrie du pétrole et du gaz.

21. Utilisation d'une poudre fabriquée selon le procédé selon l'une quelconque des revendications 1 à 16, fabriquée pour la fabrication de soupapes ou de brides.

22. Utilisation d'une poudre fabriquée selon le procédé selon l'une quelconque des revendications 1 à 16, fabriquée pour la fabrication de composants pour l'industrie automobile.

23. Utilisation d'une poudre fabriquée selon le procédé selon l'une quelconque des revendications 1 à 16, fabriquée pour la fabrication de composants pour l'industrie chimique de traitements et la construction de fours.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015016729 A1
- EP 2949768 A1
- CA 2704874 A1
- CA 1253363
- US 20080166258 A1
- CA 2874304 C
- GB 813948 A
- DE 2108978 A
- DE 2108973 A
- WO 2014124626 A1
- EP 2314725 A1

**In der Beschreibung aufgeführte Nicht-Patentliteratur**

- **R. A. RICKS ; A. J. PORTER ; R. C. ECOB.** *Acta Metall.,* 1983, vol. 31, 43-53
- **L. A. AI-JUBOORI ; T. NIENDORF ; F. BRENNE.** On the Tensile Properties of Inconel 718 Fabricated by EBM for As-Built and Heat-Treated Components. *Metallurgical and Materials Transactions B,* 2018, vol. 49B